(19) Europäisches Patentamt
European Patent Office
Office européen des brevets

(11) EP 1 696 587 B1

(12) EUROPEAN PATENT SPECIFICATION

(45) Date of publication and mention of the grant of the patent: **11.08.2010 Bulletin 2010/32**

(51) Int Cl.: ***H04B 10/158*** *(2006.01)* ***H04L 27/22*** *(2006.01)*

(21) Application number: **05025496.0**

(22) Date of filing: **23.11.2005**

# (54) Optical signal reception device for receiving DQPSK modulated signal

Optische Signalempfangsvorrichtung zum Empfang eines DQPSK modulierten Signals

Dispositif de réception de signaux optiques pour la réception de signaux modulées DQPSK

(84) Designated Contracting States:
**DE FR GB**

(30) Priority: **28.02.2005 JP 2005054371**
**15.07.2005 JP 2005206467**

(43) Date of publication of application:
**30.08.2006 Bulletin 2006/35**

(73) Proprietor: **FUJITSU LIMITED**
**Kawasaki-shi,**
**Kanagawa 211-8588 (JP)**

(72) Inventors:
- **Katagiri, Toru, c/o Fujitsu Limited Kawasaki-shi, Kanagawa 211-8588 (JP)**
- **Hoshida, Takeshi, c/o Fujitsu Limited Kawasaki-shi, Kanagawa 211-8588 (JP)**
- **Takahara, Tomoo, c/o Fujitsu Limited Kawasaki-shi, Kanagawa 211-8588 (JP)**
- **Nakamura, Kentaro, c/o Fujitsu Limited Kawasaki-shi, Kanagawa 211-8588 (JP)**
- **Kuwata, Naoki, c/o Fujitsu Limited Kawasaki-shi, Kanagawa 211-8588 (JP)**

(74) Representative: **HOFFMANN EITLE**
**Patent- und Rechtsanwälte**
**Arabellastrasse 4**
**81925 München (DE)**

(56) References cited:
**EP-A- 1 335 510**
**EP-A- 1 499 044**
**WO-A-03/063515**
**US-A1- 2003 058 499**
**US-A1- 2004 081 470**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### BACKGROUND OF THE INVENTION

1. Field of the Invention

The present invention relates to an optical signal reception device for receiving and demodulating optical signals modulated by a Differential Quadrature Phase Shift Keying (DQPSK) modulation scheme or a Differential Phase Shift Keying (DPSK) modulation scheme in order to achieve high speed data transmission.

2. Description of the Related Art

In digital communication systems, typically the Internet (IP: Internet Protocol), in order to meet rapidly increasing needs of digital communication, an optical communication scheme employing IM-DQPSK (Intensity Modulation Differential Quadrature Phase Shift Keying) modulation scheme is being studied to improve utilization of frequencies.

For details of IM-DQPSK, reference can be made to P. S. Cho, V. S. Grigoryan, Y. A. Godin, A. Salamon, and Y. Achiam, "Transmission of 25 Gbps RZ-DQPSK signals with 25-GHz channel spacing over 1000 km of SMF-28 fiber", IEEE Photonic Technical Letter, Vol.15, pp. 473-475, March 2003 (hereinafter, referred to as "reference 1"), and H. Kim, and R-J. Essiambre, "Transmission of 8 x 20 Gbps DQPSK signals with 25-GHz channel spacing over a 310-km SMF with 0.8-b/s/Hz spectral efficiency", IEEE Photonic Technical Letter, Vol.15, pp. 769-771, May, 2003 (hereinafter, referred to as "reference 2").

FIG. 28 is a block diagram illustrating an optical transponder (an optical sender and an optical receiver) employing the above IM-DQPSK modulation scheme.

The optical transponder illustrated in FIG. 28 includes a framer LSI 100, an optical receiver (40G OR) 101, a serializer (SER) 102, a de-multiplexer (DEMUX) 103, a DQPSK precoder 104, a DQPSK modulator (40G OS DQPSK) 105, a DQPSK optical sender (40G OS) 106, a de-serializer (DES) 107, a multiplexer (MUX) 108, and a DQPSK demodulator (40G OR DQPSK) 109.

The DQPSK modulator 105, as schematically exemplified in an expanded portion thereabove in FIG. 28, includes a DFB-LD (Distributed Feedback Laser), a phase modulation section 112, an intensity modulator 113, and a driver. The phase modulation section 112 includes phase modulators 114, 115 and a $\pi/2$ phase shifter.

The DQPSK demodulator 109, as schematically exemplified in an expanded portion therebelow in FIG. 28, includes a $\pi/4$ delay interferometer 116, a $-\pi/4$ delay interferometer 117, photo-diodes (PDs) acting as opto-electric conversion elements, and amplifiers (amp). It should be noted that the configuration of the DQPSK demodulator 109 in FIG. 28 as described above illustrates a state in which the optical transmission direction is reversed.

In FIG. 28, it is illustrated that the transponder converts data signals transmitted at a bit rate of 40 Gbps into optical signals, modulates the optical signals by the DQPSK modulation scheme, and transmits the signals.

As illustrated in FIG. 28, the optical receiver 101 receives the optical signals transmitted at a bit rate of 40 Gbps from a client (user) side, converts the optical signals into electrical signals, and outputs 16 parallel signals each at a bit rate of 2.5 Gbps (= 40 Gbps /16) to the framer LSI 100.

The framer LSI 100 transforms each of the 16 parallel signals from the optical receiver 101 into multiple frames, and performs mapping and de-mapping on each frame by means of, for example, SONET (Synchronous Optical Network), SDH (Synchronous Digital Hierarchy), or OTN (Optical Transport Network). In this figure, it is assumed that the framer LSI 100 is the one for OTN.

After the frame processing, the framer LSI 100 outputs 16 parallel signals each at 2.7 Gbps.

A serializer 102 converts the 16 parallel signals at a bit rate of 2.7 Gbps from the framer LSI 100 into a serial data signal at 43 Gbps.

The de-multiplexer (DEMUX) 103 receives the serial data signal at 43 Gbps and a clock signal (CLK) at 21.5 GHz, de-multiplexes the signals from the serializer 102 at a de-multiplexing ratio of 1 to 2, and generates two parallel signals $I_k$ and $Q_k$ each at 21.5 Gbps.

The signals $I_k$ and $Q_k$ output from the de-multiplexer (DEMUX) 103 are input to the DQPSK precoder 104. The DQPSK precoder 104 converts the signals $I_k$ and $Q_k$ into signals $\rho_k$ and $\eta_k$ , and inputs the obtained signals $\rho_k$ and $\eta_k$ to the DQPSK demodulator 105.

The DQPSK precoder 104 converts the input in-phase signals $I_k$ and orthogonal signals $Q_k$ into signals $\rho_k$ and $\eta_k$ according to the following logical relations.

$$\rho_k = Q_k\rho_{k-1}\eta_{k-1} + I_k\rho_{k-1}\overline{\eta_{k-1}} + \overline{I_k\rho_{k-1}}\eta_{k-1} + \overline{Q_k\rho_{k-1}\eta_{k-1}}$$

$$\eta_k = I_k\rho_{k-1}\eta_{k-1} + \overline{Q_k}\rho_{k-1}\overline{\eta_{k-1}} + Q_k\overline{\rho_{k-1}}\eta_{k-1} + \overline{I_k\rho_{k-1}\eta_{k-1}}$$

FIG. 29 is a circuit diagram illustrating an example of a configuration of the DQPSK precoder 104.

As illustrated in FIG. 29, the DQPSK precoder 104 may be a logic gate circuit constructed by combining logical OR circuits, logical AND circuits, and inhibit circuits or other kinds of logic circuits. In FIG. 29, "D" indicates a one-bit delay circuit.

The signals $\rho_k$ and $\eta_k$ encoded by the DQPSK precoder 104 are input to the DQPSK modulator 105. The DQPSK modulator 105 converts the signals $\rho_k$ and $\eta_k$ into DQPSK optical signals and sends the optical signals to the network side.

The DQPSK modulator 105 splits a light beam emitted from the DFB-LD 111 into two beams, outputs one of the two split light beams into the phase modulator 114, and shifts the phase of the other split light beam by $\pi/2$ and outputs the phase-shifted light beam into the phase modulator 115. The phase modulators 114 and 115 perform phase modulation on the respective input light beams according to the respective signals $\rho_k$ and $\eta_k$ from the precoder 104 at 21.5 Gbps. The output light beams from the phase modulators 114 and 115 are combined and are input to the intensity modulator 113. The intensity modulator 113 performs intensity modulation on the input optical signals according to the clock signal (clock) at 21.5 GHz, and generates and transmits IM-DQPSK optical signals at 43 Gbps.

For example, each of the phase modulators 114 and 115, and the intensity modulator 113 of the DQPSK modulator 105 may be structured by a Mach-Zehnder interferometer formed by elements having the electro-optical effect, such as $LiNbO_3$.

The DQPSK demodulator 109 receives the DQPSK optical signals from the network side, splits the optical signals into two portions, outputs one portion into the $\pi/4$ delay interferometer 116, delays the phase of the other portion by $-\pi/4$, and outputs the resulting optical signals into the $-\pi/4$ delay interferometer 117.

Each of the delay interferometers 116 and 117, for example, generates a path length difference between two path lengths each being constituted by a light guide, and generates a time delay $\tau$ corresponding to one symbol of the modulated optical signal.

The delay interferometer 116 has a $\pi/4$ phase shifter in an arm thereof for generating a $\pi/4$ phase shift, and the delay interferometer 117 has a $-\pi/4$ phase shifter in an arm thereof for generating a $-\pi/4$ phase shift.

Optical signals from arms of the delay interferometers 116 and 117 enter a pair of light receiving elements via couplers at the output stages of the delay interferometers 116 and 117, and after opto-electric conversion, an in-phase signal $I_k$ is output from the side of the delay interferometer 116, and an orthogonal signal $Q_k$ is output from the side of the delay interferometer 117.

The multiplexer (MUX) 108 multiplexes the data signals $I_k$ and $Q_k$ from the DQPSK optical demodulator 109 at 21.5 Gbps to convert the data signals $I_k$ and $Q_k$ into a serial data signal at about 43 Gbps, and outputs the serial data signal at about 43 Gbps and the clock signal (clock) at 21.5 GHz to the de-serializer (DES) 107 in parallel.

The de-serializer 107 converts the serial data signal at about 43 Gbps into 16 parallel signals each at about 2.7 Gbps, and outputs the resulting signals into the framer LSI 100.

The framer LSI 100 de-maps the SONET, SDH or OTN frames, obtains 16 parallel signals each at about 2.5 Gbps, and outputs the 16 parallel signals to the optical sender 106.

The optical sender 106 converts the 16 parallel signals into a serial optical signal, and sends the optical signal at about 43 Gbps to the client side.

In addition, it is proposed to use Mach-Zehnder type delay interferometers in DMPSK (Differential Multiple Phase Shift Keying) optical signal modulation and demodulation unit with M = 2n. For example, such an optical communication system is disclosed in International Application's Japanese Publication No. 2004-516743, in which the DMPSK modulation scheme becomes the same as the above DQPSK modulation scheme when n=2.

In addition, for example, an optical communication system is disclosed in International Application's Japanese Publication No. 2004-533163, in which a phase-modulated optical signal is intensity-modulated by a clock signal and is then transmitted; on a receiver end, the clock signal is recovered based on the intensity-modulated component.

FIG. 30 is a block diagram illustrating a principal portion of an optical signal receiver used in an optical communication system for transmitting the DQPSK optical signals.

Illustrated in FIG. 30 are a front end 121 (40G DQPSK OR), a clock regenerator (20G CDR A) 123, a clock regenerator (20G CDR B) 124, a multiplexer (MUX) 126, a de-serializer (DES) 128, and a framer LSI 129 acting as a frame processing unit.

In FIG. 30, the direction of the signal flow is opposite to the path of signal reception processing in FIG. 28, but the functions of processing are the same.

Specifically, the front end 121 corresponds to the DQPSK demodulator 109 in FIG. 28.

The multiplexer 126 multiplexes the signals output from each of the clock regenerator 123 and the clock regenerator 124 at a multiplexing ratio of 2:1.

The de-serializer (DES) 128 converts the input signals into 16 parallel signals each at 2.7 Gbps.

The framer LSI 129 receives 16 parallel signals each at 2.7 Gbps, and has the same de-mapping functions as the framer 100 in FIG. 28.

The in-phase signal component $I_k$ and the orthogonal signal component $Q_k$ are output from a port A and a port B of the front end 121. However, when DQPSK optical signals are transmitted through an optical transmission path, waveforms of the optical signals may be degraded because of influences of wavelength dispersion and the nonlinear effect of the optical fiber in use. In addition, because the two interferometers of the front end 121 are independent from each other, if the optimum operating points of the two interferometers change with age or due to temperature changes, probably, the signal $I_k$ and the signal $Q_k$ satisfying desired logical relations cannot be obtained.

## SUMMARY OF THE INVENTION

Accordingly, it is a general object of the present invention to solve one or more of the above problems of the related art.

A more specific object of the present invention is to provide an optical signal reception device that determines reception states of optical signals modulated by a DQPSK (Differential Quadrature Phase Shift Keying) modulation scheme or a DPSK (Differential Phase Shift Keying) modulation scheme, performs control so that demodulated signals to satisfy a predetermined logical relation, and allows signal reception with a normal logical relation being satisfied even when changes with age temperature changes occur.

The object of the invention is achieved by the features of claim 1 with corresponding dependent claims defining further advantageous embodiments of the invention.

According to a first aspect of the present invention, there is provided a signal reception device for receiving and demodulating an optical signal modulated by a Differential Quadrature Phase Shift Keying (DQPSK) modulation scheme, said signal reception device comprising: a front end including two delay interferometers and opto-electric conversion elements that receives the DQPSK optical signal and converts the DQPSK optical signal into an in-phase signal and an orthogonal signal; a clock regenerator that regenerates a clock signal based on the in-phase signal and the orthogonal signal; a multiplexer that multiplexes the in-phase signal and the orthogonal signal output from the clock regenerator; a reception frame processing unit that detects frame synchronization based on the signal multiplexed by the multiplexer; and a controller that, based on a detection result from the reception frame processing unit indicating an out-of-frame-synchronization state, controls logical inversion operations in the clock regenerator, controls a multiplexing timing in the multiplexer, and controls the delay interferometers in the front end.

As an embodiment, the reception frame processing unit comprises: a frame processor that performs a frame synchronization pull-in operation and a frame de-mapping operation; a frame synchronization circuit including a plurality of frame synchronization units, each of said frame synchronization units receiving a synchronization bit string in the multiplexed signal and performing frame synchronization detections corresponding to respective combinations of plural of the synchronization bit strings; and an identification section that identifies a signal reception state depending on which one of the frame synchronization units a detection signal is output from, and notifies the controller of information of the signal reception state identification.

As an embodiment, the reception frame processing unit comprises: a frame processor that performs a frame synchronization pull-in operation and a frame de-mapping operation; a frame synchronization circuit that detects a synchronization bit string in the multiplexed signal obtained by multiplexing the in-phase signal and the orthogonal signal in the multiplexer, and performs frame synchronization detections; a register that stores combinations of plural of the synchronization bit strings; and an identification section that, based on the synchronization bit strings of the multiplexed signal and the synchronization bit strings stored in the register, identifies a signal reception state, and notifies the controller of the signal reception state.

As an embodiment, the controller, based on the signal reception state identification information, determines whether a detected signal reception state is an object state, whether the detected signal reception state is a state convertible to the object state by the logical inversion control, or whether the detected signal reception state is a state convertible to the object state by the logical inversion control and the multiplexing timing control; the controller does not perform control operations when the detected signal reception state is the object state; the controller controls the clock regenerator to perform the logical inversion control when the detected signal reception state is a state convertible to the object state by the logical inversion control; and the controller controls the clock regenerator to perform the logical inversion control and controls the multiplexer to perform the multiplexing timing control when the detected signal reception state is a state convertible to the object state by the logical inversion control and the multiplexing timing control.

As an embodiment, the signal reception device further comprises an in-phase detector configured to detect whether an orthogonal phase relation holds based on exclusive OR logic between the in-phase signal and the orthogonal signal input to the multiplexer; wherein the controller shifts a phase of the delay interferometers by $\pi/2$ or $-\pi/2$ based on detection results of the in-phase detector.

According to a second aspect of the present invention, there is provided a signal reception device for receiving and demodulating an optical signal modulated by a Differential Quadrature Phase Shift Keying (DQPSK) modulation scheme, said signal reception device comprising: a front end including a polarization controller that converts the DQPSK optical signal into a line-polarized optical signal, a delay interferometer that receives the line-polarized optical signal, a polarizing beam splitter that splits optical signals output from the delay interferometer, and a differential light receiver that has two light-receiving elements for converting the optical signals split by the polarizing beam splitter into an in-phase signal and an orthogonal signal, respectively; a clock regenerator that regenerates a clock signal based on the in-phase signal and the orthogonal signal; a multiplexer that multiplexes the in-phase signal and the orthogonal signal output from the clock regenerator; a reception frame processing unit that detects frame synchronization and identifies a reception state based on the signal multiplexed by the multiplexer, and de-maps received frames; and a controller that controls logical inversion operations in the clock regenerator, controls a multiplexing timing in the multiplexer, and controls the delay interferometers in the front end based on a detection result indicating an out-of-frame-synchronization state and reception state identification information from the reception frame processing unit.

According to a third aspect of the present invention, there is provided a signal reception device for receiving and demodulating an optical signal modulated by a Differential Quadrature Phase Shift Keying (DQPSK) modulation scheme, said signal reception device comprising: a front end including two delay interferometer and opto-electric conversion elements that receive the DQPSK optical signal and convert the DQPSK optical signal into an in-phase signal and an orthogonal signal; a clock regenerator that regenerates a clock signal based on the in-phase signal and the orthogonal signal; a multiplexer that multiplexes the in-phase signal and the orthogonal signal output from the clock regenerator; a reception frame processing unit that detects frame synchronization based on the signal multiplexed by the multiplexer; a controller that controls the delay interferometers in the front end; and an in-phase detector that detects whether an orthogonal phase relation holds based on exclusive OR logic between the in-phase signal and the orthogonal signal input to the multiplexer, wherein the controller shifts a phase of the delay interferometers by $\pi/2$ or $-\pi/2$ based on detection results of the in-phase detector.

According to a fourth aspect of the present invention, there is provided a signal reception device that receives and demodulates an optical signal, which optical signal is modulated by a Differential Quadrature Phase Shift Keying (DQPSK) modulation scheme and has a modulated intensity, said signal reception device comprising: an optical coupler that splits the DQPSK modulated optical signal; a front end including two delay interferometers and an opto-electric conversion elements that receives the split DQPSK modulated optical signal and converts the split DQPSK modulated optical signal into an in-phase electric signal and an orthogonal electric signal; a clock regenerator that receives the split DQPSK modulated optical signal, and regenerates a clock signal based on an intensity- modulated component of the split DQPSK modulated optical signal; a multiplexer that multiplexes the in-phase signal and the orthogonal signal output from the front end in accordance with the clock signal from the clock regenerator; a reception frame processing unit that detects frame synchronization based on the signal multiplexed by the multiplexer; and a controller that, based on a frame-synchronization detection result from the reception frame processing unit indicating whether an object reception state is detected, controls a multiplexing timing in the multiplexer, and controls the delay interferometers in the front end.

As an embodiment, the reception frame processing unit comprises at least one of a logic inversion circuit that performs logic inversion of input data according to a logic inversion control signal from the controller, and a neighboring bit exchanging circuit that exchanges neighboring bits of the input data.

As an embodiment, according to a logic inversion control signal from the controller, the reception frame processing unit performs logic inversion control on an in-phase signal component and an orthogonal signal component output from the front end, independently.

According to a fifth aspect of the present invention, there is provided a signal reception device for receiving and demodulating an optical signal modulated by a Differential Phase Shift Keying (DPSK) modulation scheme, said signal reception device comprising: a front end including a delay interferometer and opto-electric conversion elements that receives the DPSK optical signal and converts the DPSK optical signal into an electric signal; a clock regenerator that regenerates a clock signal based on an output signal from the front end; a de-serializer that receives the clock signal from the clock regenerator and data from the front end and converts the clock signal and the data into parallel signals; a reception frame processing unit that receives the parallel data from the de-serializer and detects frame synchronization; and a controller that, based on a detection result from the reception frame processing unit indicating an out-of-frame-synchronization state, inputs a logical inversion control signal to the clock regenerator and inputs a control signal to the delay interferometer in the front end.

According to a sixth aspect of the present invention, there is provided a signal reception device for receiving and demodulating an optical signal modulated by a Differential Phase Shift Keying (DPSK) modulation scheme, said signal reception device comprising: a front end including a delay interferometer and an opto-electric conversion element that receive the DPSK optical signal and convert the DPSK optical signal into an electric signal; a clock regenerator that regenerates a clock signal based on an output signal from the front end; a de-serializer that receives the clock signal from the clock regenerator and data from the front end and converts the clock signal and the data into parallel signals; a reception frame processing unit that includes a frame synchronization circuit and a logic inversion circuit; and a controller that, based on a detection result from the reception frame processing unit indicating an out-of-frame-synchronization state, inputs a logical inversion control signal to the logical inversion circuit and inputs a control signal to the delay interferometer in the front end.

According to a seventh aspect of the present invention, there is provided a signal reception device that receives and demodulates an optical signal, which optical signal is modulated by a Differential Phase Shift Keying (DPSK) modulation scheme and has a modulated intensity, said signal reception device comprising: an optical coupler that splits the DPSK modulated optical signal; a front end including a delay interferometer and opto-electric conversion elements that receive the split DPSK modulated optical signal and convert the split DPSK modulated optical signal into an electric signal; a clock regenerator that regenerates a clock signal based on an intensity-modulated component of the split DPSK modulated optical signal; a de-serializer that converts data from the front end into parallel signals according to the clock signal from the clock regenerator; a reception frame processing unit that detects frame synchronization based on the parallel signals obtained in the de-serializer; and a controller that, based on a frame-synchronization detection result from the reception frame processing unit indicating whether an object reception state is detected, inputs a logical inversion control signal to the clock regenerator and controls the delay interferometer in the front end.

According to an eighth aspect of the present invention, there is provided a signal reception device that receives and demodulates an optical signal, which optical signal is modulated by a Differential Phase Shift Keying (DPSK) modulation scheme and has a modulated intensity, said signal reception device comprising: an optical coupler that splits the DPSK modulated optical signal; a front end including a delay interferometer and opto-electric conversion elements that receive the split DPSK modulated optical signal and convert the split DPSK modulated optical signal into an electric signal; a clock regenerator that regenerates a clock signal based on an intensity-modulated component of the split DPSK modulated optical signal; a de-serializer that converts data from the front end into parallel signals according to the clock signal from the clock regenerator; a reception frame processing unit including a logic inversion circuit that performs logic inversion of the parallel signals obtained in the de-serializer, and a frame synchronization circuit that performs frame synchronization detection; and a controller that, based on a frame-synchronization detection result from the reception frame processing unit indicating whether an object reception state is detected, inputs a logical inversion control signal to the logic inversion circuit of the reception frame processing unit and controls the delay interferometer in the front end.

According to the present invention, when the reception frame processing unit detects out-of-frame-synchronization (LOF (Loss of Frame) or OOF (Out of Frame)), the controller controls logical inversion operations in the clock regenerator, a multiplexing timing in the multiplexer, and controls the delay interferometer in the front end; thereby, it is possible to perform frame synchronization pull-in operations to attain an object signal reception state.

In addition, by providing a frame synchronization circuit in the reception frame processing unit that includes plural frame synchronization units corresponding to combinations of plural synchronization bit strings, it is possible to quickly identify the signal reception state, and it is possible to perform the frame synchronization pull-in operations quickly to attain the object signal reception state.

In addition, because an in-phase detector is provided to detect whether an orthogonal phase relation holds based on exclusive OR logic between the in-phase signal and the orthogonal signal input to the multiplexer, and the controller shifts the phase of the delay interferometers by $\pi/2$ or $-\pi/2$ based on the result of exclusive OR logic between the in-phase signal and the orthogonal signal, it is possible to perform frame synchronization pull-in operations to attain an object signal reception state by controlling logical inversion operations in the clock regenerator and the multiplexing timing in the multiplexer, and by controlling the delay interferometers in the front end.

According to the present invention, because the front end includes a polarization controller, a delay interferometer, a polarizing beam splitter, and a differential light receiver, the signal reception device includes only one delay interferometer; hence it is possible to make the signal reception device compact and simplify control of the signal reception device.

According to the present invention, because an in-phase detector is provided to detect whether an orthogonal phase relation holds based on exclusive OR logic between the in-phase signal and the orthogonal signal input to the multiplexer, and the controller shifts the phase of the delay interferometers by $\pi/2$ or $-\pi/2$ based on the result of exclusive OR logic between the in-phase signal and the orthogonal signal, it is possible to attain an object signal reception state by controlling the delay interferometers in the front end.

These and other objects, features, and advantages of the present invention will become more apparent from the following detailed description of the preferred embodiments given with reference to the accompanying drawings.

BRIEF DESCRIPTION OF THE DRAWINGS

FIG. 1A is a block diagram illustrating a principal portion of an optical signal receiver according to a first embodiment of the present invention, used in an optical communication system for transmitting DQPSK optical signals;

FIG. 1B is a table illustrating reception states of DQPSK signals in the signal reception device of the first embodiment;

FIG. 2A and FIG. 2B are diagrams and waveforms explaining the logical inversion control in the clock regenerator 3 or 4 according to the first embodiment;

FIG. 3A and FIG. 3B are diagrams and waveforms explaining the timing control in the multiplexer (MUX) 6 with a multiplexing ratio of 2:1 according to the first embodiment;

FIG. 4 is a block diagram illustrating a principal portion of an optical signal receiver according to a second embodiment of the present invention;

FIG. 5 is a table corresponding to the table in FIG. 2 showing reception states of DQPSK signals, with 16 different combinations of OA1 and OA2 being indicated in the second embodiment;

FIG. 6 is a block diagram illustrating a principal portion of an optical signal receiver according to a third embodiment of the present invention;

FIG. 7 is a flowchart illustrating operations of the OTUk-FAS detection circuit 25 in the third embodiment;

FIG. 8A is a block diagram illustrating a principal portion of an optical signal receiver according to a fourth embodiment of the present invention used in an optical communication system for transmitting the DQPSK optical signals;

FIG. 8B is a table illustrating reception states of DQPSK signals in the signal reception device of the fourth embodiment;

FIG. 9A is a block diagram illustrating a configuration of the in-phase detection circuit 31 in the fourth embodiment;

FIG. 9B is a table illustrating relations between states of signals "Port A Data", "Port B Data", and signals "Output i", "Output j" from the discrimination decision circuits 36, 37 in the fourth embodiment;

FIG. 10A is a block diagram illustrating a principal portion of an optical signal receiver according to a fifth embodiment of the present invention used in an optical communication system for transmitting the DQPSK optical signals;

FIG. 10B is a table illustrating reception states of DQPSK signals in the signal reception device of the fifth embodiment;

FIG. 11 is a block diagram illustrating a specific configuration of a principal portion of the optical signal receiver in the fifth embodiment;

FIG. 12 is a block diagram illustrating a principal portion of an optical signal receiver according to a sixth embodiment of the present invention used in an optical communication system for transmitting the DQPSK optical signals;

FIG. 13A is a block diagram illustrating a principal portion of an optical signal receiver according to a seventh embodiment of the present invention used in an optical communication system for transmitting the DQPSK optical signals;

FIG. 13B is a table illustrating reception states of DQPSK signals in the signal reception device of the seventh embodiment;

FIG. 14A is a block diagram illustrating an example of the reception frame processing unit 9 (framer LSI) according to the seventh embodiment;

FIG. 14B is a table illustrating settings of registers in the logical inversion circuit 53;

FIG. 15 is a block diagram illustrating another example of the reception frame processing unit 9 (framer LSI) according to the seventh embodiment;

FIG. 16 is a block diagram illustrating still another example of the reception frame processing unit 9 (framer LSI) according to the seventh embodiment;

FIG. 17 is a block diagram illustrating a principal portion of an optical signal receiver according to an eighth embodiment of the present invention used in an optical communication system for transmitting the DQPSK optical signals;

FIG. 18 is a block diagram illustrating an example of the reception frame processing unit 9 (framer LSI) according to the present embodiment.

FIG. 19 is a block diagram illustrating another example of the reception frame processing unit 9 (framer LSI) according to the present embodiment having a function of one-bit shift;

FIG. 20 is a block diagram illustrating a principal portion of an optical signal receiver according to a ninth embodiment of the present invention used in an optical communication system for transmitting the DQPSK optical signals;

FIG. 21 is a block diagram illustrating still another example of the reception frame processing unit 9 (framer LSI) according to the ninth embodiment;

FIG. 22 is a block diagram illustrating another example of the reception frame processing unit 9 (framer LSI) according to the present embodiment having a function of one-bit shift;

FIG. 23A is a block diagram illustrating a principal portion of an optical signal receiver according to a 10th embodiment of the present invention used in an optical communication system for transmitting DPSK (Differential Phase Shift Keying) optical signals;
FIG. 23B is a table illustrating a correspondence relation between DPSK signal reception states and FAS bytes;
FIG. 24A is a block diagram illustrating an example of the reception frame processing unit 209 (framer LSI) according to the 10th embodiment;
FIG. 24B is a table illustrating settings of registers in the logical inversion circuit 53;
FIG. 25 is a block diagram illustrating still another example of the reception frame processing unit 209 according to the 10th embodiment;
FIG. 26 is a block diagram illustrating a principal portion of an optical signal receiver according to an 11th embodiment of the present invention used in an optical communication system for transmitting DPSK (Differential Phase Shift Keying) optical signals;
FIG. 27 is a block diagram illustrating a principal portion of an optical signal receiver according to a 12th embodiment of the present invention used in an optical communication system for transmitting DPSK (Differential Phase Shift Keying) optical signals;
FIG. 28 is a block diagram illustrating an optical transponder (an optical sender and an optical receiver) employing the IM-DQPSK modulation scheme in the related art;
FIG. 29 is a circuit diagram illustrating an example of a configuration of a DQPSK precoder in the related art; and
FIG. 30 is a block diagram illustrating a principal portion of an optical signal receiver used in an optical communication system for transmitting the DQPSK optical signals in the related art.

DESCRIPTION OF THE PREFERRED EMBODIMENTS

Below, preferred embodiments of the present invention are explained with reference to the accompanying drawings.

First Embodiment

FIG. 1A is a block diagram illustrating a principal portion of an optical signal receiver according to a first embodiment of the present invention, used in an optical communication system for transmitting the DQPSK optical signals.
The optical signal receiver illustrated in FIG. 1A includes a front end 1 that has two delay interferometers and opto-electric conversion elements that receives DQPSK optical signals and converts the DQPSK optical signals into in-phase signals I and orthogonal signals Q; clock regenerators 3 and 4 that regenerate clock signals CLK based on the in-phase signals I and the orthogonal signals Q; a multiplexer 6 that multiplexes the in-phase signals I and the orthogonal signals Q output from the clock regenerators 3 and 4; a reception frame processing unit 9 that detects frame synchronization based on the signals multiplexed by the multiplexer 6; and a controller 10 that, based on an out-of-frame-synchronization detection result (LOF (Loss of Frame) or OOF (Out of Frame)) from the reception frame processing unit 9, controls logical inversion operations in the clock regenerators 3 and 4, or controls a multiplexing timing in the multiplexer 6, or controls the delay interferometers in the front end 1.
Specifically, the optical signal receiver illustrated in FIG. 1A includes the front end 1 (40G DQPSK OR) that receives and demodulates the DQPSK optical signals, the delay interferometer controller 2, the clock regenerator (20G CDR A) 3, the clock regenerator (20G CDR B) 4, a clock regenerator controller (CDR controller) 5, the multiplexer (MUX) 6 with a multiplexing ratio of 2:1, a multiplexer controller 7, a de-serializer (DES) 8, a reception frame processing unit (framer-LSI) 9, and a controller 10.
The reception frame processing unit 9 has the functions of signal reception processing of DQPSK optical signals the same as the framer in the related art. In addition, the reception frame processing unit 9 at least has functions of detecting synchronization of received frames and detecting LOF and OOF. The detected results are sent to the controller 10 as indicated by a dashed-line arrow in FIG. 1A.
In FIG. 1A, it is illustrated that the reception frame processing unit 9 processes 16-channel parallel data; certainly, the number of channels of the parallel data can be reduced to increase operating speed of the circuit. On the other hand, the number of channels of the parallel data can also be increased along with an increase of capacity of the transmission line.
Until the LOF/OOF detection information (indicated by the dashed-line arrow from the reception frame processing unit 9 in FIG. 1A.) disappears, the controller 10 controls a bias voltage or the temperature of the delay interferometers through the delay interferometer controller 2 (this operation is indicated as "interferometer bias control" in FIG. 1A with a dashed-line arrow), performs logical inversion operations on data signals through the clock regenerator controller 5 (this operation is indicated as "logical inversion control" in FIG. 1A with a dashed-line arrow), or controls the multiplexing sequence with a multiplexing ratio of 2 : 1 through the multiplexer controller 7 (this operation is indicated as "MUX timing control" in FIG. 1A with a dashed-line arrow).

Specifically, (a) the clock regenerator controller 5 controls the logical inversion operations in the clock regenerators 3 and 4, (b) the multiplexer controller 7 controls multiplexing times of the multiplexer 6, and (c) the delay interferometer controller 2 controls the bias voltage or the temperature so as to adjust a $\pi/4$ delay interferometer and a $-\pi/4$ delay interferometer of the front end 1 to operate at optimum operation points. In addition, phase control is performed to shift the phase by $+\pi/2 \pm n\pi$ or $-\pi/2 \pm n\pi$ (n is an integer). Here, the delay interferometer controller 2 can perform the above controls by employing any well-known method.

The above control operations (a), (b), and (c) are repeated until the LOF/OOF detection information from the reception frame processing unit 9 disappears.

FIG. 1B is a table illustrating reception states of DQPSK signals in the signal reception device of the first embodiment.

The table in FIG. 1B shows whether signal reception is allowed of a logically inverted state and a logically non-inverting state of the orthogonal signal Q and the in-phase signal I from a port A and a port B of the front end 1, respectively.

In the table in FIG. 1B, for example, a double circle indicates an object DQPSK signal reception state, single circles indicate states able to be received after logical inversion control, triangles indicate states able to be received after a combination of a time shift operation and the logical inversion control, and crosses indicates states that cannot be received directly.

Assume in the object reception state, the orthogonal signal Q is from the port A of the front end 1, and the in-phase signal I is from the port B of the front end 1, and the reception frame processing unit 9 performs frame synchronization pull-in operations to approach this object reception state.

First, consider the reception states indicated by single circles in the table in FIG. 1B. In these reception states, the phase of the signal from the port A or the phase of the signal from the port B is inverted; thus it is possible to obtain the phase relation of the object reception state by the logical inversion control in the clock regenerators 3 and 4.

Next, consider the reception states indicated by triangles in the table. In these reception states, both the signal from the port A and the signal from the port B are different from the object reception state, including phase inverted states. In this case, by a combination of a time shift operation and the logical inversion control, it is possible to obtain the phase relation of the object reception state, in which the frame synchronization can be attained.

Next, consider the reception states indicated by crosses in the table. These reception states correspond to states that cannot be received directly. However, by repeating the above-mentioned control operations (a), (b), and (c) to adjust the delay interferometers to operate at optimum operating points, and by the logical inversion control of the regenerated clock signals and the multiplexing timing control, it is possible to transition to the object reception state.

FIG. 2A and FIG. 2B are diagrams and waveforms explaining the logical inversion control in the clock regenerator 3 or 4 according to the present embodiment, including a CDR function section and a CDR LSI, as shown in FIG. 2A and FIG. 2B, where FIG. 2A illustrates the usual state of the clock regenerator 3 or 4, and FIG. 2B illustrates a logical inversion state of the clock regenerator 3 or 4.

In the usual state, a switch sw is set to operate such that data are input at 21.5 Gbps from the port A or the port B of the front end 1, and a clock signal at 21.5 Gbps and data at 21.5 Gbps are output. In this state, when the clock regenerator controller 5 performs the logical inversion control, the switch SW is switched to the inversion circuit "not"; hence, logic of the output data is inverted.

FIG. 3A and FIG. 3B are diagrams and waveforms explaining the timing control in the multiplexer (MUX) 6 with a multiplexing ratio of 2:1 according to the present embodiment, where "Data in port A" indicates data input to the multiplexer (MUX) 6 from the port A of the front end 1 through the clock regenerator 3 or 4, "Data in port B" indicates data input to the multiplexer (MUX) 6 from the port B of the front end 1 through the clock regenerator 3 or 4, the clock signal from the clock regenerator 3 or 4 is indicated by "Clock", and the multiplexed data output from the multiplexer 6 are indicated by "Data out". Also illustrated in FIG. 3A and FIG. 3B are a phase shifter denoted by "$\pi$" and a switch sw, in addition to the multiplexer (MUX) 6.

When the data from the port A are multiplexed first, and the data from the port B are multiplexed later (it is indicated as "port A -> port B" in FIG. 3A), the switch sw switches the Clock signal into the multiplexer (MUX) 6, multiplexing is performed by the multiplexer (MUX) 6, and the corresponding state is shown by the waveforms of the Clock signal, the Trigger signal, the In port A signal, the In port B signal, and Data out signal. Here, the Trigger signal controls the In port A data signal to be output as the Data out signal at the rising time of the Clock signal, and controls the In port B data signal to be output as the Data out signal at the falling time of the Clock signal. Thereby, data "Data out" multiplexed at a ratio of 2 : 1 are obtained.

When the data from the port B are multiplexed first, and the data from the port A are multiplexed later (it is indicated as "port B -> port A" in FIG. 3B), the switch SW switches the Clock signal into the side of the phase shifter "$\pi$", and the phase of the Clock signal is inverted compared to the port A -> port B case by a phase shift of 180 degrees.

As a result, the multiplexing sequence of the port A and port B are reversed, and it is possible to control the multiplexed data "Data out" to switch from a sequence of port A -> port B to a sequence of port B -> port A.

Second Embodiment

FIG. 4 is a block diagram illustrating a principal portion of an optical signal receiver according to a second embodiment of the present invention; specifically, FIG. 4 illustrates a principal portion of the reception frame processing unit 9 (framer LSI) as shown in FIG. 1A.

As illustrated in FIG. 4, the reception frame processing unit 9 includes a frame processor 21, a frame synchronization circuit 22, and a signal reception state identifier 23 for identifying signal reception states of DQPSK signals.

In addition, 16 parallel signals each at 2.7 Gbps are input to the reception frame processing unit 9.

The frame synchronization circuit 22 includes 16 frame synchronizers FSC01 through FSC16, which perform frame synchronization detection on different combinations of synchronization bit strings. In an OTN (Optical Transport Network) signal, as recommended by ITU-T G.709, it is known that a header of a frame is identified by detecting a Frame Alignment Signal (FAS) used for frame synchronization in the overhead of a frame. When the Frame Alignment Signal is received to be in a manner of OA1, OA1, OA1, OA2, OA2, OA2 (here, OA1 represents "11110110", and OA2 represents "00101000"), it is decided that a frame synchronization state is attained, and a frame synchronization signal is sent to the frame processor 21.

Because FAS corresponds to the synchronization bytes A1, A2 of the overhead of a frame in SONET (Synchronous Optical Network) signals or SDH (Synchronous Digital Hierarchy) signals, the above method is also applicable to SONET (Synchronous Optical Network) signals or SDH (Synchronous Digital Hierarchy) signals.

In the frame synchronization using OA1 and OA2 of FAS, the frame synchronization circuit 22 has 16 frame synchronizers FSC01 through FSC16 corresponding to 16 different combinations of the in-phase signal I and the orthogonal signal Q, including logical inversion states thereof.

The DQPSK signal reception state identifier 23 receives detection signals from the 16 frame synchronizers FSC01 through FSC16, identifies the signal reception state by using a detection signal from any one of the frame synchronizers FSC01 through FSC16, and notifies the controller 10 (refer to FIG. 1) of the signal reception state identification information.

The frame processor 21 has the functions of frame synchronization pull-in operations, frame de-mapping, and transmitting detection results of LOF (Loss of Frame) or OOF (Out of Frame) to the controller 10.

FIG. 5 is a table corresponding to the table in FIG. 1B showing reception states of DQPSK signals, with 16 different combinations of OA1 and OA2 being indicated.

These 16 different combinations are detected in parallel, respectively, by the 16 frame synchronizers FSC01 through FSC16 in the frame synchronization circuit 22 as shown in FIG. 4. For example, the object signal reception state is indicated by the double circle, corresponding to $OA1_{QI}$ = "11110110", and $OA2_{QI}$ = "00101000", and a detection signal from the frame synchronizer FSC01 is input to the DQPSK signal reception state identifier 23. The DQPSK signal reception state identifier 23 notifies the controller 10 of the information of the frame synchronization state. In this case, the controller 10 is notified that the object reception state is present. When the object reception state is not present, the controller 10 controls the components thereof to generate the object reception state, or maintains control conditions.

When a detection signal from one of the frame synchronizers FSC02 through FSC04 is input to the DQPSK signal reception state identifier 23, it is determined that the logical state of either the in-phase signal I or the orthogonal signal Q is inverted relative to the object signal reception state indicated by the double circle. The DQPSK signal reception state identifier 23 notifies the controller 10 of the information of the reception state. Receiving this information, as illustrated in FIG. 2, the controller 10 may control the clock regenerators 3 and 4 to execute logical inversion so as to generate the in-phase signal I and the orthogonal signal Q of the object signal reception state.

When a detection signal from one of the frame synchronizers FSC05 through FSC08 is input to the DQPSK signal reception state identifier 23, it is determined that the detected reception state corresponds to one of the reception states indicated by triangles in FIG. 1B. The DQPSK signal reception state identifier 23 notifies the controller 10 of the reception state information. Receiving this information, the controller 10 controls the clock regenerators 3 and 4 to execute logical inversion, as illustrated in FIG. 2, and controls the multiplexer 6 to execute multiplexing timing control to change the multiplexing order, as illustrated in FIG. 3.

When a detection signal from one of the frame synchronizers FSC09 through FSC16 is input to the DQPSK signal reception state identifier 23, it is determined that the detected reception state corresponds to one of the reception states indicated by the crosses in FIG. 1B. The DQPSK signal reception state identifier 23 notifies the controller 10 of the reception state information. Because the reception states indicated by the crosses in FIG. 1B correspond to states that cannot be received directly, the controller 10 may terminate reception processing, or repeat the control operations (a), (b), and (c) as described in the previous embodiment.

In the present embodiment, because the frame synchronizers FSC01 through FSC16 of the reception frame processing unit 9 handle the DQPSK signal reception states in parallel, it is possible to quickly perform the frame synchronization state pull-in step compared to the method of repeating the control operations (a), (b), and (c) sequentially, as described in the previous embodiment.

Third Embodiment

FIG. 6 is a block diagram illustrating a principal portion of an optical signal receiver according to a third embodiment of the present invention; specifically, FIG. 6 illustrates a principal portion of the reception frame processing unit 9 (framer LSI) as shown in FIG. 1A.

As illustrated in FIG. 6, the reception frame processing unit 9 includes a frame processor 21a, a frame synchronization circuit 22a, an OTUk-FAS detection circuit 25, and registers 26. The same as FIG. 4, 16 parallel signals each at 2.7 Gbps from the de-serializer (DES) 8 are input to the reception frame processing unit 9.

The frame synchronization circuit 22a detects predetermined synchronization bits to detect frame synchronization, and sends a frame synchronization signal to the frame processor 21.

In OTN (Optical Transport Network) systems, as recommended by ITU-T G.709, Frame Alignment Signal (FAS) bytes are defined as the frame synchronization bits in an overhead section of an OTU signal, and when the Frame Alignment Signal is received to be in a manner of OA1, OA1, OA1, OA2, OA2, OA2 (here, OA1 represents "11110110", and OA2 represents "00101000"), it is decided that a frame synchronization state is attained.

Because FAS corresponds to the synchronization bytes A1, A2 of the overhead of a frame in SONET (Synchronous Optical Network) signals or SDH (Synchronous Digital Hierarchy) signals, in the case of SONET signals or SDH signals, the OTUk-FAS detection circuit 25 serves as a detection circuit for detecting the synchronization bytes A1, A2 in SONET signals or SDH signals.

The registers 26 retain 16 different combinations of OA1 and OA2 of FAS as shown in FIG. 5, corresponding to variations of the reception states of the in-phase signal I and the orthogonal signal Q. Here, it is assumed that the registers 26 can be rewritten without any limitations.

The OTUk-FAS detection circuit 25, serving as a frame synchronization detection circuit, reads in the 16 different combinations of FAS retained in the registers 26 sequentially, detects which combination of OA1 and OA2 corresponds to a successful frame synchronization detection, and notifies the controller 10 of the information of the detected combination of OA1 and OA2. As described above, the controller 10 controls the components thereof to attain the object reception state.

FIG. 7 is a flowchart illustrating operations of the OTUk-FAS detection circuit 25.

In step S1, when the frame synchronization circuit 22a detects an LOF (Loss of Frame) or OOF (Out of Frame) state, the OTUk-FAS detection circuit 25 sets an initial value of a register address to be "0".

In step S2, the OTUk-FAS detection circuit 25 reads in one of the 16 combinations of OA1 and OA2 of FAS retained at the register address in the registers 26.

In step S3, the OTUk_FAS detection circuit 25 compares the thus obtained register value to a received OTUk-FAS byte.

If it is determined that the register value is in agreement with the received OTUk-FAS byte in step S4, the value of the OTUk-FAS is output and sent to the controller 10 in step S5.

If it is determined that the register value is not in agreement with the received OTUk-FAS byte in step S4, the register address is incremented by one in step S6, and the routine returns to step S2 to repeat the operations from step S2 to step S4.

That is, the OTUk-FAS detection circuit 25 reads in the next combination of OA1 and OA2 of FAS retained at the new register address in the registers 26, and compares the newly obtained register value to the received OTUk-FAS byte. This routine is repeated until the register value is in agreement with the received OTUk-FAS byte. When agreement is detected, the value of the OTUk-FAS is sent to the controller 10. Receiving the OTUk-FAS value, the controller 10 determines the DQPSK signal reception state as shown in FIG. 1B, and if the object reception state is not attained, the controller 10 controls the components thereof to transition to the object reception state.

Fourth Embodiment

FIG. 8A is a block diagram illustrating a principal portion of an optical signal receiver according to a fourth embodiment of the present invention used in an optical communication system for transmitting the DQPSK optical signals.

In the present embodiment, the same reference numbers are assigned to the same elements as those shown in FIG. 1A.

The optical signal receiver in FIG. 8A further includes an in-phase detection circuit 31 having an exclusive OR logical circuit EOR and a counter.

FIG. 8B is a table illustrating reception states of DQPSK signals in the signal reception device of the present embodiment.

As shown in the table in FIG. 8B, the same as the table in FIG. 1B, with symbols of double circle, single circles, triangles, and crosses, the table in FIG. 8B shows conditions for logical inversion control and a logical non-inversion control of the orthogonal signal Q and the in-phase signal I from the port A and the port B, respectively.

In addition, a reset signal RST generated by the controller 10 in each frame period or in correspondence to a low frequency clock signal is input to the counter of the in-phase detection circuit 31 to reset the counter and to start counting up in-phase detection signals from the exclusive OR logical circuit EOR. The count prior to the next RST signal is indicated by "Data" in FIG. 8A, and the count "Data" is input to the controller 10.

The in-phase detection circuit 31 is able to detect the DQPSK signal reception states indicated by crosses in the table in FIG. 8B, namely, the reception states in which both the signal from the port A and the signal from the port B are the in-phase signal I or the orthogonal signal Q, or logical inversion of the in-phase signal I or the orthogonal signal Q.

When the DQPSK signal reception states indicated by crosses are detected, the controller 10 directs the delay interferometer controller 2 to shift the phase of one interferometer in the front end 1 by $\pi/2$ or $-\pi/2$. Specifically, as described above, phase control is performed to shift the phase by $+\pi/2\pm n\pi$ or $-\pi/2\pm n\pi$ (n is an integer). Then, the controller 10 controls the components so that a normal reception state is obtained after repeatedly executing the aforesaid control operations (a), (b), and (c).

The same as described with reference to FIG. 1A, and FIG. 1B, until the LOF/OOF detection information (indicated by the dashed-line arrow from the reception frame processing unit 9 in FIG. 1A.) disappears, the controller 10 controls the bias voltage or the temperature of the delay interferometers through the delay interferometer controller 2 (indicated as "interferometer bias control"), performs logical inversion operations on data signals through the clock regenerator controller 5 (indicated as "logical inversion control"), or controls the multiplexing sequence with a multiplexing ratio of 2 : 1 through the multiplexer controller 7 (indicated as "MUX timing control"). Further, the in-phase detection circuit 31 having an exclusive OR logical circuit EOR and a counter performs in-phase detection and notifies the controller 10 of the results (this operation is indicated as "in-phase detection" in FIG. 8A with a dashed-line arrow).

FIG. 9A is a block diagram illustrating a configuration of the in-phase detection circuit 31 in the present embodiment.

As illustrated in FIG. 9A, the in-phase detection circuit 31 includes an exclusive OR logical circuit (EOR) 32, an inversion circuit (NOT) 33, counters 34, 35, and discrimination decision circuits 36, 37.

Signals from the port A and the port B of the front end 1 at 21.5 Gbps (indicated by "Port A data" and "Port B data", respectively) are input to the exclusive OR logical circuit 32 via the clock regenerators 3 and 4.

The controller 10 outputs a reset signal RST in each frame period or in correspondence to a low frequency clock signal. The reset signal RST resets the counters 34, 35. Output signals from the exclusive OR logical circuit EOR are input to the counter 34, and input to the counter 35 via the inversion circuit 33. The counters 34, 35 count up the input signals according to the clock signal "Clock" .

The counts obtained by the counters 34 and 35 in each preset interval, such as a frame period, are input to the discrimination decision circuits 36, 37, and are compared to a reference value. The identification circuit 36 and 37 output signals indicating comparison results. Specifically, the identification circuit 36 or the identification circuit 37 outputs a signal at a high level (H) if the count is greater than the reference value, and outputs a signal at a low level (L) if the count is less than or equal to the reference value. The output signals from the discrimination decision circuits 36, 37 are indicated by "Output i", "Output j", respectively in FIG. 9A.

The discrimination decision circuits 36, 37 output the signals "Output i" and "Output j" to the controller 10.

FIG. 9B is a table illustrating relations between states of signals "Port A Data", "Port B Data", and levels (H or L) of signals "Output i", "Output j" from the discrimination decision circuits 36, 37.

As illustrated in FIG. 9B, when the signal "Port A Data" and the signal "Port B Data" have the same phase, the output signals from the exclusive OR logical circuit 32 are at the low level (L), whereas when the signal "Port A Data" and the signal "Port B Data" have different phases, the output signals from the exclusive OR logical circuit 32 are at the high level (H).

Because the counters 34, 35 are configured to count up a high level signal at the timing of the clock signal "Clock", when the input signals to the counters 34, 35 have the same phase, it turns out that one of the counters, for example, the counter 34, has a count close to zero, and the other one of the counters, for example, the counter 35 has a count close to a maximum. To the contrary, when the input signals to the counters 34, 35 have different phases, one of the counters, for example, the counter 34, has a count close to the maximum, and the other one of the counters, for example, the counter 35 has a count close to zero. Hence, if the output signal "Output i" from the identification circuit 36 is at the low level L, and the output signal "Output j" from the identification circuit 37 is at the high level H, it can be determined that the two input signals have the same phase. On the other hand, if the output signal "Output i" from the identification circuit 36 and the output signal "Output j" from the identification circuit 37 are both at the high level H or at the low level L, it can be determined that the phase relation between the two input signals is random, that is, the phase relation is undetermined.

## Fifth Embodiment

FIG. 10A is a block diagram illustrating a principal portion of an optical signal receiver according to a fifth embodiment of the present invention used in an optical communication system for transmitting the DQPSK optical signals.

In the present embodiment, the same reference numbers are assigned to the same elements as those shown in FIG. 1A.

As illustrated in FIG. 10A, the front end 1 includes an auto polarization controller APC, a delay interferometer, a polarizing beam splitter PBS, and opto-electrical conversion elements.

The auto polarization controller APC generates a polarized optical signal with a polarization plane at 45 degrees, a polarization maintaining fiber transmits the optical signal while maintaining such a polarization plane, and then the polarized optical signal is input to the delay interferometer.

FIG. 10B is a table illustrating reception states of DQPSK signals in the signal reception device of the present embodiment.

As illustrated in FIG. 10B, because of the front end 1 as shown in FIG. 10A, DQPSK signal reception states indicated by a double circle, a single circle, and triangles are generated, but other states are not generated. That is, there are only four possible combinations that generate logic states.

Then, according to the reception state detection information indicated by the dashed-line arrow from the reception frame processing unit 9 to the controller 10, the controller 10 controls the bias voltage or the temperature of the delay interferometer through the delay interferometer controller 2 (indicated as "interferometer bias control"), performs logical inversion operations on data signals through the clock regenerator controller 5 (indicated as "logical inversion control"), or controls the multiplexing sequence with a multiplexing ratio of 2 : 1 through the multiplexer controller 7 (indicated as "MUX timing control").

FIG. 11 is a block diagram illustrating a specific configuration of a principal portion of the optical signal receiver in the present embodiment.

Shown in FIG. 11 are the front end 1, the clock regenerators 3, 4, the reception frame processing unit 9, and an optical phase control circuit 47 having functions of the delay interferometer controller 2 and the controller 10.

As illustrated in FIG. 11, the front end 1 includes an auto polarization controller (APC) 41, a polarization maintaining fiber 42, an optical wave circuit 43, differential light receiving circuits 45, 46, each of which has a pair of opto-electric conversion elements, a delay interferometer 51, an input-side optical coupler 51a, arms 51b, 51c, an output-side optical coupler 51d, and polarizing beam splitters (PBS) 52, 53.

The auto polarization controller 41 is configured to be able to change a polarization state of a DQPSK optical signal arbitrarily.

The auto polarization controller 41 monitors and automatically controls the polarization state of the DQPSK optical signal inside so as to generate a linearly-polarized light beam having a polarization plane inclined by 45 degrees relative to a birefringence axis of the lower arm 51c below the delay interferometer 51.

The delay interferometer 51 may be a Mach-Zehnder light guide including the input-side optical coupler 51a serving as a branching portion, the upper arm 51b, the lower arm 51c, and the output-side optical coupler 51d serving as a combining portion. Optical path lengths of the two arms 51b and 51c are designed to be different from each other so as to generate a relative time delay $\tau$ equivalent to one symbol of the QOPSK optical signal between light beams propagating through the arms 51b and 51c.

For example, by setting the total length of the upper arm 51b longer than that of the lower arm 51c, the time delay $\tau$ is induced which depends on the length of the delay line but is independent of the polarization state.

In addition, the arm 51c below the delay interferometer 51 has a cross-sectional structure different from other components, or the additives in the substrate of the arm 51c are different from other components. Due to this, the arm 51c operates as a light guide having birefringence and functioning as a 1/4 wavelength plate ($\lambda$/4), and is able to generate a birefringence difference equaling to $\pi/2$ between the TE mode and the TM mode for the corresponding one of the two light beams branched to the arm 51c by the input-side optical coupler 51a.

The light beams formed by splitting performed by the input-side optical coupler 51a and propagating through the upper arm 51b and the lower arm 51c, respectively, are combined by the output-side optical coupler 51d first, and are then branched (split) again into two complementary signals. One of the two complementary signals is input to the polarizing beam splitter 52, and the other one of the two complementary signals is input to the polarizing beam splitter 53.

Each of the polarizing beam splitters 52, 53 has an optical axis parallel to the birefringence axis of the lower arm 51c below the delay interferometer 51, and splits the light beam from the delay interferometer 51 into a TE mode light beam and a TM mode light beam.

The TE mode light beams split by the polarizing beam splitters 52, 53 propagate through respective output light guides extending to the end of the substrate of the optical wave circuit 43, and enter into the differential light receiving circuits 45 and 46 arranged near the end of the output light guides.

Similarly, the TM mode light beams split by the polarizing beam splitters 52, 53 also propagate through respective output light guides extending to the end of the substrate of the optical wave circuit 43, and enter into the differential light receiving circuits 45 and 46 arranged near the end of the output light guides.

In FIG. 11, the output light guides extending from the polarizing beam splitters 52, 53 to the differential light receiving circuits 45, 46 are arranged to intersect with each other, but the output light guides may also be arranged to involve less cross-talk.

The optical wave circuit 43 is controlled by the optical phase control circuit 47, for example, to adjust the temperature of the substrate near the light guide or the electrical field near the light guide to perform optical phase control in the optical wave circuit 43.

For example, the TE mode light beams split by the polarizing beam splitters 52, 53 are input to the pair of light receiving elements in the differential light receiving circuit 45, which outputs a signal I obtained by demodulating the in-phase component of the DQPSK optical signal.

Meanwhile, the TM mode light beams split by the polarizing beam splitters 52, 53 are input to the pair of light receiving elements in the differential light receiving circuit 46, which outputs a signal Q obtained by demodulating the orthogonal component of the DQPSK optical signal.

The signal I and the signal Q from the differential light receiving circuits 45, 46, respectively, are input to the clock regenerators 3, 4 to regenerate the clock signal.

According to the present embodiment, the auto polarization controller 41 of the front end 1 changes a polarization state of the input DQPSK optical signal into a linearly-polarized light beam, specifically, having a polarization plane inclined by 45 degrees relative to the birefringence axis; the linearly-polarized light beam propagates through the polarization maintaining fiber 42 and is input to the optical wave circuit 43; and the optical wave circuit 43 splits the input linearly-polarized light beam into the in-phase signal I and the orthogonal signal Q. In the previous embodiments, the front end has two delay interferometers. In contrast, in the present embodiment the optical wave circuit 43 has only one delay interferometer 51. Hence it is possible to make the signal reception device compact and simplify the structure of the signal reception device.

In addition, because a delay time difference equivalent to one symbol of the DQPSK optical signal and independent of the polarization state is generated by a light guide formed from a delay line, and at the same time a phase difference is generated between the TE mode light beam and the TM mode light beam by the upper arm only, thereby shifting the interference operation point by exactly $\pi/2$, it is not necessary to control the phase difference between the in-phase component and the orthogonal component. As a result, as illustrated by the DQPSK signal reception states in the table in FIG. 10B, it is sufficient to detect four reception states, and perform the logical conversion control and the multiplexing timing control.

Therefore, the frame synchronization circuit 22 illustrated in FIG. 4 in the reception frame processing unit 9 can be configured to include the frame synchronizer FSC01 for detecting the signal reception state indicated by the double circle, the frame synchronizer FSC04 for detecting the signal reception state indicated by the single circle, and the frame synchronizers FSC05, FSC08 for detecting the signal reception state indicated by the triangles. Hence, it is possible to simplify the structure of the frame synchronization circuit 22.

## Sixth Embodiment

FIG. 12 is a block diagram illustrating a principal portion of an optical signal receiver according to a sixth embodiment of the present invention used in an optical communication system for transmitting the DQPSK optical signals.

In the present embodiment, the same reference numbers are assigned to the same elements as those shown in FIG. 1A.

The optical signal receiver in FIG. 12 further includes a clock regenerator 51, and a clock regeneration controller 52.

For example, as illustrated in FIG. 28, when a phase-modulated optical signal is intensity-modulated by an intensity modulator in accordance with a clock signal to transmit an IM-DQPSK optical signal, the received modulated optical signal is split by an optical coupler 50, and the split signals are input to the front end 1 (40G DQPSK OR) and the clock regenerator 51, respectively. The clock regenerator 51 regenerates the clock signal CLK from the intensity-modulated received optical signal including a clock signal component, and regenerated clock signal CLK is input to the multiplexer 6 (MUX 2:1).

The front end 1, the multiplexer 6, the de-serializer (DES) 8, and the reception frame processing unit (framer-LSI) 9 have the same structures and operate in the same way as those described in the previous embodiments.

That is, the LOF/OOF detection signal (indicated by a dashed-line arrow from the reception frame processing unit 9 in FIG. 12) is input to the controller 10, and in order for the LOF/OOF detection signal to disappear, the controller 10 controls the multiplexing sequence in the multiplexer 6 through the multiplexer controller 7 (indicated as "MUX timing control"), and controls the clock regenerator 51 through the clock regeneration controller 52 to perform a logical inversion operation (indicated as "logical inversion control"). As described above with reference to FIG. 2 and FIG. 3, the logical inversion operation is performed so that the orthogonal signal Q and the in-phase signal I attain the object reception state.

In the present embodiment, because only a single clock regenerator 51 is provided instead of the clock regenerators 3 and 4 in the previous embodiments, which are provided corresponding to the port A and port B of the front end 1, respectively, it is possible to simplify the structure of the device.

Seventh Embodiment

FIG. 13A is a block diagram illustrating a principal portion of an optical signal receiver according to a seventh embodiment of the present invention used in an optical communication system for transmitting the DQPSK optical signals.

FIG. 13B is a table illustrating reception states of DQPSK signals in the signal reception device of the present embodiment.

In the present embodiment, the same reference numbers are assigned to the same elements as those shown in FIG. 1A and FIG. 4.

The optical signal receiver in FIG. 13A further includes a logical inversion circuit 53.

The logical inversion circuit 53 has the same function as the logical inversion control in the clock regenerators 3 and 4, as described with reference to FIG. 1A and FIG. 2B, to control logical inversion and non-inversion of the orthogonal signal Q and the in-phase signal I.

The logical inversion circuit 53, the frame synchronization circuit 22, and the frame processor 21 are integrated to be a 16-channel parallel processing integrated circuit, constituting the reception frame processing unit (framer-LSI) 9.

The LOF/OOF detection signal (indicated by a dashed-line arrow from the reception frame processing unit 9 in FIG. 13) is input to the controller 10, and in order for the LOF/OOF detection signal to disappear, the controller 10 controls the logical inversion circuit 53 via the logical inversion control indicated by a dashed-line arrow, or controls the multiplexing sequence in the multiplexer (MUX 2:1) 6 through the multiplexer controller 7 by MUX timing control indicated by a dashed-line arrow, or controls a bias voltage or the temperature of the delay interferometer in the front end 1 through the delay interferometer controller 2 by the interferometer bias control indicated as a dashed-line arrow.

FIG. 14A is a block diagram illustrating an example of the reception frame processing unit 9 (framer LSI) according to the present embodiment.

FIG. 14B is a table illustrating settings of registers in the logical inversion circuit 53.

In FIG. 14A, the same reference numbers are assigned to the same elements as those shown in FIG. 4.

As illustrated in FIG. 14A, the logical inversion circuit 53 processes 16-channel parallel input data, thus illustrated as 2.7G x 16 (= 43G). The logical inversion circuit 53 constitutes a 16-channel parallel processing circuit from exclusive OR logical circuits EOR01 through EOR16. In addition, the logical inversion circuit 53 includes registers for setting the logical inversion control signal from the controller 10 (refer to FIG. 13A) to odd-numbered ones and even-numbered ones of the exclusive OR logical circuits EOR01 through EOR16. The exclusive OR logical circuits EOR01 through EOR16 and the registers constitute an integrated circuit as the reception frame processing unit (framer-LSI) 9.

The odd-numbered exclusive OR logical circuits and the even-numbered exclusive OR logical circuits are configured to independently perform logical inversion control and logical non-inversion control on the orthogonal signal Q and the in-phase signal I from the front end 1.

For example, the frame processor 21, the frame synchronization circuit 22, and the signal reception identifier 23 may have the same structures as those shown in FIG. 4.

The table in FIG. 14B presents logical relation between the logical inversion control signal to be set in the registers of the logical inversion circuit 53, logical inversion of data, and logical non-inversion of data, being respectively represented as "register setting", "input data", and "output data".

As shown in the table in FIG. 14B, when the register setting is 1, the logical inversion control is performed.

FIG. 15 is a block diagram illustrating another example of the reception frame processing unit 9 (framer LSI) according to the present embodiment.

In FIG. 15, the same reference numbers are assigned to the same elements as those shown in FIG. 14A.

As illustrated in FIG. 15, the logical inversion circuit 53 includes logic inversion gates (NOT gate) for 16-channel parallel input data, switches SW1 through SW16, switch controllers (indicated as "SW cont." in FIG. 15) for odd-numbered ones and even-numbered ones of the switches SW1 through SW16. The exclusive OR logical circuits EOR01 through EOR16 and the registers constitute an integrated circuit as the reception frame processing unit (framer-LSI) 9. The odd-numbered switches and the even-numbered switches are configured to independently perform logical inversion control and logical non-inversion control on the orthogonal signal Q and the in-phase signal I from the front end 1.

FIG. 16 is a block diagram illustrating still another example of the reception frame processing unit 9 (framer LSI) according to the present embodiment.

In FIG. 16, the same reference numbers are assigned to the same elements as those shown in FIG. 14A and FIG. 15.

Similar to FIG. 4, in FIG. 16, 16-channel parallel signals each at 2.7 Gbps (indicated at 2.7 Gbps x 16) from the de-serializer (DES) 8 are input to the reception frame processing unit 9. The 16-channel parallel signals are input to the frame synchronization circuit 22a via exclusive OR logical circuits EOR01 through EOR16. The exclusive OR logical circuits EOR01 through EOR16 perform the logical inversion control so that the logical inversion control signal from the controller 10 is set in registers corresponding to the odd-numbered ones and even-numbered ones of the exclusive OR logical circuits EOR01 through EOR16, and the frame synchronization is established. Here, the odd-numbered exclusive OR logical circuits and the even-numbered exclusive OR logical circuits are configured to independently perform logical inversion control and logical non-inversion control on the orthogonal signal Q and the in-phase signal I from the front end 1.

As described above, the frame synchronization circuit 22a is configured to detect predetermined synchronization bits to perform frame synchronization detection, and supplies a frame synchronization detection signal to the frame processor 21a. For example,

In the OTN (Optical Transport Network) signal, as recommended by ITU-T G.709, the Frame Alignment Signal (FAS) is defined in the overhead of an OTN frame and is used as frame synchronization bits. When OA1 ("11110110") and OA2 ("00101000") are received in a manner of OA1, OA1, OA1, OA2, OA2, OA2, it is decided that a frame synchronization state is attained, and a frame synchronization signal is sent to the frame processor 21a.

Because FAS corresponds to the synchronization bytes A1, A2 of the overheads of frames in SONET (Synchronous Optical Network), SDH (Synchronous Digital Hierarchy), in cases of SONET and SDH frames, the OTUk-FAS detection circuit 25 serves as a detection circuit for detecting the synchronization bytes A1, A2 in SONET signals or SDH signals.

The registers 26 retain 16 different combinations of OA1 and OA2 of FAS as shown in FIG. 5, corresponding to variations of the reception states of the in-phase signal I and the orthogonal signal Q. The OTUk-FAS detection circuit 25, serving as a frame synchronization detection circuit, reads in the 16 different combinations of FAS retained in the registers 26 sequentially, detects which combination of OA1 and OA2 corresponds to a successful frame synchronization detection, and notifies the controller 10 of the information of the detected combination of OA1 and OA2. As described above, the controller 10 controls the components thereof to attain the object reception state.

Eighth Embodiment

FIG. 17 is a block diagram illustrating a principal portion of an optical signal receiver according to an eighth embodiment of the present invention used in an optical communication system for transmitting the DQPSK optical signals.

In the present embodiment, the same reference numbers are assigned to the same elements as those shown in FIG. 13.

The optical signal receiver in FIG. 17 further includes a neighboring bit exchanging circuit 54. The neighboring bit exchanging circuit 54, the frame synchronization circuit 22, and the frame processor 21 are integrated to be an integrated circuit, forming the reception frame processing unit (framer-LSI) 9.

The LOF/OOF detection signal (indicated by a dashed-line arrow from the reception frame processing unit 9 in FIG. 17) is input to the controller 10, and in order for the LOF/OOF detection signal to disappear, the controller 10 controls the neighboring bit exchanging circuit 54, as the MUX timing control indicated by a dashed-line arrow, to exchange neighboring bits in the 16 channel parallel data, and the controller 10 performs the logical inversion and non-inversion control in the clock regenerators 3, 4 through the clock regenerator controller 5, as the logical inversion control indicated in FIG. 17 with a dashed-line arrow, and controls a bias voltage or the temperature of the delay interferometer in the front end 1 through the delay interferometer controller 2, as the interferometer bias control indicated in FIG. 17 with a dashed-line arrow.

FIG. 18 is a block diagram illustrating an example of the reception frame processing unit 9 (framer LSI) according to the present embodiment.

In FIG. 18, the same reference numbers are assigned to the same elements as those shown in FIG. 15.

As illustrated in FIG. 18, the neighboring bit exchanging circuit 54 includes switches SW for exchanging neighboring bits in the 16 channel parallel data (this is referred to as "bit-swap"), and a switch controller (indicated as "SW cont." in FIG. 18).

A timing control signal from the controller 10 is set in the switch controller to control the switching operations of the switches SW. Similar to the switching operations in the multiplexing sequence as described in FIG. 3, the in-phase signal I and the orthogonal signal Q in their object reception states can be input to the frame processor 21 and the frame synchronization circuit 22.

The switches SW and the switch controller can be formed by semiconductor elements, and they can be further integrated with the frame processor 21 and the frame synchronization circuit 22 to be an integrated circuit to serve as the reception frame processing unit (framer-LSI) 9.

FIG. 19 is a block diagram illustrating another example of the reception frame processing unit 9 (framer LSI) according to the present embodiment.

In FIG. 19, the same reference numbers are assigned to the same elements as those shown in FIG. 18, and overlapping descriptions are omitted appropriately.

As illustrated in FIG. 19, in addition to the components in the reception frame processing unit 9 (framer LSI) shown in FIG. 17 and FIG. 18, the reception frame processing unit 9 (framer LSI) shown in FIG. 19 further includes a one-bit shifter circuit 55, a controller of the one-bit shifter circuit 55, and a one-bit delay element 56. The controller of the one-bit shifter circuit 55 is indicated as "SEL cont." in FIG. 19, and the one-bit delay element 56 is indicated as "D" in FIG. 19.

The one-bit shifter circuit 55 and the controller thereof are arranged in front of the neighboring bit exchanging circuit 54 to shift the input data by one bit.

The one-bit shifter circuit 55 includes 16 optical selectors, which, indicated by "SEL" in FIG. 19, are connected to the 16 switches SW of the neighboring bit exchanging circuit 54.

Ninth Embodiment

FIG. 20 is a block diagram illustrating a principal portion of an optical signal receiver according to a ninth embodiment of the present invention used in an optical communication system for transmitting the DQPSK optical signals.

In the present embodiment, the same reference numbers are assigned to the same elements as those shown in FIG. 13 and FIG. 17.

The logical inversion circuit 53 and the neighboring bit exchanging circuit 54 are integrated with the frame processor 21 and the frame synchronization circuit 22 to be an integrated circuit serving as the reception frame processing unit (framer-LSI) 9.

The LOF/OOF detection signal (indicated by a dashed-line arrow from the reception frame processing unit 9 in FIG. 20) is input to the controller 10, and in order for the LOF/OOF detection signal to disappear, the controller 10 controls the neighboring bit exchanging circuit 54, as the MUX timing control indicated by a dashed-line arrow, controls the logical inversion circuit 53 to perform the logical inversion control as indicated in FIG. 20 with a dashed-line arrow, and controls a bias voltage or the temperature of the two delay interferometers in the front end 1 through the delay interferometer controller 2, as the interferometer bias control indicated in FIG. 20 with a dashed-line arrow.

FIG. 21 is a block diagram illustrating still another example of the reception frame processing unit 9 (framer LSI) according to the present embodiment.

The frame processor 21, the frame synchronization circuit 22, the logical inversion circuit 53 and the neighboring bit exchanging circuit 54 are integrated to be a 16-channel parallel processing integrated circuit.

The logical inversion circuit 53 includes exclusive OR logical circuits EOR01 through EOR16 and registers. The neighboring bit exchanging circuit 54 includes switches SW and a switch controller (indicated as "SW cont." in FIG. 21).

FIG. 22 is a block diagram illustrating another example of the reception frame processing unit 9 (framer LSI) according to the present embodiment.

In FIG. 22, the same reference numbers are assigned to the same elements as those shown in FIG. 21, and overlapping descriptions are omitted appropriately. As illustrated in FIG. 22, in addition to the components in the reception frame processing unit 9 (framer LSI) shown in FIG. 20 and FIG. 21, the reception frame processing unit 9 (framer LSI) shown in FIG. 22 further includes a one-bit shifter circuit 55, a controller of the one-bit shifter circuit 55, and a one-bit delay element 56. The controller of the one-bit shifter circuit 55 is indicated as "SEL cont." in FIG. 22, and the one-bit delay element 56 is indicated as "D" in FIG. 22.

The one-bit shifter circuit 55 and the controller thereof are arranged in front of the neighboring bit exchanging circuit 54 and behind the logical inversion circuit 53 to shift the data from the logical inversion circuit 53 by one bit.

The one-bit shifter circuit 55 includes 16 optical selectors, which, indicated by "SEL" in FIG. 22, are connected to the 16 exclusive OR logical circuits EOR01 through EOR16 of the logical inversion circuit 53 and the 16 switches SW of the neighboring bit exchanging circuit 54.

10th Embodiment

FIG. 23A is a block diagram illustrating a principal portion of an optical signal receiver according to a 10th embodiment of the present invention used in an optical communication system for transmitting DPSK (Differential Phase Shift Keying) optical signals.

FIG. 23B is a table illustrating a correspondence relation between DPSK signal reception states and FAS bytes.

The optical signal receiver illustrated in FIG. 23A includes a front end (DPSK OR) 201 that receives and demodulates DPSK optical signals, an interferometer controller 202, a clock regenerator (43G CDR) 203, a clock regenerator controller (CDR cont.) 205, a de-serializer (DES) 208, a reception frame processing unit (framer-LSI) 209, a controller 210, a frame processor 221, a frame synchronization circuit 222, and a logical inversion circuit 225.

The table in FIG. 23B illustrates a correspondence relation between DPSK signal reception states and FAS (Frame Alignment Signal) bytes, and an object signal reception state is indicated by a double circle.

In the DQPSK modulation scheme, as described above, there are sixteen possible reception states, while in the DPSK modulation scheme, there are two possible reception states. For this reason, the logical inversion circuit 225 is provided to perform logic inversion and non-inversion operations, and the logical inversion circuit 225, the frame synchronization circuit 222, and the frame processor 221 are integrated to be an integrated circuit, serving as the reception frame processing unit (framer-LSI) 209.

Further, the logical inversion circuit 225, as a separate circuit, may be provided at an earlier stage of the reception frame processing unit (framer-LSI) 209, which is formed from the frame synchronization circuit 222 and the frame processor 221.

A DPSK modulation optical signal at a bit rate of 43 Gbps is input to the front end 201, and is converted into an electrical signal at a bit rate of 43 Gbps. The electrical signal is input to the clock regenerator 203, and the clock regenerator 203 outputs data at 43 Gbps (hence, abbreviated to be "Data 43G") and a clock signal at 21.5 Gbps (abbreviated to be "CLK 21.5G").

The data (Data 43G and the clock signal (CLK 21.5G) are input to the de-serializer (DES) 208. The de-serializer (DES) 208 converts the input signals to 16 parallel signals each at a bit rate of 2.7 Gbps (2.7G x 16), and outputs the 16-channel parallel signals to the reception frame processing unit 209.

By LOF/OOF detections, the reception frame processing unit 209 notifies the controller as indicated by a dashed line in FIG. 23A. In order for the LOF/OOF detection signal to disappear, the controller 210 controls components of the device. Specifically, the controller 210 controls to have logical inversion operations performed in the logical inversion circuit 225 of the reception frame processing unit 209 (this operation is indicated as "logical inversion control" in FIG. 23A with a dashed-line arrow) to obtain the object reception state.

In addition, the controller 210 controls a bias voltage or the temperature of the interferometers through the interferometer controller 202 (this operation is indicated as "interferometer bias control" in FIG. 23A with a dashed-line arrow).

FIG. 24A is a block diagram illustrating an example of the reception frame processing unit 209 (framer LSI) according to the present embodiment.

FIG. 24B is a table illustrating settings of registers in the logical inversion circuit 53.

In FIG. 24A, the same reference numbers are assigned to the same elements as those shown in FIG. 23A.

As illustrated in FIG. 24A, the reception frame processing unit 209 is an integrated circuit including the frame processor 221, the frame synchronization circuit 222, a signal reception state identifier 223, and the logical inversion circuit 225. The logical inversion circuit 225 includes exclusive OR logical circuits EOR01 through EOR16, and a register.

The reception frame processing unit 209 has the same structure as the reception frame processing unit 9 illustrated in FIG. 14A, however, in the reception frame processing unit 209, the register is shared by the exclusive OR logical circuits EOR01 through EOR16, which are arranged in a manner of 16-channel parallel processing.

The table in FIG. 24B presents a logic relation between the settings in the registers from the controller 210 and the input data and output data. As shown in the table in FIG. 24B, when the register setting is 1, the logical inversion control is performed.

FIG. 25 is a block diagram illustrating still another example of the reception frame processing unit 209 according to the present embodiment.

In FIG. 25, the reception frame processing unit 209 is an integrated circuit including the frame processor 221, the frame synchronization circuit 222a, an OTUk-FAS detection circuit 222b, and the logical inversion circuit 225.

The 16-channel parallel signals each at 2.7 Gbps (indicated at 2.7 Gbps x 16) from the de-serializer (DES) 208 in FIG. 23A are input to the reception frame processing unit 209.

The frame synchronization circuit 222a detects predetermined synchronization bits to perform frame synchronization detection, and supplies a frame synchronization detection signal to the frame processor 221.

In the OTN (Optical Transport Network) signal, as recommended by ITU-T G.709, Frame Alignment Signal (FAS) is defined in the overhead of an OTN frame and is used as frame synchronization bits. When OA1 ("11110110") and OA2 ("00101000") are received in a manner of OA1, OA1, OA1, OA2, OA2, OA2, it is decided that a frame synchronization state is attained, and a frame synchronization signal is sent to the frame processor 221.

Because FAS corresponds to the synchronization bytes A1, A2 of the overheads of frames in SONET (Synchronous Optical Network), SDH (Synchronous Digital Hierarchy), in cases of SONET, SDH frames, the OTUk-FAS detection circuit 22b serves as a detection circuit for detecting the synchronization bytes A1, A2 in SONET signals or SDH signals.

The registers 226 retain two different combinations of OA1 and OA2 of FAS which varies depending on the reception states of the DPSK modulation signal.

Meanwhile, referring to FIG. 6, because the DPQSK modulation scheme is employed, the registers 26 retain 16 different combinations of OA1 and OA2 of FAS, and the registers 26 can be rewritten without any limitations.

The OTUk-FAS detection circuit 222b, serving as a frame synchronization detection circuit, reads in the two different combinations of FAS retained in the registers 226 sequentially, detects which combination of OA1 and OA2 corresponds to a successful frame synchronization detection, and notifies the controller 210 of the information of the detected combination of OA1 and OA2. As described above, the controller 210 controls the components to attain the object reception state.

As shown in FIG. 24A, the logical inversion circuit 225 includes exclusive OR logical circuits EOR01 through EOR16 and a register, and the controller 210 sets logic inversion and logic non-inversion information in the register.

11th Embodiment

FIG. 26 is a block diagram illustrating a principal portion of an optical signal receiver according to an 11th embodiment of the present invention used in an optical communication system for transmitting DPSK (Differential Phase Shift Keying) optical signals. In FIG. 26, the same reference numbers are assigned to the same elements as those shown in FIG. 23.

In FIG. 26, the function of the logical inversion circuit 225 in the reception frame processing unit (framer-LSI) 209 shown in FIG. 23A is provided in the clock regenerator (43G CDR) 203.

The LOF/OOF detection signal (indicated by a dashed-line arrow from the reception frame processing unit 209 in FIG. 26) is input to the controller 210. In order for the LOF/OOF detection signal to disappear, the controller 210 inputs the logical inversion control signal (indicated as a dashed-line arrow) to the clock regenerator (43G CDR) 203 through the clock regenerator controller (CDR cont.) 205 to perform logical inversion operations to obtain the object reception state.

In addition, the controller 210 inputs a interferometer bias control signal to the front end (DPSK OR) 201 through the interferometer controller 202 to control the bias voltage or the temperature of the interferometer of the front end (DPSK OR) 201.

12th Embodiment

FIG. 27 is a block diagram illustrating a principal portion of an optical signal receiver according to a 12th embodiment of the present invention used in an optical communication system for transmitting DPSK (Differential Phase Shift Keying) optical signals. In FIG. 27, the same reference numbers are assigned to the same elements as those shown in FIG. 26.

In FIG. 27, the optical signal receiver in includes an optical coupler 250, a clock regenerator 251, and a clock regeneration controller 252.

The clock regenerator 251 and the clock regeneration controller 252 have the same structures and the same functions as those of the clock regenerator 51 and the clock regeneration controller 52 in FIG. 12. When a phase-modulated optical signal is intensity-modulated by an intensity modulator in accordance with a clock signal to transmit an IM-DQPSK optical signal, the received modulated optical signal is split by the optical coupler 250, and the split signals are input to the front end 201 (40G DPSK OR) and the clock regenerator 251, respectively. The clock regenerator 251 regenerates the clock signal CLK from the intensity-modulated received optical signal including a clock signal component, and the regenerated clock signal CLK is input to the de-serializer (DES) 208.

The front end 201, the de-serializer (DES) 208, and the reception frame processing unit (framer-LSI) 209 have the same structures and operate in the same way as those described in the previous embodiments.

The LOF/OOF detection signal (indicated by a dashed-line arrow from the reception frame processing unit 209 in FIG. 27) is input to the controller 210. In order for the LOF/OOF detection signal to disappear, the controller 210 inputs the logical inversion control signal (indicated as a dashed-line arrow) to the clock regenerator 251 through the clock regenerator controller 252 to performs logical inversion operations to obtain the object reception state.

In addition, the controller 210 inputs a interferometer bias control signal to the front end (DPSK OR) 201 through the interferometer controller 202 to control the bias voltage or the temperature of the interferometer of the front end (DPSK OR) 201 to obtain the object reception state.

While the invention has been described with reference to specific embodiments chosen for purpose of illustration, it should be apparent that the invention is not limited to these embodiments, but numerous modifications could be made thereto by those skilled in the art without departing from the basic concept and scope of the invention.

This patent application is based on Japanese priority patent applications No. 2005-054371 filed on February 28, 2005, and No. 2005-206467 filed on July 15, 2005, the entire contents of which are hereby incorporated by reference.

## Claims

1. A signal reception device for receiving and demodulating an optical signal modulated by a Differential Quadrature Phase Shift Keying, DQPSK, modulation scheme, said signal reception device comprising:

   a front end (1) including two delay interferometers and opto-electric conversion elements that receives the DQPSK optical signal and converts the DQPSK optical signal into an in-phase signal and quadrature signal;

a clock regenerator (3,4) that regenerates a clock signal based on the in-phase signal and the quadrature signal;
a multiplexer (6) that multiplexes the in phase signal and the quadrature signal output from the clock regenerator (3,4);
a reception frame processing unit (9) that detects frame synchronization based on the signal multiplexed by the multiplexer (6); and
a controller (10) that, based on a detection result from the reception frame processing unit (9) indicating an out-of-frame-synchronization state, controls logical inversion operations in the clock regenerator (3,4), controls a multiplexing timing in the multiplexer (6), and controls the delay interferometers in the front end (1).

**2.** The signal reception device as claimed in claim 1, wherein the reception frame processing unit (9) comprises:

a frame processor that performs a frame synchronization pull-in operation and a frame de-mapping operation;
a frame synchronization circuit including a plurality of frame synchronization units, each of said frame synchronization units receiving a synchronization bit string in the multiplexed signal and performing frame synchronization detections corresponding to respective combinations of plural of the synchronization bit strings; and
an identification section that identifies a signal reception state depending on which one of the frame synchronization units a detection signal is output from, and notifies the controller (10) of information of the signal reception state identification.

**3.** The signal reception device as claimed in claim 1, wherein the reception frame processing unit (9) comprises:

a frame processor that performs a frame synchronization pull-in operation and a frame de-mapping operation;
a frame synchronization circuit that detects a synchronization bit string in the multiplexed signal obtained by multiplexing the in-phase signal and the quadrature signal in the multiplexer (6), and performs frame synchronization detections;
a register that stores combinations of plural of the synchronization bit strings; and
an identification section that, based on the synchronization bit strings of the multiplexed signal and the synchronization bit strings stored in the register, identifies a signal reception state, and notifies the controller (10) of the signal reception state.

**4.** The signal reception device as claimed in claim 1,
wherein
the controller (10), based on the signal reception state identification information, determines whether a detected signal reception state is an object state, whether the detected signal reception state is a state convertible to the object state by the logical inversion control, or whether the detected signal reception state is a state convertible to the object state by the logical inversion control and the multiplexing timing control;
the controller (10) does not perform control operations when the detected signal reception state is the object state;
the controller (10) controls the clock regenerator (3,4) to perform the logical inversion control when the detected signal reception state is a state convertible to the object state by the logical inversion control; and
the controller (10) controls the clock regenerator (3,4) to perform the logical inversion control and controls the multiplexer (6) to perform the multiplexing timing control when the detected signal reception state is a state convertible to the object state by the logical inversion control and the multiplexing timing control.

**5.** The signal reception device as claimed in claim 1, further comprising:

an in-phase detector configured to detect whether an orthogonal phase relation holds based on exclusive OR logic between the in-phase signal and the quadrature signal input to the multiplexer (6); wherein
the controller (10) shifts a phase of the delay interferometers by $\pi/2$ or $-\pi/2$ based on detection results of the in-phase detector.

**6.** The signal reception device as claimed in claim 1, wherein the reception frame processing unit (9), comprises:

at least one of a logic inversion circuit that performs logic inversion of input data according to a logic inversion control signal from the controller (10) and a neighboring bit exchanging circuit that exchanges neighboring bits of the input data.

**7.** The signal reception device as claimed in claim 1, wherein according to a logic inversion control signal from the controller (10), the reception frame processing unit (9) performs logic inversion control on an in-phase signal component and an quadrature signal component output from the front end (1), independently.

**Patentansprüche**

1. Signalempfangsvorrichtung zum Empfangen und Demodulieren eines optischen Signals, moduliert durch eine Differenzphasenumtastung- bzw. Differential Quadrature Phase Shift Keying, DQPSK, Modulierungssystem, wobei die Signalempfangsvorrichtung umfasst:

   ein Frontend (1) mit zwei Verzögerungs-Interferometern und optoelektrischen Umwandlungselementen, die das optische DQPSK-Signal empfangen und das optische DQPSK-Signal in ein In-Phasen- und Quadratursignal wandelt;
   einen Takt-Wiedererzeuger (3, 4), der ein Taktsignal auf Grundlage des In-Phasen-Signal und des Quadratur-Signals wiedererzeugt;
   einen Multiplexer (6), der die In-Phasen-Signal- und die Quadratur-Signal-Ausgabe von dem Takt-Wiedererzeuger (3, 4) multiplext;
   eine Empfangsrahmen-Verarbeitungseinheit (9), die eine Rahmen-Synchronisation auf Grundlage der durch den Multiplexer (6) gemultiplexten Signals erfasst; und
   einen Kontroller (10), der, auf Grundlage eines Erfassungsresultats der Empfangsrahmen-Verarbeitungseinheit (9), das einen außerhalb eines Rahmens bzw. Out-of-Frame Synchronisationszustand anzeigt, logische Inversionsoperationen in dem Takt-Wiedererzeuger (3, 4) steuert, eine Multiplextaktung in dem Multiplexer (6) steuert, und die Verzögerungs-Interferometer in dem Frontend (1) steuert.

2. Signalempfangsvorrichtung nach Anspruch 1, wobei die Empfangsrahmen-Verarbeitungseinheit (9) umfasst:

   einen Rahmenprozessor, der eine Rahmen-Synchronisation-Pull-In-Operation und eine De-Mapping-Operation durchführt;
   einen Rahmen-Synchronisationsschaltung mit einer Vielzahl von Rahmen-Synchronisationseinheiten, wobei jede der Rahmen-Synchronisationseinheiten ein Synchronisations-Bitstring in dem gemultiplexten Signal empfängt und eine Rahmen-Synchronisationserfassung entsprechend jeweiliger Kombinationen der Vielzahl von Synchronisations-Bitstrings durchführt; und
   einen Identifikationsabschnitt, der einen Signalempfangszustand identifiziert, in Abhängigkeit davon, von welcher der Rahmen-Synchronisationseinheiten ein Erfassungssignal ausgegeben wird, und den Kontroller (10) über Informationen der Signalempfangszustandsidentifikation benachrichtigt.

3. Signalempfangsvorrichtung nach Anspruch 1, wobei die Empfangsrahmen-Verarbeitungseinheit (9) umfasst:

   einen Rahmenprozessor, der eine Rahmen-Synchronisation-Pull-In-Operation und eine De-Mapping-Operation durchführt;
   einen Rahmen-Synchronisationsschaltung, die einen Synchronisations-Bitstring in dem gemultiplexten Signal erfasst, das durch ein Multiplexen des In-Phasen-Signals und des Quadratur-Signals in dem Multiplexer (6) erhalten wird, und Rahmensynchronisationserfassungen durchführt;
   ein Register, das Kombinationen einer Vielzahl von Synchronisations-Bitstrings speichert; und
   einen Identifikationsabschnitt, der auf Grundlage der Synchronisations-Bitstrings des gemultiplexten Signals und der in dem Register gespeicherten Synchronisations-Bitstrings einen Signalempfangszustand identifiziert und den Kontroller (10) über den Signalempfangszustand benachrichtigt.

4. Signalempfangsvorrichtung nach Anspruch 1, wobei
   der Kontroller (10) auf Grundlage der Signalempfangszustand-Identifikationsinformation bestimmt, ob ein erfasster Signalempfangszustand ein Objektzustand ist, ob der erfasste Signalempfangszustand ein Zustand ist, der durch die Logische-Umwandlung-Steuerung in den Objektzustand umwandelbar ist, oder ob der erfasset Signalempfangszustand ein Zustand ist, der durch die Logische-Umwandlung-Steuerung und die Multiplextaktsteuerung in den Objektzustand umwandelbar ist;
   der Kontroller (10) keine Steueroperationen durchführt, wenn der erfasste Signalempfangszustand der Objektzustand ist;
   der Kontroller (10) den Takt-Wiedererzeuger (3, 4) steuert, um die Logische-Umwandlung-Steuerung durchzuführen, wenn der erfasste Signalempfangszustand ein Zustand ist, der durch die Logische-Umwandlung-Steuerung in den Objektzustand umwandelbar ist; und

der Kontroller (10) den Takt-Wiedererzeuger (3, 4) steuert, um die Logische-Umwandlung-Steuerung durchzuführen, und den Multiplexer (6) steuert, um die Multiplextaktsteuerung durchzuführen, wenn der erfasste Signalempfangszustand ein Zustand ist, der durch die Logische-Umwandlung-Steuerung und die Multiplextaktsteuerung in den Objektzustand umwandelbar ist.

**5.** Signalempfangsvorrichtung nach Anspruch 1, ferner mit:

einer In-Phasen-Erfassungseinrichtung, die konfiguriert ist zum Erfassen, ob eine orthogonale Phasenbeziehung vorliegt, auf Grundlage einer exklusiven OR-Logik zwischen der In-Phasen-Signal- und der Quadratur-Signal-Eingabe in den Multiplexer (6); wobei
der Kontroller (10) eine Phase der Verzögerungs-Interferometer um $\pi/2$ oder $-\pi/2$ verschiebt, auf Grundlage von Erfassungsresultaten der In-Phasen-Erfassungseinrichtung.

**6.** Signalempfangsvorrichtung nach Anspruch 1, wobei die Empfangsrahmen-Verarbeitungseinheit (9) umfasst:

zumindest eines von einer Logische-Umwandlung-Schaltung, die eine logische Umwandlung der Eingabedaten entsprechend eines Logische-Umwandlung-Steuersignals von dem Kontroller (10) durchführt, und einer Nachbar-Bit-Austausch-Schaltung die benachbarte Bits der Eingabedaten austauscht.

**7.** Signalempfangsvorrichtung nach Anspruch 1, wobei entsprechend eines Logische-Umwandlung-Steuersignals von dem Kontroller (10) die Empfangsrahmen-Verarbeitungseinheit (9) eine Logische-Umwandlung-Steuerung in einer In-Phasen-Signalkomponenten- und einer Quadratur-Signalkomponenten-Ausgabe von dem Frontend (1) unabhängig durchführt.

## Revendications

**1.** Dispositif de réception de signal pour recevoir et démoduler un signal optique modulé par une méthode de modulation par déplacement de phase en quadrature différentiel, DQPSK, ledit dispositif de réception de signal comprenant :

une extrémité frontale (1) comprenant deux interféromètres à retard et des éléments de conversion optoélectrique qui reçoit le signal optique DQPSK et convertit le signal optique DQPSK en un signal en phase et un signal en quadrature ;
un régénérateur d'horloge (3, 4) qui régénère un signal d'horloge sur la base du signal en phase et du signal en quadrature ;
un multiplexeur (6) qui multiplexe le signal en phase et le signal en quadrature délivrés par le régénérateur d'horloge (3, 4) ;
une unité de traitement de trame de réception (9) qui détecte une synchronisation de trame sur la base du signal multiplexé par le multiplexeur (6) ; et
un contrôleur (10) qui, sur la base d'un résultat de détection provenant de l'unité de traitement de trame de réception (9) indiquant un état de synchronisation hors trame, commande les opérations d'inversion logique dans le régénérateur d'horloge (3, 4), commande une synchronisation de multiplexage dans le multiplexeur (6) et commande les interféromètres à retard dans l'extrémité frontale (1).

**2.** Dispositif de réception de signal selon la revendication 1, dans lequel l'unité de traitement de trame de réception (9) comprend :

un processeur de trame qui effectue une opération d'accrochage de synchronisation de trame et une opération de démappage de trame ;
un circuit de synchronisation de trame comprenant une pluralité d'unités de synchronisation de trame, chacune desdites unités de synchronisation de trame recevant une chaîne de bits de synchronisation dans le signal multiplexé et effectuant des détections de synchronisation de trame correspondant à des combinaisons respectives de plusieurs des chaînes de bits de synchronisation ; et
une section d'identification qui identifie un état de réception de signal en fonction de l'unité parmi les unités de synchronisation de trame par laquelle un signal de détection est délivré, et informe le contrôleur (10) des informations de l'identification d'état de réception de signal.

**3.** Dispositif de réception de signal selon la revendication 1, dans lequel l'unité de traitement de trame de réception (9) comprend :

un processeur de trame qui effectue une opération d'accrochage de synchronisation de trame et une opération de démappage de trame ;
un circuit de synchronisation de trame qui détecte une chaîne de bits de synchronisation dans le signal multiplexé obtenu en multiplexant le signal en phase et le signal en quadrature dans le multiplexeur (6), et effectue des détections de synchronisation de trame ;
un registre qui mémorise des combinaisons de plusieurs des chaînes de bits de synchronisation ; et
une section d'identification qui, sur la base des chaînes de bits de synchronisation du signal multiplexé et des chaînes de bits de synchronisation mémorisées dans le registre, identifie un état de réception de signal, et informe le contrôleur (10) de l'état de réception de signal.

**4.** Dispositif de réception de signal selon la revendication 1, dans lequel
le contrôleur (10), sur la base des informations d'identification d'état de réception de signal, détermine si un état de réception de signal détecté est un état d'objet, si l'état de réception de signal détecté est un état convertible en l'état d'objet par la commande d'inversion logique, ou si l'état de réception de signal détecté est un état convertible en l'état d'objet par la commande d'inversion logique et la commande de synchronisation de multiplexage ;
le contrôleur (10) n'effectue pas d'opérations de commande lorsque l'état de réception de signal détecté est l'état d'objet ;
le contrôleur (10) commande le régénérateur d'horloge (3, 4) pour effectuer la commande d'inversion logique lorsque l'état de réception de signal détecté est un état convertible en l'état d'objet par la commande d'inversion logique ; et
le contrôleur (10) commande le régénérateur d'horloge (3, 4) pour effectuer la commande d'inversion logique et commande le multiplexeur (6) pour effectuer la commande de synchronisation de multiplexage lorsque l'état de réception de signal détecté est un état convertible en l'état d'objet par la commande d'inversion logique et la commande de synchronisation de multiplexage.

**5.** Dispositif de réception de signal selon la revendication 1, comprenant en outre :

un détecteur en phase configuré pour détecter si une relation de phases orthogonales est vraie sur la base d'une logique OU exclusif entre le signal en phase et le signal en quadrature appliqués au multiplexeur (6) ; dans lequel
le contrôleur (10) décale une phase des interféromètres à retard de $\pi/2$ ou $-\pi/2$ sur la base des résultats de détection du détecteur en phase.

**6.** Dispositif de réception de signal selon la revendication 1, dans lequel l'unité de traitement de trame de réception (9) comprend :

au moins l'un d'un circuit d'inversion logique qui effectue une inversion logique des données d'entrée conformément à un signal de commande d'inversion logique provenant du contrôleur (10) et d'un circuit d'échange de bits voisins qui échange des bits voisins des données d'entrée.

**7.** Dispositif de réception de signal selon la revendication 1, dans lequel, conformément à un signal de commande d'inversion logique provenant du contrôleur (10), l'unité de traitement de trame de réception (9) applique une commande d'inversion logique à une composante de signal en phase et à une composante de signal en quadrature délivrées par l'extrémité frontale (1), de manière indépendante.

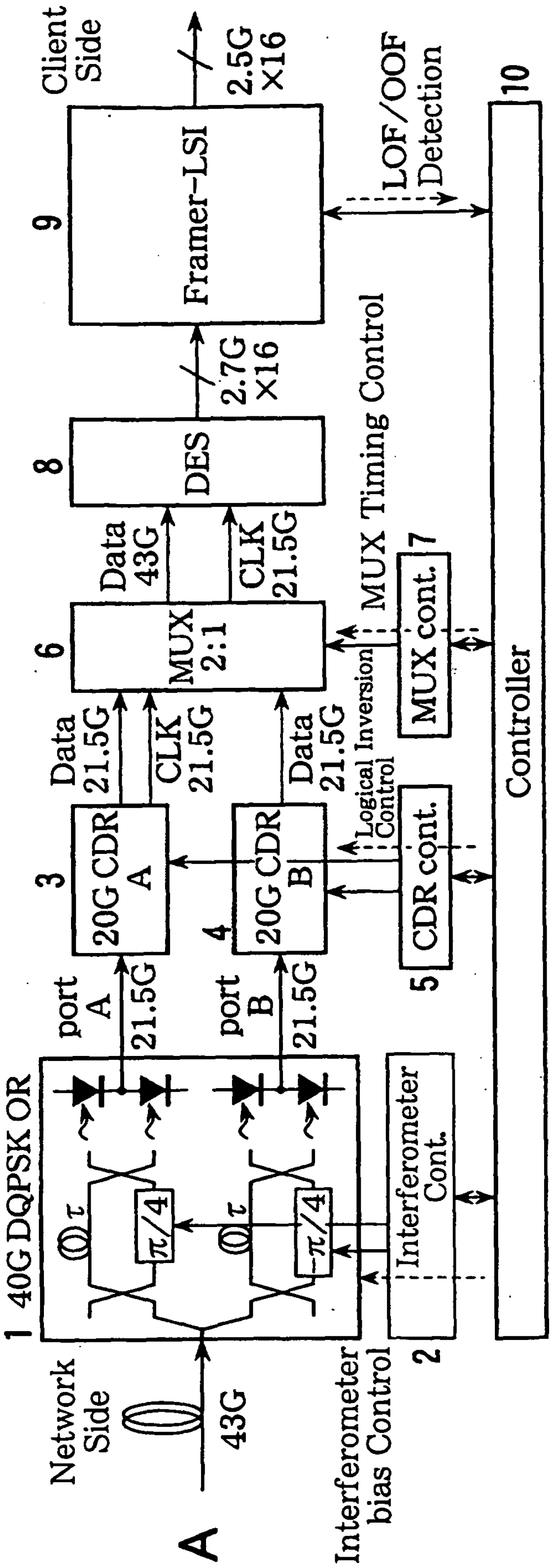


FIG.1A

DQPSK signal reception state

| | | Port A | | | |
|---|---|---|---|---|---|
| | | I | Ī | Q̄ | Q |
| Port B | I | × | × | ○ | ◎ |
| | Ī | × | × | ○ | ○ |
| | Q̄ | △ | △ | × | × |
| | Q | △ | △ | × | × |

FIG.1B

FIG.2A

Usual State

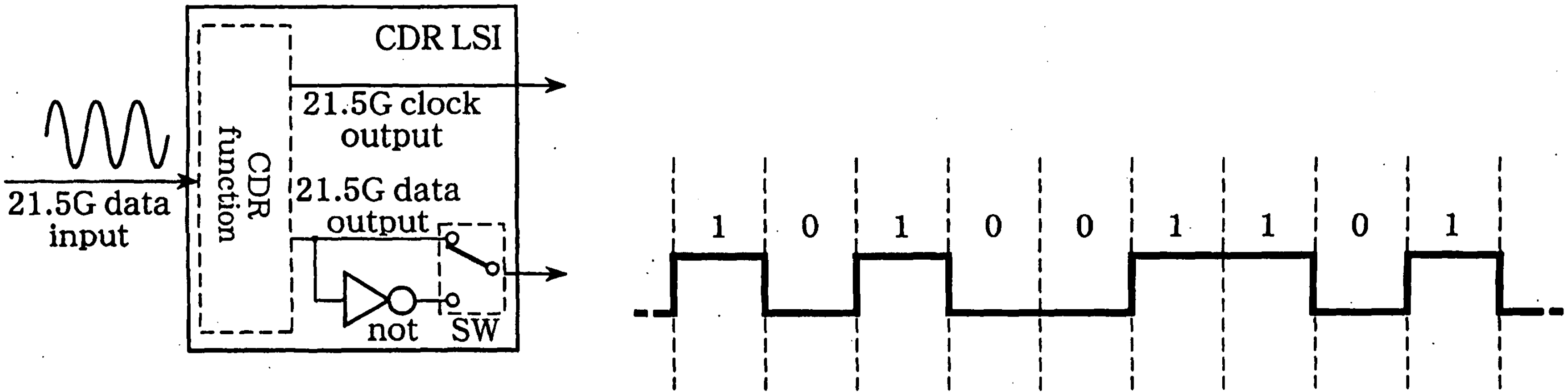


FIG.2B

Logical Inversion State

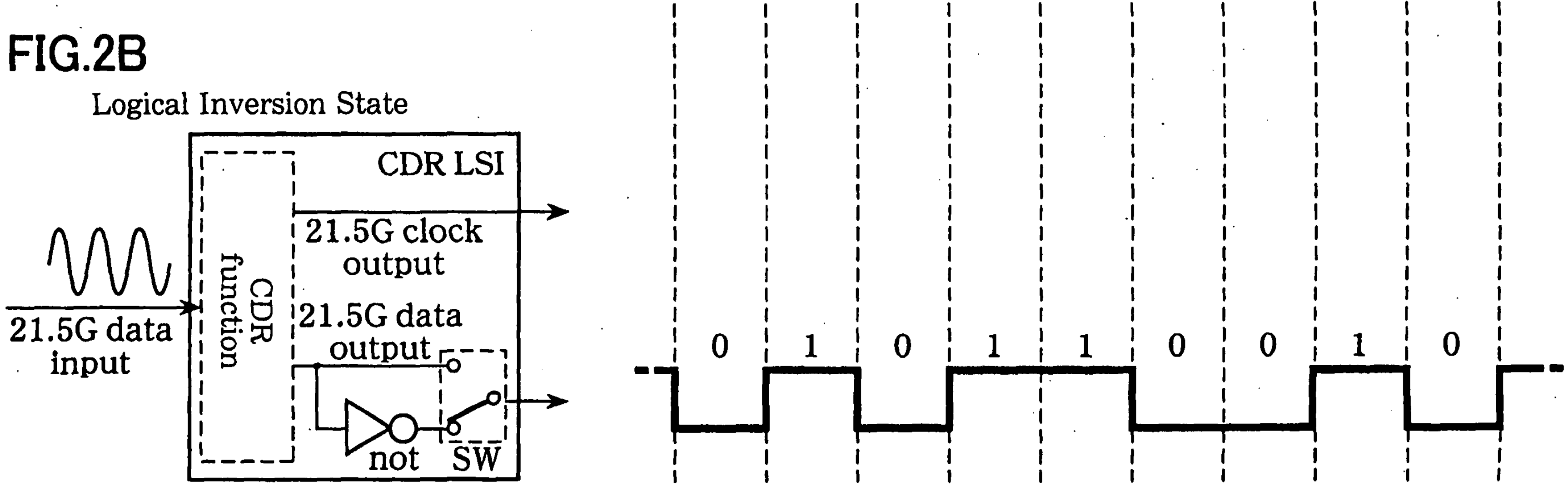

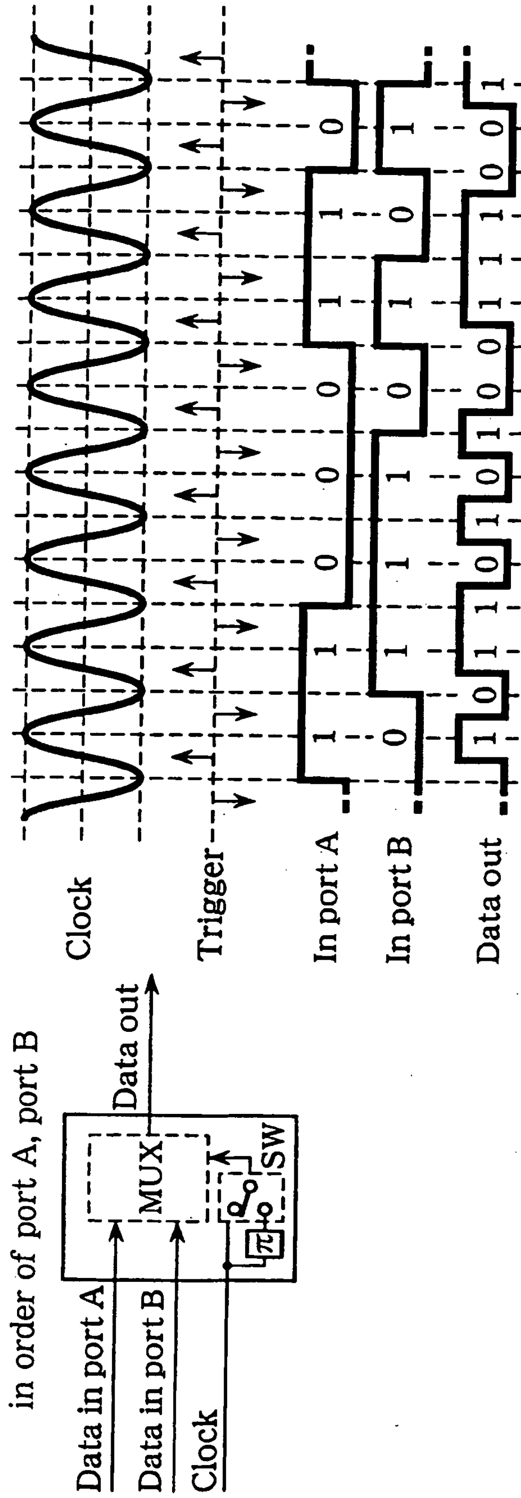
in order of port A, port B
Data in port A
Data in port B
Clock
MUX
SW
Data out
Clock
Trigger
In port A
In port B
Data out

FIG.3A

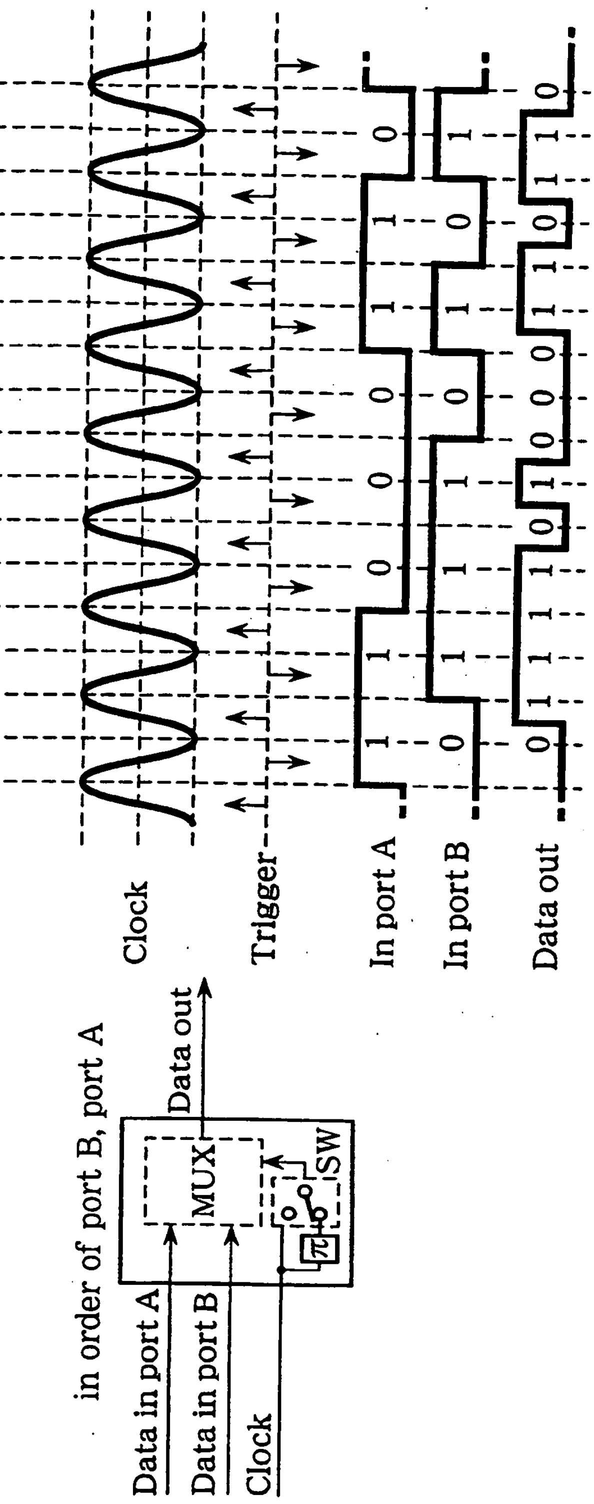
in order of port B, port A
Data in port A
Data in port B
Clock
MUX
SW
Data out
Clock
Trigger
In port A
In port B
Data out

FIG.3B

FIG.4

9

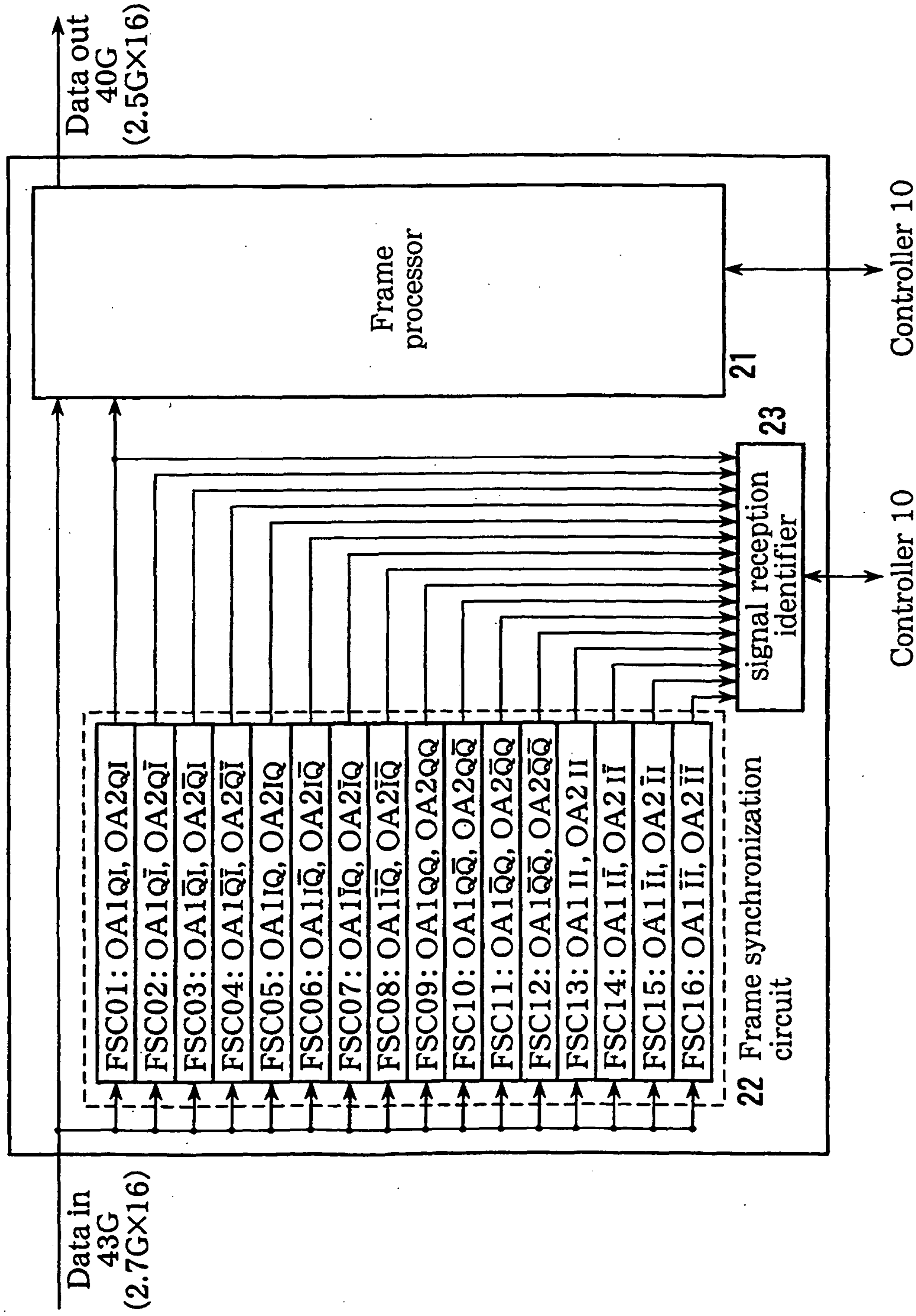
Data out
40G
(2.5G×16)
Frame processor
21
Controller 10
23
signal reception identifier
Controller 10
FSC01: OA1QI, OA2QI
FSC02: OA1QĪ, OA2QĪ
FSC03: OA1Q̄I, OA2Q̄I
FSC04: OA1Q̄Ī, OA2Q̄Ī
FSC05: OA1IQ, OA2IQ
FSC06: OA1IQ̄, OA2IQ̄
FSC07: OA1ĪQ, OA2ĪQ
FSC08: OA1ĪQ̄, OA2ĪQ̄
FSC09: OA1QQ, OA2QQ
FSC10: OA1QQ̄, OA2QQ̄
FSC11: OA1Q̄Q, OA2Q̄Q
FSC12: OA1Q̄Q̄, OA2Q̄Q̄
FSC13: OA1 II, OA2 II
FSC14: OA1 IĪ, OA2 IĪ
FSC15: OA1 ĪI, OA2 ĪI
FSC16: OA1 ĪĪ, OA2 ĪĪ
22 Frame synchronization circuit
Data in
43G
(2.7G×16)

# FIG.5

| | | Port A | | | |
|---|---|---|---|---|---|
| | | I | $\bar{I}$ | $\bar{Q}$ | Q |
| Port B | I | ×<br>$OA1_{II}$={"1111 1100"}<br>$OA2_{II}$={"0000 0000"} | ×<br>$OA1_{\bar{I}I}$={"0101 0110"}<br>$OA2_{\bar{I}I}$={"1010 1010"} | ○<br>$OA1_{\bar{Q}I}$={"0101 1100"}<br>$OA2_{\bar{Q}I}$={"1000 0010"} | ◎<br>$OA1_{QI}$={"1111 0110"}<br>$OA2_{QI}$={"0010 1000"} |
| | $\bar{I}$ | ×<br>$OA1_{I\bar{I}}$={"1010 1001"}<br>$OA2_{I\bar{I}}$={"0101 0101"} | ×<br>$OA1_{\bar{I}\bar{I}}$={"0000 0011"}<br>$OA2_{\bar{I}\bar{I}}$={"1111 1111"} | ○<br>$OA1_{\bar{Q}\bar{I}}$={"0000 1001"}<br>$OA2_{\bar{Q}\bar{I}}$={"1101 0111"} | ○<br>$OA1_{Q\bar{I}}$={"1010 0011"}<br>$OA2_{Q\bar{I}}$={"0111 1101"} |
| | $\bar{Q}$ | △<br>$OA1_{I\bar{Q}}$={"1010 1100"}<br>$OA2_{I\bar{Q}}$={"0100 0001"} | △<br>$OA1_{\bar{I}\bar{Q}}$={"0000 0110"}<br>$OA2_{\bar{I}\bar{Q}}$={"1110 1011"} | ×<br>$OA1_{\bar{Q}\bar{Q}}$={"0000 1100"}<br>$OA2_{\bar{Q}\bar{Q}}$={"1100 0011"} | ×<br>$OA1_{Q\bar{Q}}$={"1010 0110"}<br>$OA2_{Q\bar{Q}}$={"0110 1001"} |
| | Q | △<br>$OA1_{IQ}$={"1111 1100"}<br>$OA2_{IQ}$={"0001 0100"} | △<br>$OA1_{\bar{I}Q}$={"0101 0011"}<br>$OA2_{\bar{I}Q}$={"1011 1110"} | ×<br>$OA1_{\bar{Q}Q}$={"0101 0110"}<br>$OA2_{\bar{Q}Q}$={"0110 1001"} | ×<br>$OA1_{QQ}$={"1111 0011"}<br>$OA2_{QQ}$={"0011 1100"} |

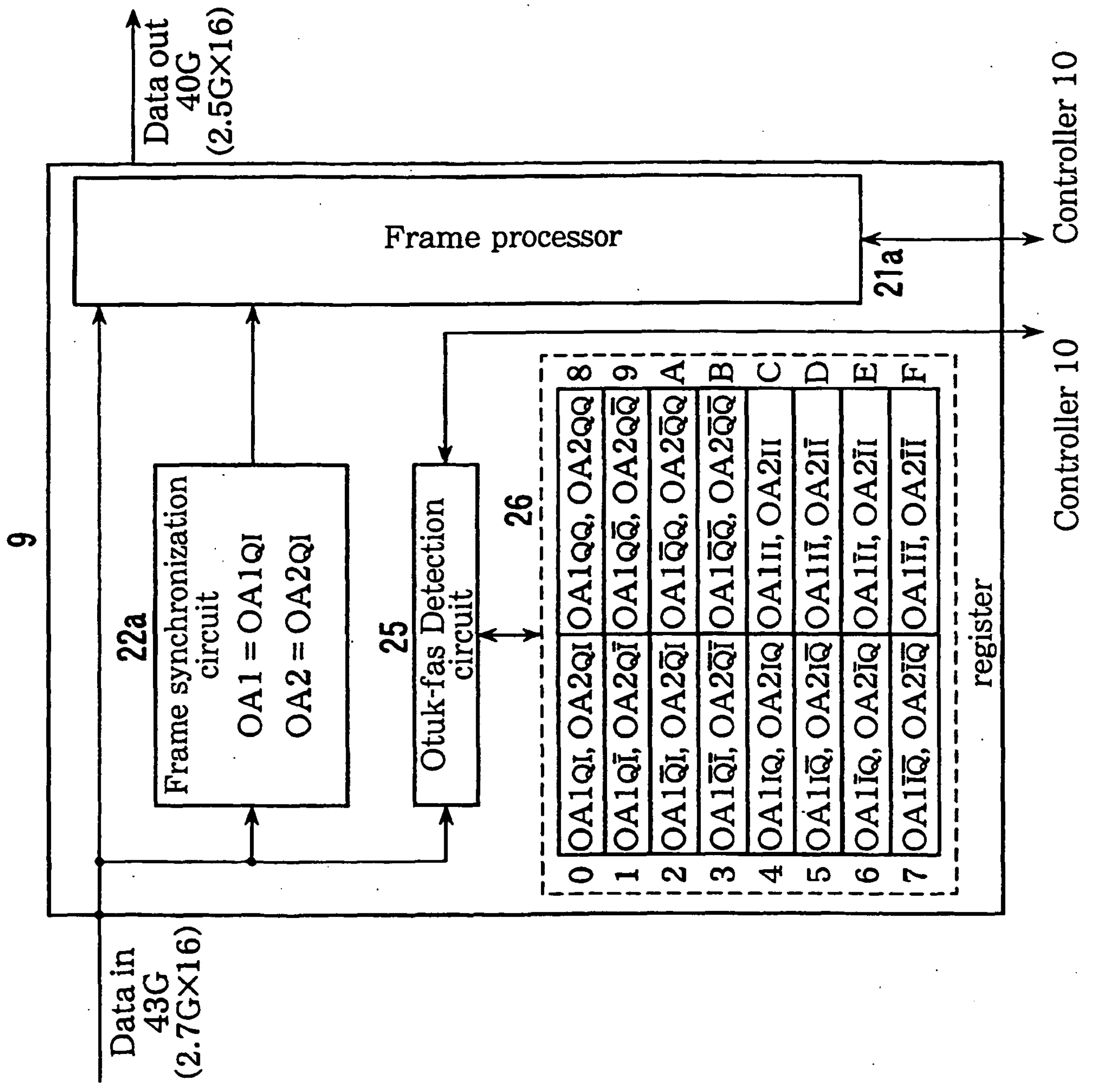
9
Data in 43G (2.7G×16)
Data out 40G (2.5G×16)
Frame processor
21a
Controller 10
Controller 10
22a
Frame synchronization circuit
OA1 = OA1QI
OA2 = OA2QI
25
Otuk-fas Detection circuit
26
register
0 OA1QI, OA2QI | OA1QQ, OA2QQ 8
1 $OA1Q\bar{I}$, $OA2Q\bar{I}$ | $OA1Q\bar{Q}$, $OA2Q\bar{Q}$ 9
2 $OA1\bar{Q}I$, $OA2\bar{Q}I$ | $OA1\bar{Q}Q$, $OA2\bar{Q}Q$ A
3 $OA1\bar{Q}\bar{I}$, $OA2\bar{Q}\bar{I}$ | $OA1\bar{Q}\bar{Q}$, $OA2\bar{Q}\bar{Q}$ B
4 OA1IQ, OA2IQ | OA1II, OA2II C
5 $OA1I\bar{Q}$, $OA2I\bar{Q}$ | $OA1I\bar{I}$, $OA2I\bar{I}$ D
6 $OA1\bar{I}Q$, $OA2\bar{I}Q$ | $OA1\bar{I}I$, $OA2\bar{I}I$ E
7 $OA1\bar{I}\bar{Q}$, $OA2\bar{I}\bar{Q}$ | $OA1\bar{I}\bar{I}$, $OA2\bar{I}\bar{I}$ F

FIG.6

FIG.7

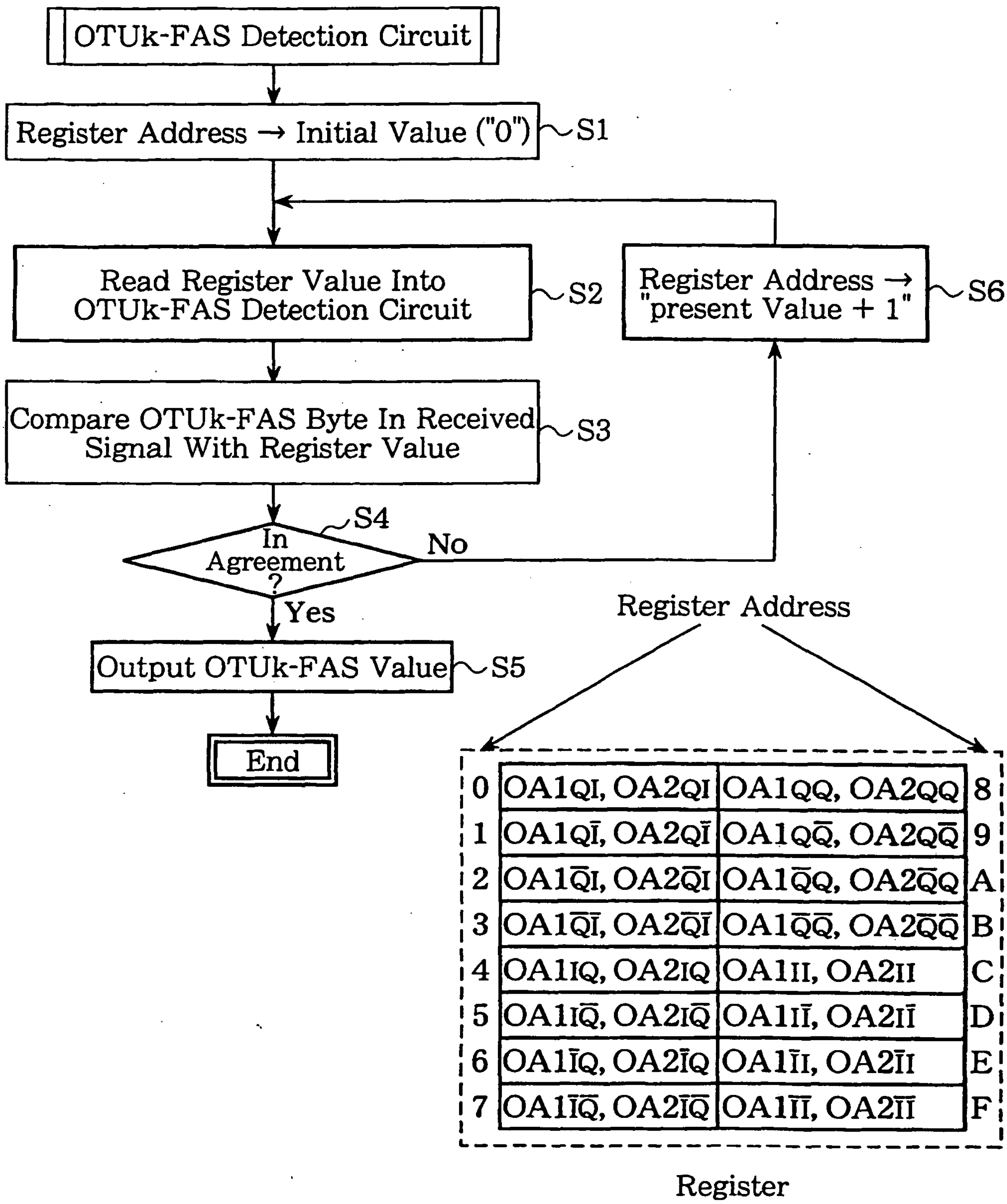
OTUk-FAS Detection Circuit
Register Address → Initial Value ("0")
S1
Read Register Value Into OTUk-FAS Detection Circuit
S2
Register Address → "present Value + 1"
S6
Compare OTUk-FAS Byte In Received Signal With Register Value
S3
S4
In Agreement ?
No
Yes
Output OTUk-FAS Value
S5
End
Register Address
0 OA1QI, OA2QI
1 OA1Q$\bar{I}$, OA2Q$\bar{I}$
2 OA1$\bar{Q}$I, OA2$\bar{Q}$I
3 OA1$\bar{Q}\bar{I}$, OA2$\bar{Q}\bar{I}$
4 OA1IQ, OA2IQ
5 OA1I$\bar{Q}$, OA2I$\bar{Q}$
6 OA1$\bar{I}$Q, OA2$\bar{I}$Q
7 OA1$\bar{I}\bar{Q}$, OA2$\bar{I}\bar{Q}$
8 OA1QQ, OA2QQ
9 OA1Q$\bar{Q}$, OA2Q$\bar{Q}$
A OA1$\bar{Q}$Q, OA2$\bar{Q}$Q
B OA1$\bar{Q}\bar{Q}$, OA2$\bar{Q}\bar{Q}$
C OA1II, OA2II
D OA1I$\bar{I}$, OA2I$\bar{I}$
E OA1$\bar{I}$I, OA2$\bar{I}$I
F OA1$\bar{I}\bar{I}$, OA2$\bar{I}\bar{I}$
Register

FIG.8A

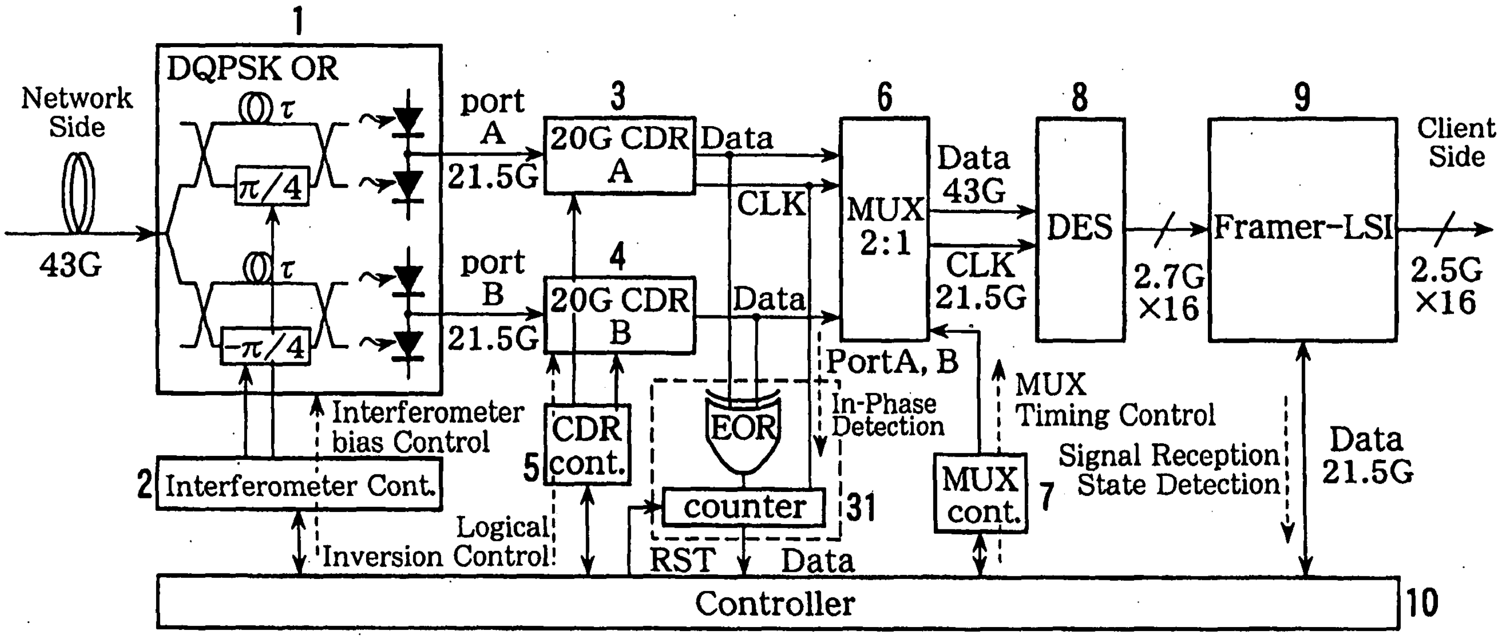


FIG.8B

DQPSK signal reception state

| | | Port A | | | |
|---|---|---|---|---|---|
| | | I | $\bar{I}$ | $\bar{Q}$ | Q |
| Port B | I | × | × | ○ | ◎ |
| | $\bar{I}$ | × | × | ○ | ○ |
| | $\bar{Q}$ | △ | △ | × | × |
| | Q | △ | △ | × | × |

FIG.9A

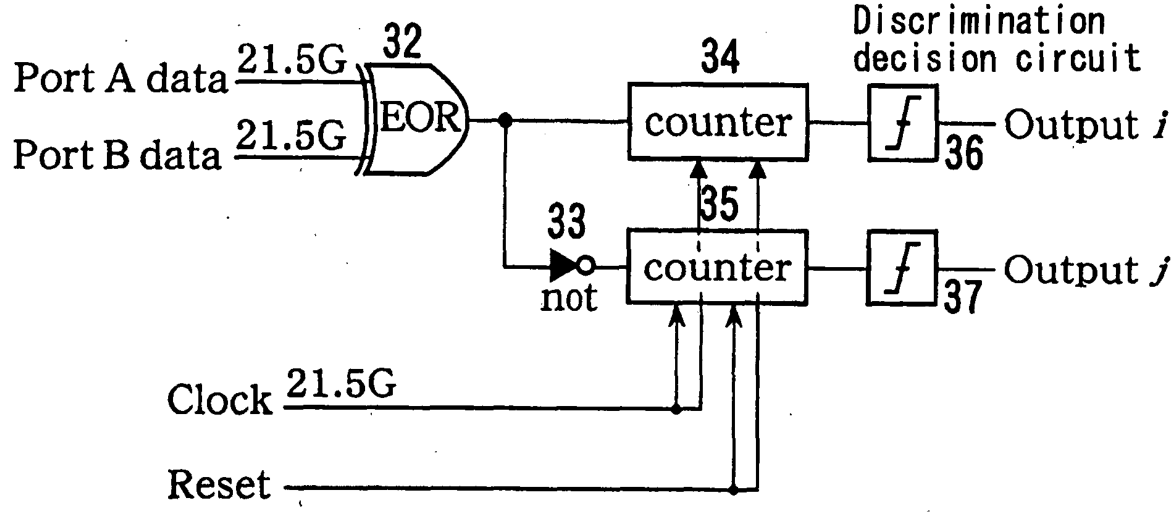


FIG.9B

States Of Port A, B

| $i$ | $j$ | State *(Port A, POrt B)* |
|---|---|---|
| *L* | *L* | Undetermined |
| *L* | *H* | (I, I), ($\bar{I}$, $\bar{I}$), (Q, Q), (Q, $\bar{Q}$) |
| *H* | *L* | ($\bar{I}$, I), (I, $\bar{I}$), ($\bar{Q}$, Q), (Q, $\bar{Q}$) |
| *H* | *H* | Undetermined |

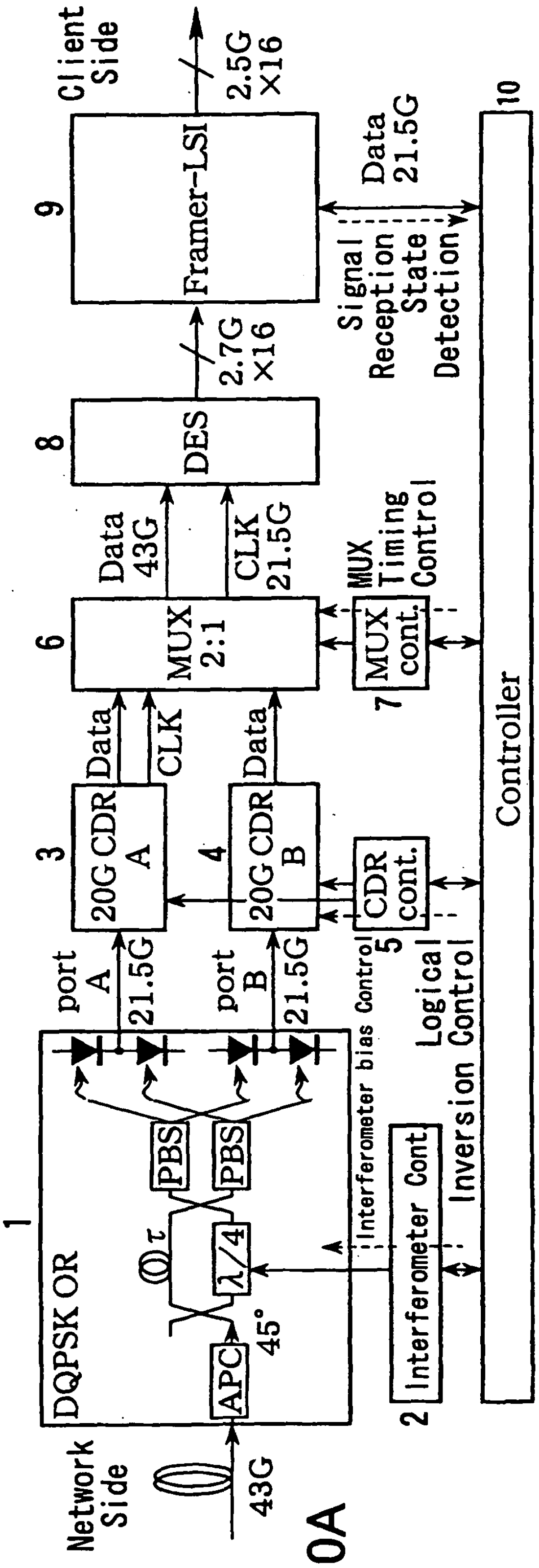


FIG.10A

DQPSK signal reception state

| | | Port A | | | |
|---|---|---|---|---|---|
| | | I | Ī | Q̄ | Q |
| Port B | I | --- | --- | --- | ◎ |
| | Ī | --- | --- | ○ | --- |
| | Q̄ | --- | △ | --- | --- |
| | Q | △ | --- | --- | --- |

FIG.10B

FIG.11

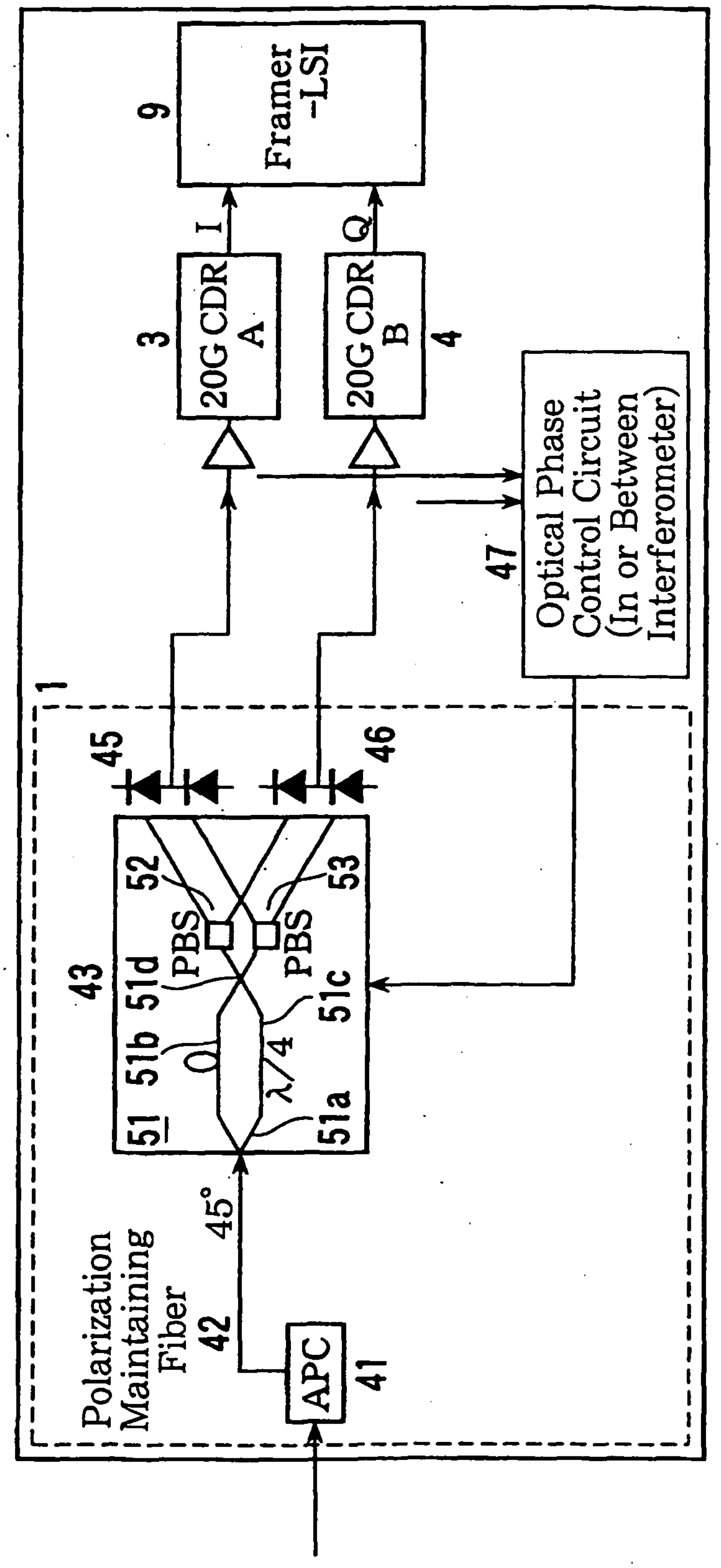
9
Framer
-LSI
3
20G CDR
A
4
20G CDR
B
I
Q
47
Optical Phase
Control Circuit
(In or Between
Interferometer)
1
45
46
43
51
51a
51b
51c
51d
52
53
PBS
PBS
λ/4
45°
Polarization
Maintaining
Fiber
42
APC
41

FIG.12

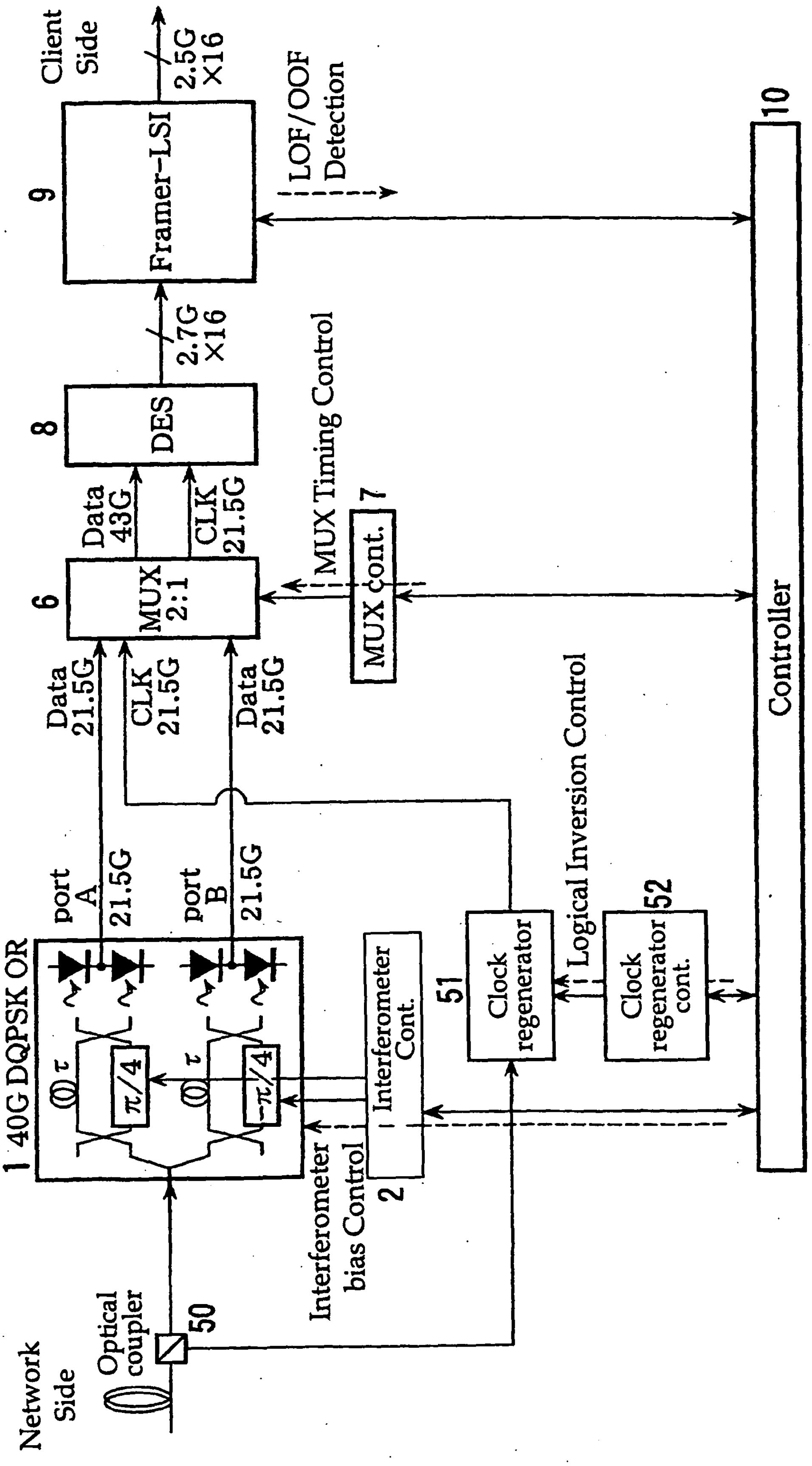
Network Side
Optical coupler
50
1 40G DQPSK OR
τ
π/4
-π/4
port A
21.5G
port B
21.5G
Interferometer bias Control
2
Interferometer Cont.
51
Clock regenerator
52
Clock regenerator cont.
Logical Inversion Control
Data 21.5G
CLK 21.5G
Data 21.5G
6
MUX 2:1
7
MUX cont.
MUX Timing Control
Data 43G
CLK 21.5G
8
DES
2.7G ×16
9
Framer-LSI
LOF/OOF Detection
2.5G ×16
Client Side
10
Controller

FIG.13A

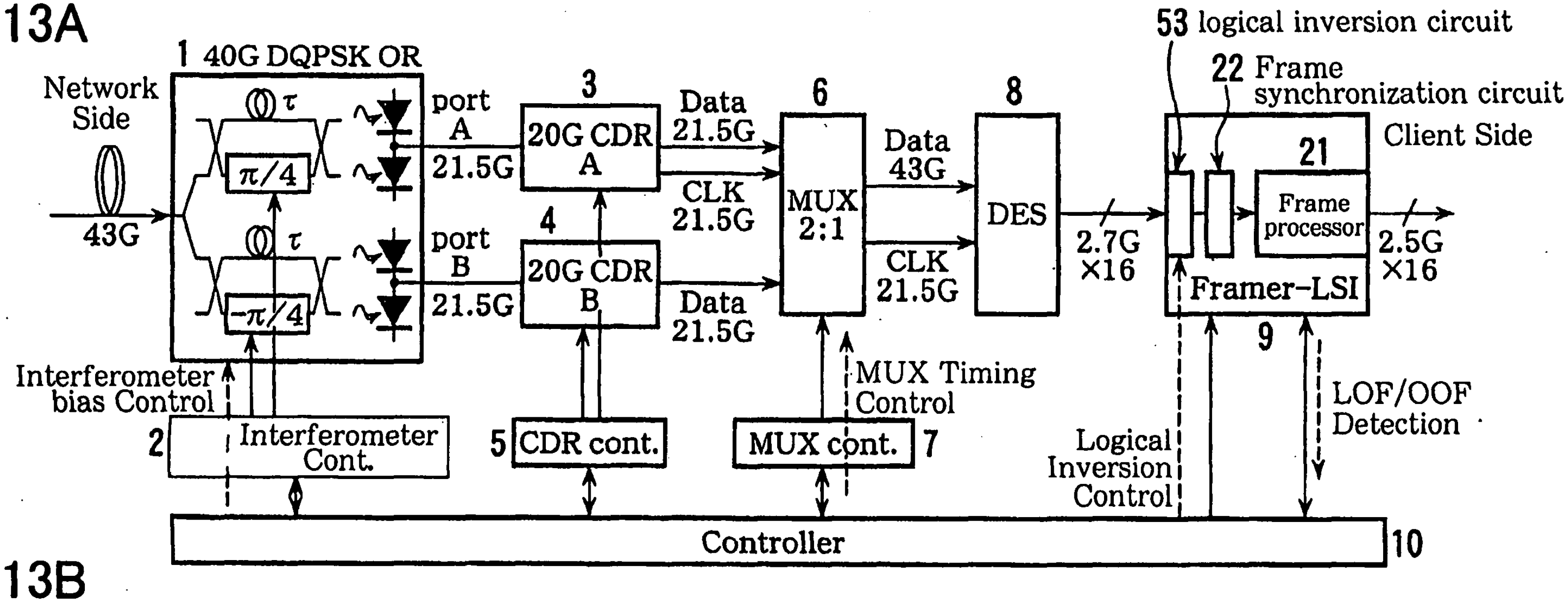


FIG.13B

DQPSK signal reception state

| | | Port A | | | |
|---|---|---|---|---|---|
| | | I | $\overline{I}$ | $\overline{Q}$ | Q |
| Port B | I | × | × | ○ | ◎ |
| | $\overline{I}$ | × | × | ○ | ○ |
| | $\overline{Q}$ | △ | △ | × | × |
| | Q | △ | △ | × | × |

FIG.14A

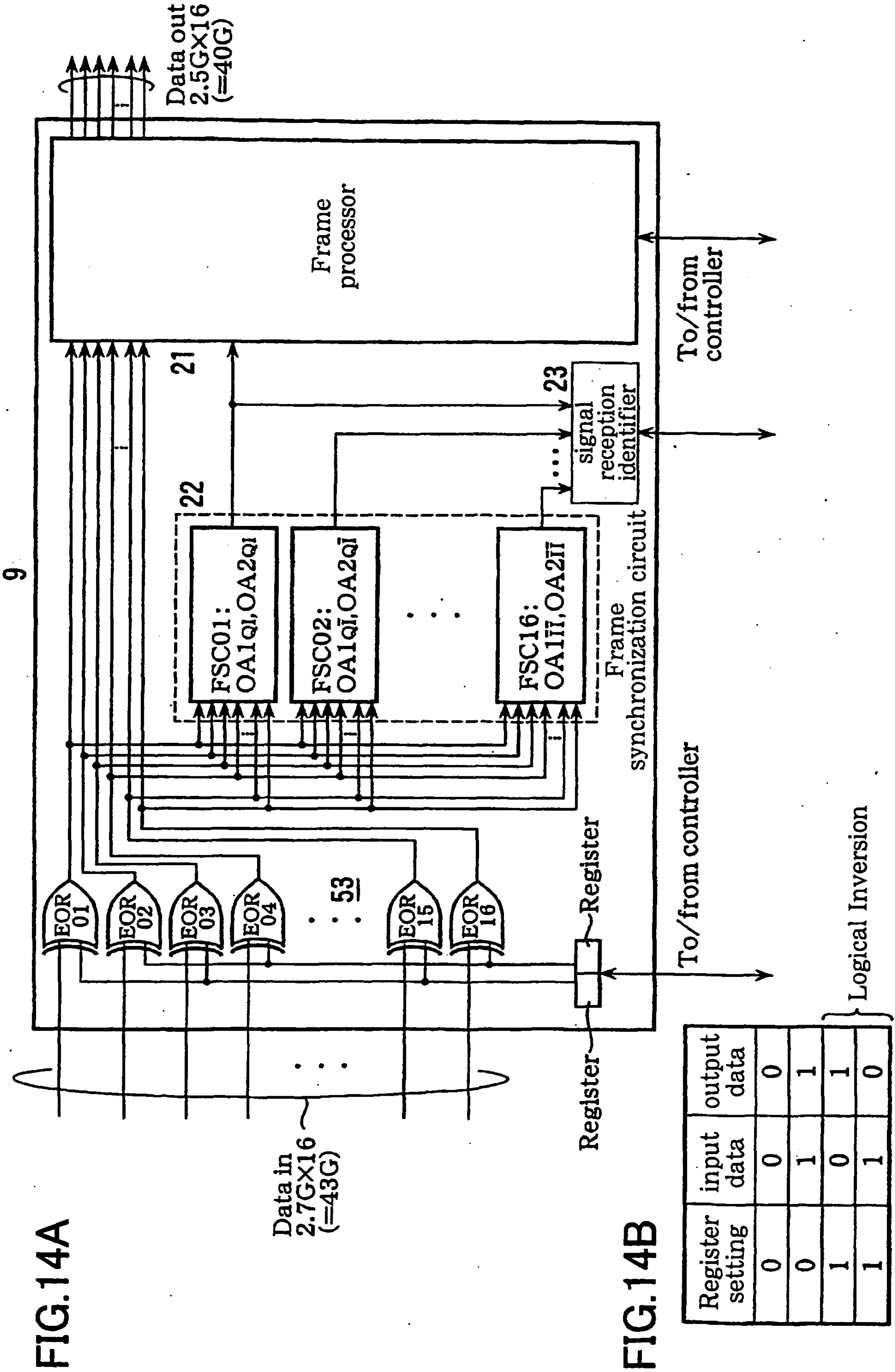


FIG.14B

| Register setting | input data | output data | |
|---|---|---|---|
| 0 | 0 | 0 | |
| 0 | 1 | 1 | |
| 1 | 0 | 1 | Logical Inversion |
| 1 | 1 | 0 | |

FIG.15

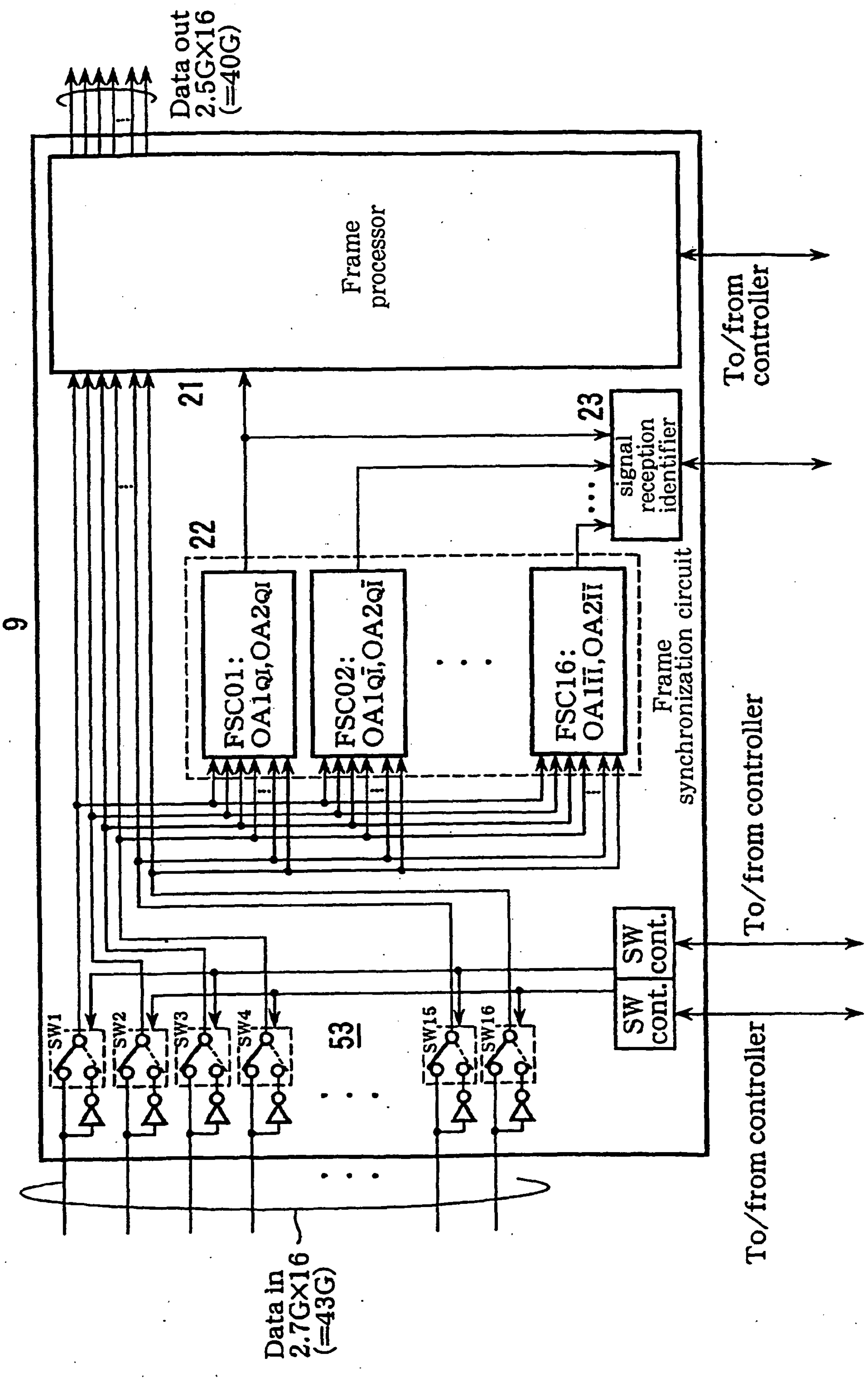
9
Data out
2.5G×16
(=40G)
Frame
processor
21
To/from
controller
23
signal
reception
identifier
22
FSC01:
OA1QI,OA2QI
FSC02:
OA1QĪ,OA2QĪ
FSC16:
OA1ĪĪ,OA2ĪĪ
Frame
synchronization circuit
To/from controller
SW
cont.
SW
cont.
SW1
SW2
SW3
SW4
53
SW15
SW16
To/from controller
Data in
2.7G×16
(=43G)

FIG.16

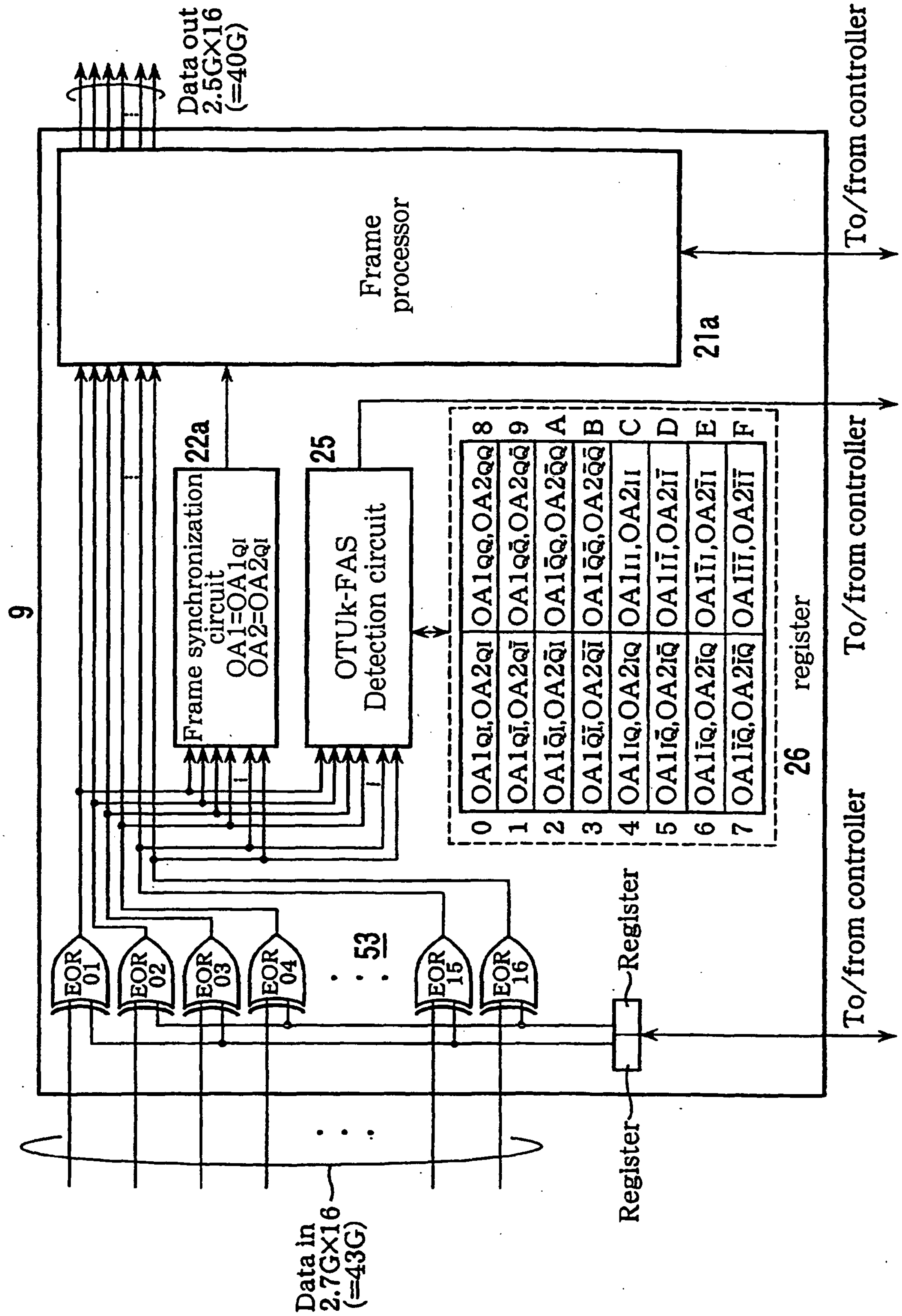
9
Data out
2.5G×16
(=40G)
Frame processor
21a
To/from controller
Frame synchronization circuit
OA1=OA1QI
OA2=OA2QI
22a
OTUk-FAS Detection circuit
25
register
26
EOR 01
EOR 02
EOR 03
EOR 04
53
EOR 15
EOR 16
Register
Data in
2.7G×16
(=43G)

FIG.17

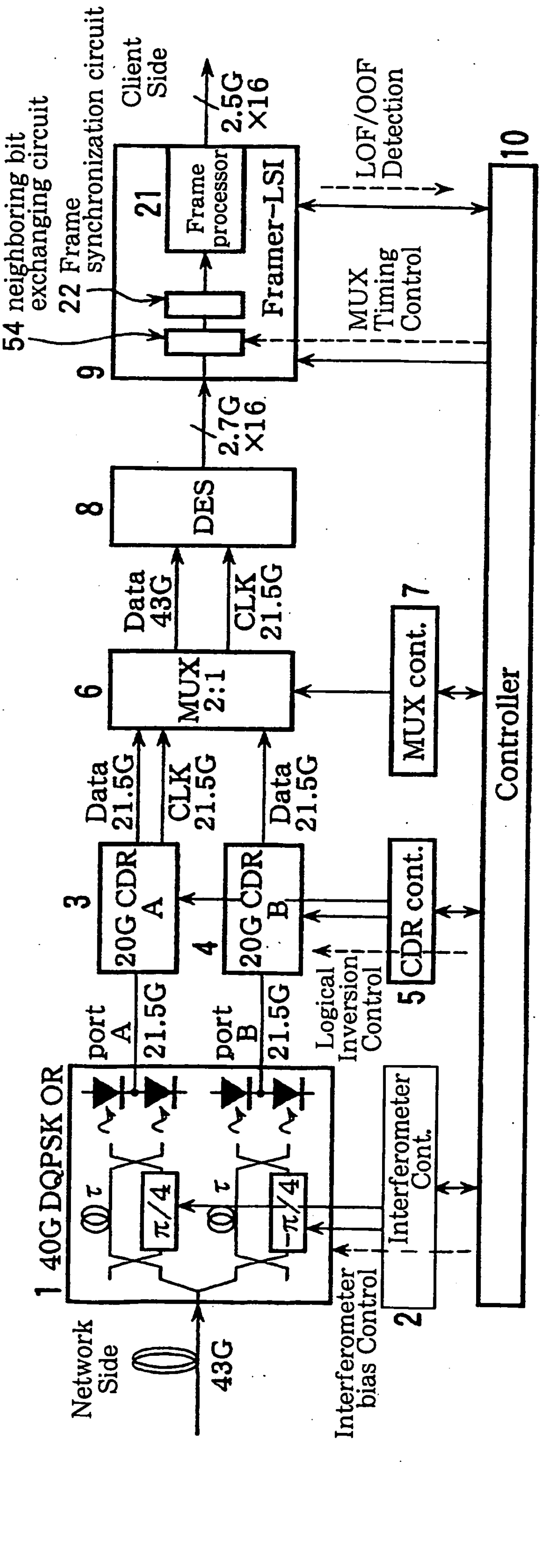
Network Side
43G
1 40G DQPSK OR
τ
π/4
-π/4
port A
21.5G
port B
21.5G
Interferometer bias Control
2 Interferometer Cont.
3 20G CDR A
4 20G CDR B
Logical Inversion Control
5 CDR cont.
Data 21.5G
CLK 21.5G
Data 21.5G
6 MUX 2:1
7 MUX cont.
Data 43G
CLK 21.5G
8 DES
2.7G ×16
9 Framer-LSI
54 neighboring bit exchanging circuit
22 Frame synchronization circuit
21 Frame processor
2.5G ×16
Client Side
MUX Timing Control
LOF/OOF Detection
Controller
10

FIG.18

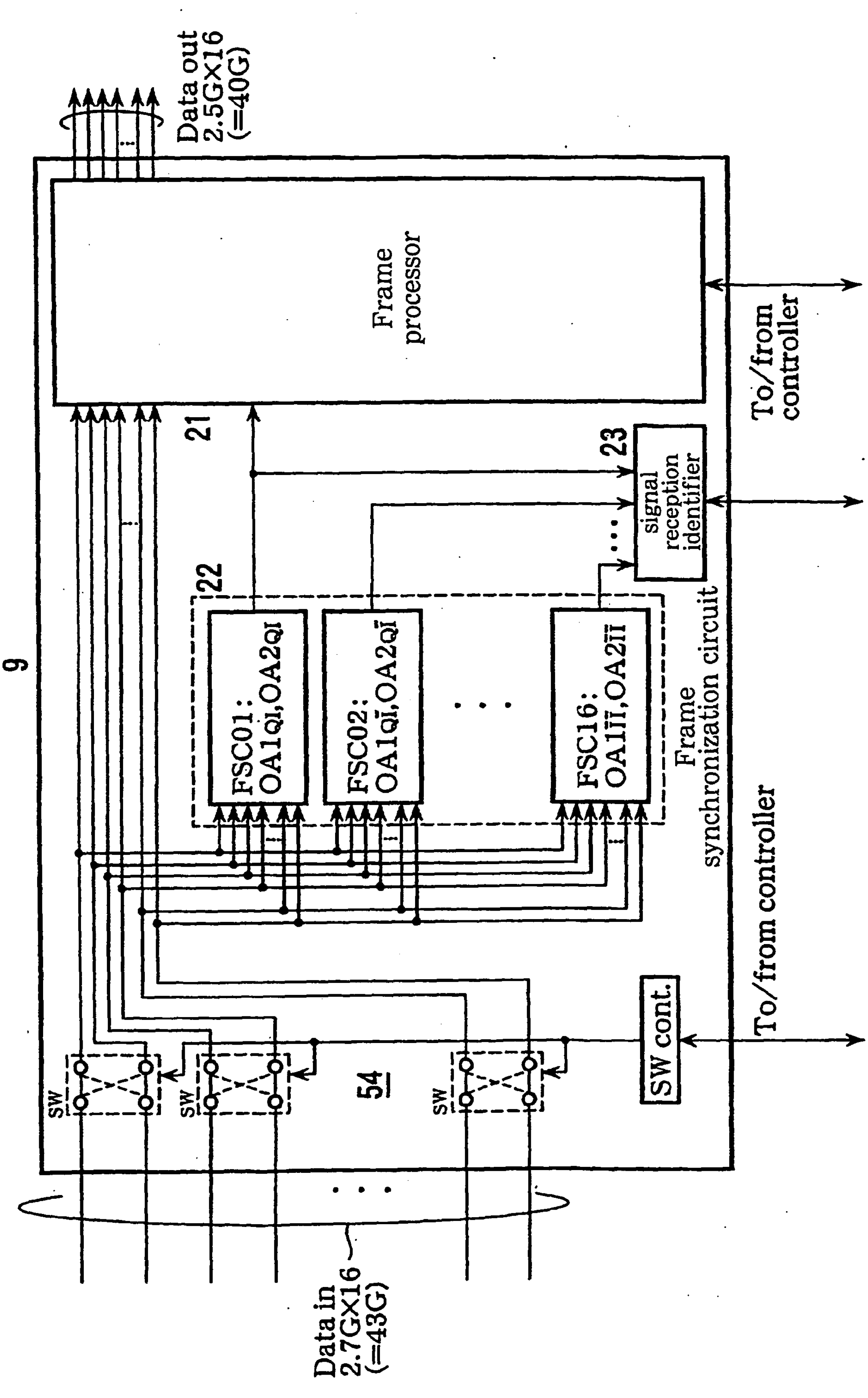
9
Data out
2.5G×16
(=40G)
Frame
processor
To/from
controller
21
23
signal
reception
identifier
22
FSC01:
OA1QI,OA2QI
FSC02:
OA1QI,OA2QI
FSC16:
OA1II,OA2II
Frame
synchronization circuit
To/from controller
SW cont.
SW
SW
SW
54
Data in
2.7G×16
(=43G)

FIG.19

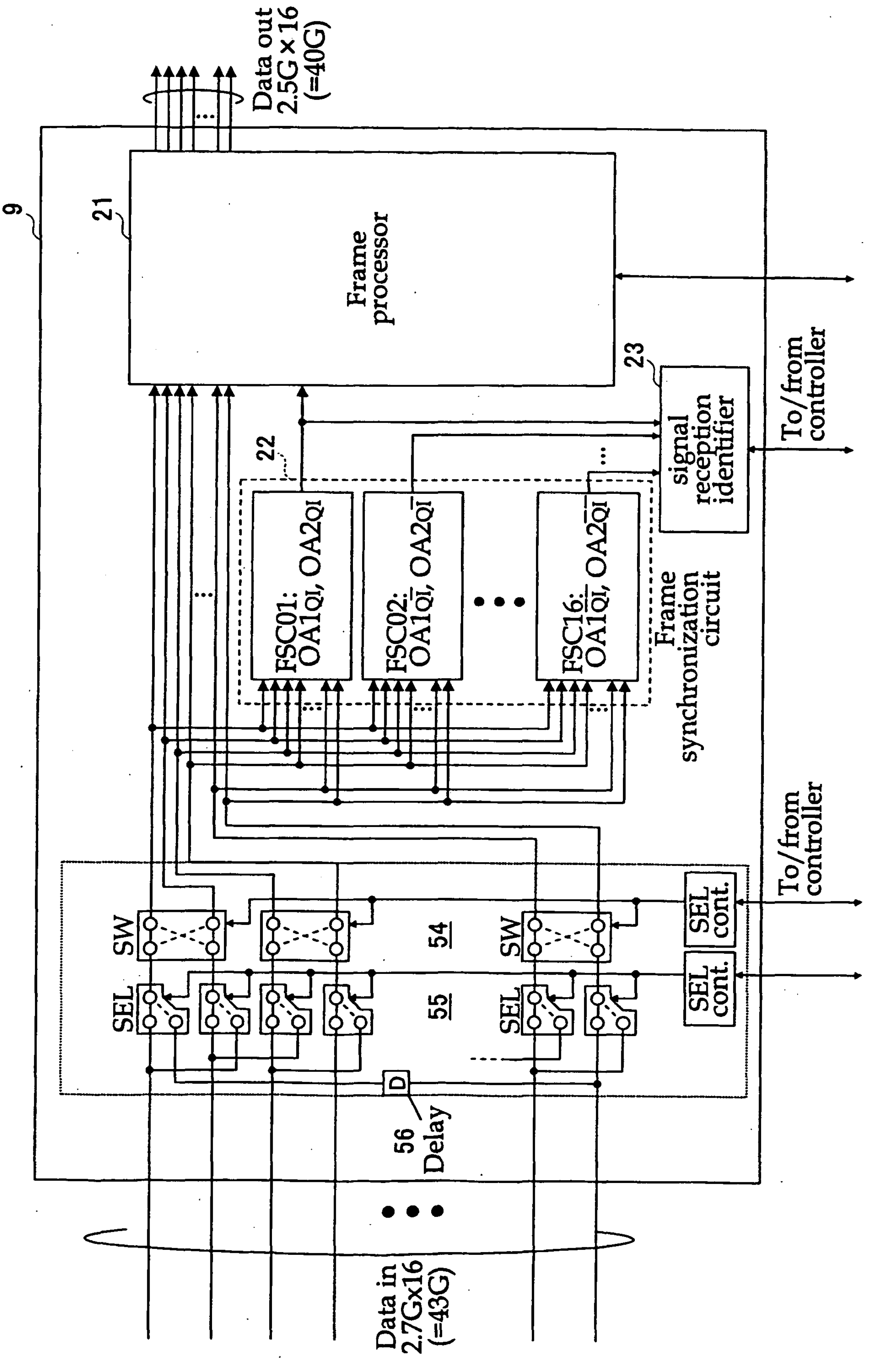
9
21
Frame processor
Data out 2.5G×16 (=40G)
22
FSC01: OA1QI, OA2QI
FSC02: OA1QI, OA2QI
FSC16: OA1QI, OA2QI
Frame synchronization circuit
23
signal reception identifier
To/from controller
To/from controller
SW
SW
54
SEL
SEL
55
SEL cont.
SEL cont.
D
56 Delay
Data in 2.7Gx16 (=43G)

FIG.20

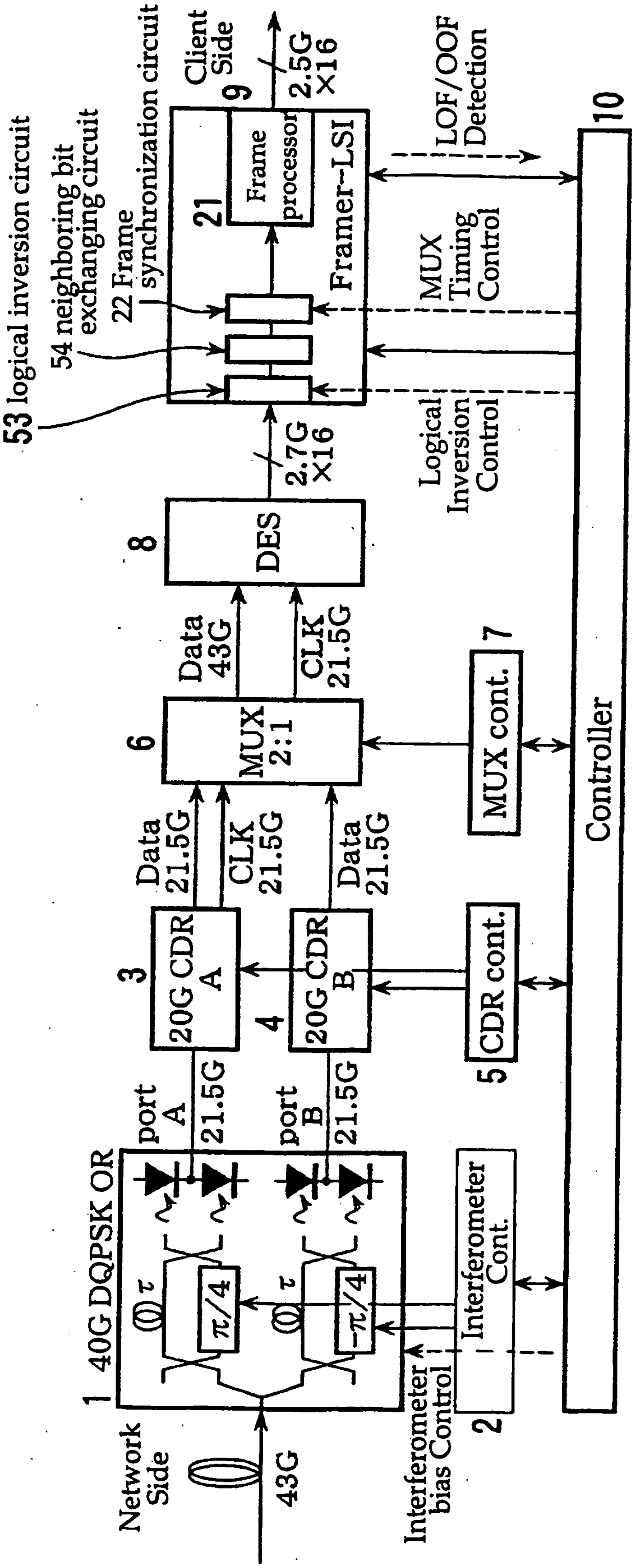
Network Side
43G
1 40G DQPSK OR
τ
π/4
-π/4
port A
21.5G
port B
21.5G
Interferometer bias Control
2 Interferometer Cont.
3 20G CDR A
4 20G CDR B
5 CDR cont.
Data 21.5G
CLK 21.5G
Data 21.5G
6 MUX 2:1
7 MUX cont.
Data 43G
CLK 21.5G
8 DES
2.7G ×16
53 logical inversion circuit
54 neighboring bit exchanging circuit
22 Frame synchronization circuit
21 Frame processor
Framer-LSI
9
2.5G ×16
Client Side
Logical Inversion Control
MUX Timing Control
LOF/OOF Detection
Controller
10

FIG.21

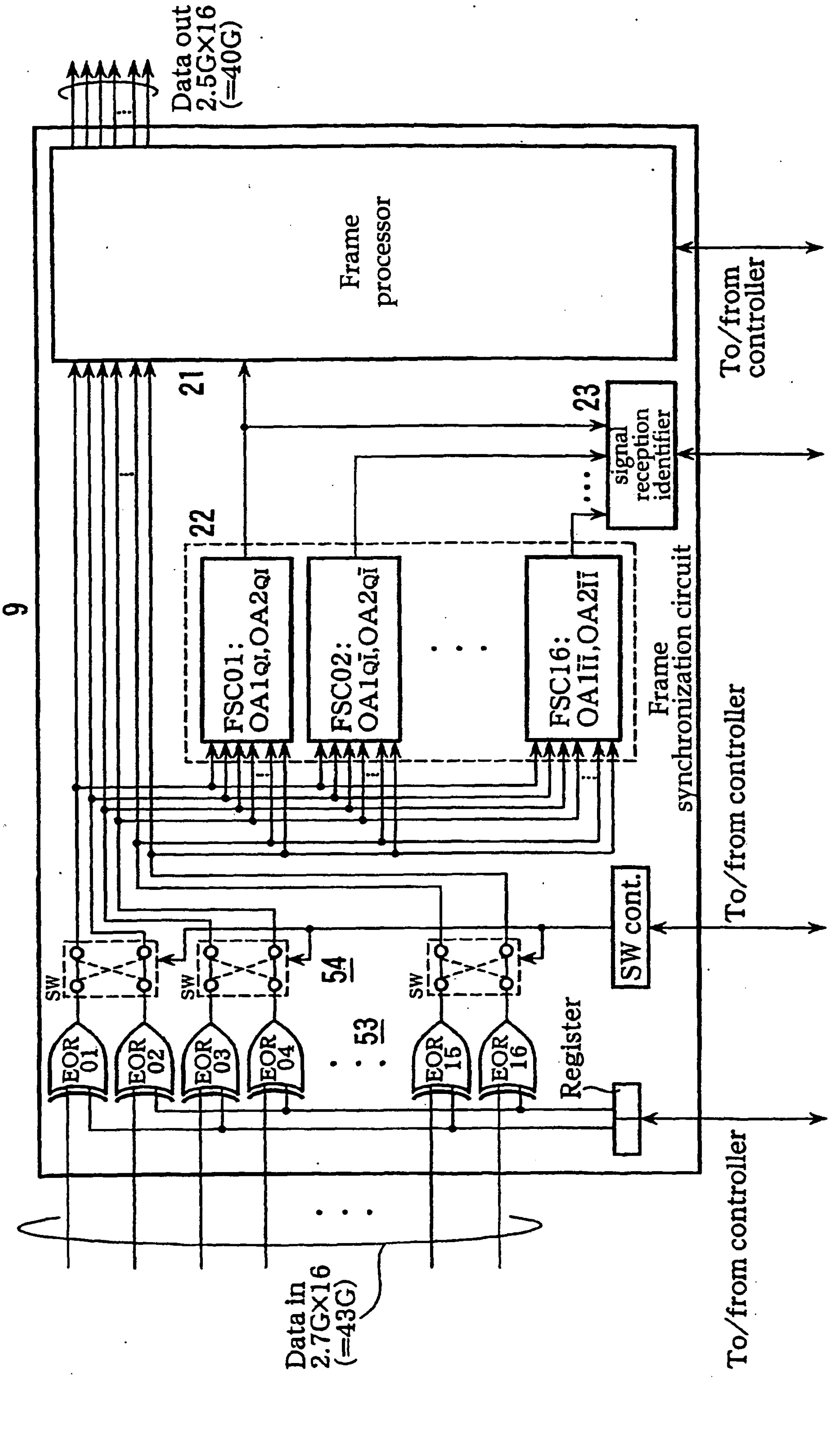
9
Data out
2.5G×16
(=40G)
Frame
processor
To/from
controller
21
23
signal
reception
identifier
22
FSC01:
OA1QI,OA2QI
FSC02:
OA1QĪ,OA2QĪ
FSC16:
OA1ĪĪ,OA2ĪĪ
Frame
synchronization circuit
To/from controller
SW cont.
To/from controller
SW
54
EOR 01
EOR 02
EOR 03
EOR 04
53
EOR 15
EOR 16
Register
To/from controller
Data in
2.7G×16
(=43G)

FIG.22

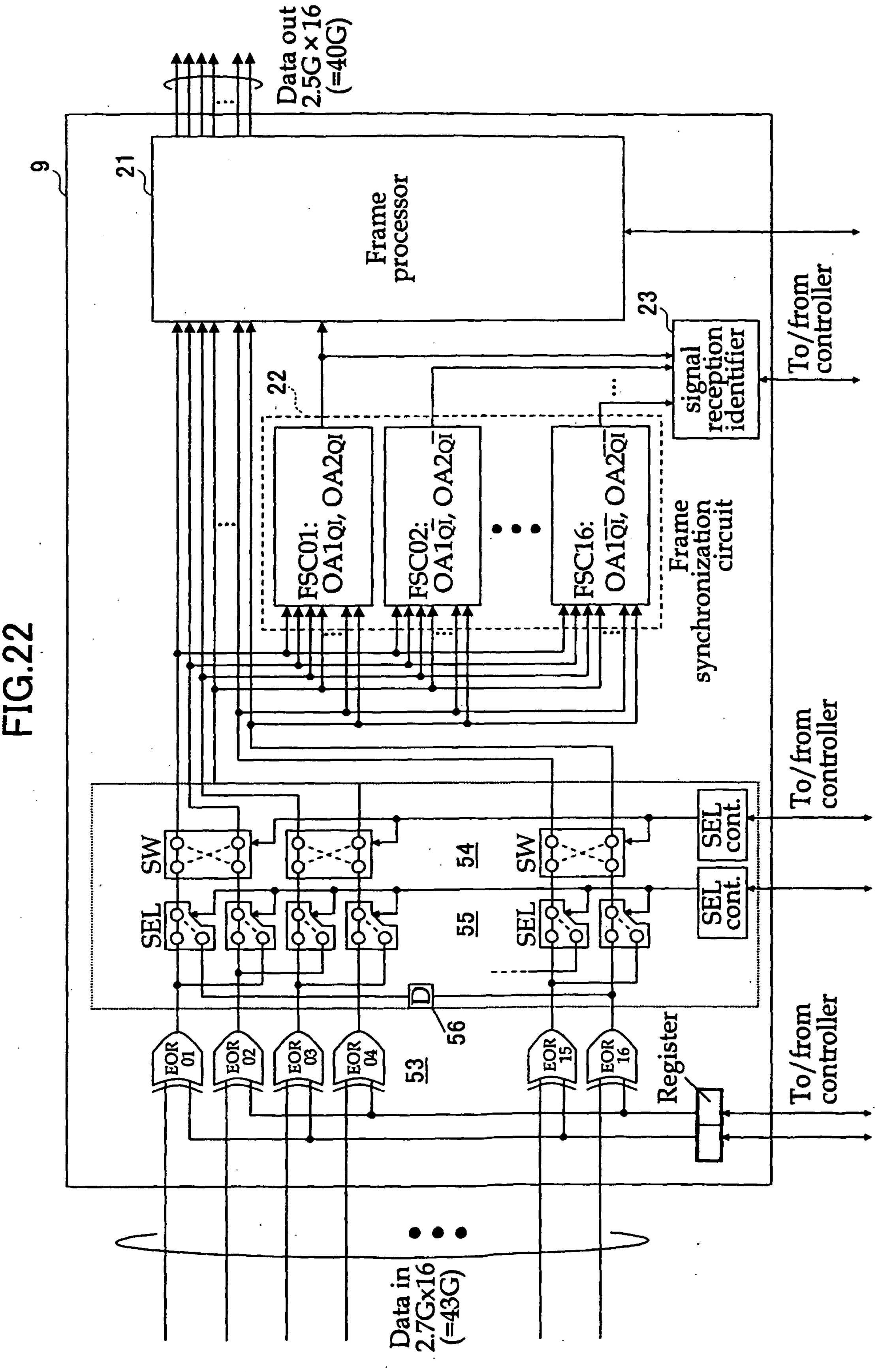

9
21
Frame processor
Data out 2.5G×16 (=40G)
23
signal reception identifier
To/from controller
22
FSC01: OA1QI, OA2QI
FSC02: OA1Q̄I, OA2Q̄I
FSC16: OA1Q̄I, OA2Q̄I
Frame synchronization circuit
To/from controller
SW
SW
54
SEL
SEL
55
SEL cont.
SEL cont.
D
56
EOR 01
EOR 02
EOR 03
EOR 04
EOR 15
EOR 16
53
Register
To/from controller
Data in 2.7Gx16 (=43G)

FIG.23A

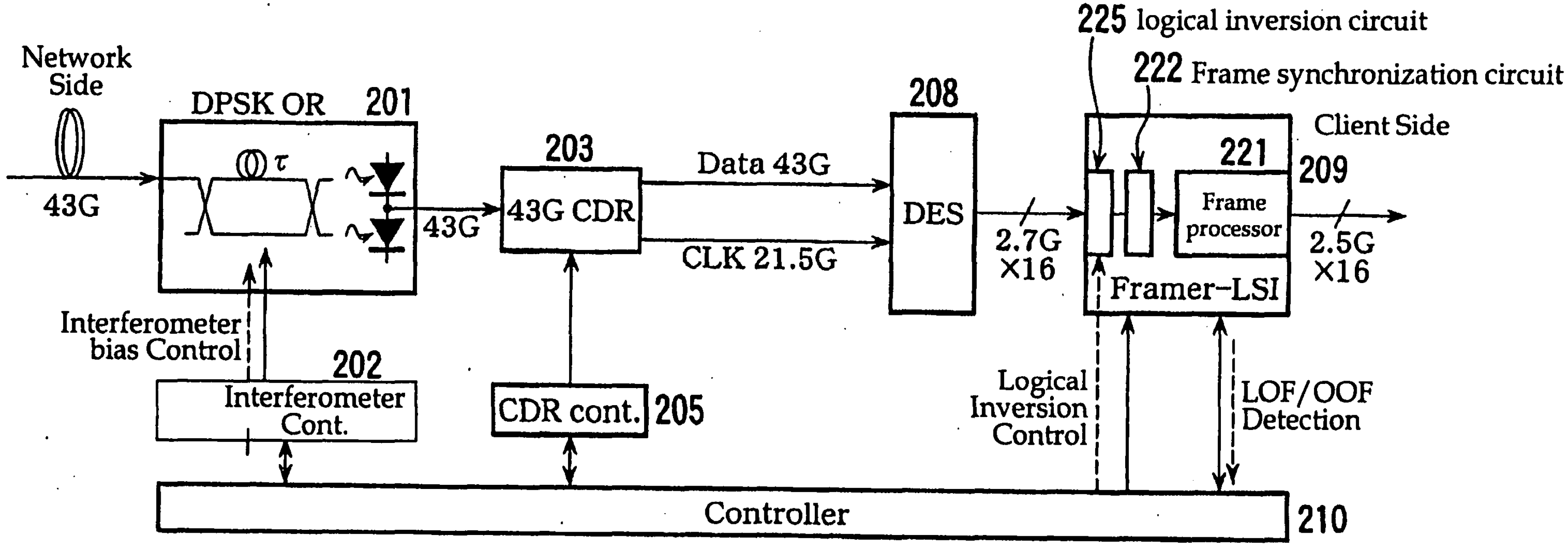


FIG.23B

Correspondence between DPSK signal reception state and FAS byte

| | Port output | |
|---|---|---|
| | data | $\overline{data}$ |
| signal reception state | ◎<br>OA1=("1111 0110")<br>OA2=("0010 1000") | ○<br>$\overline{OA1}$=("0000 1001")<br>$\overline{OA2}$=("1101 0111") |

FIG.24A

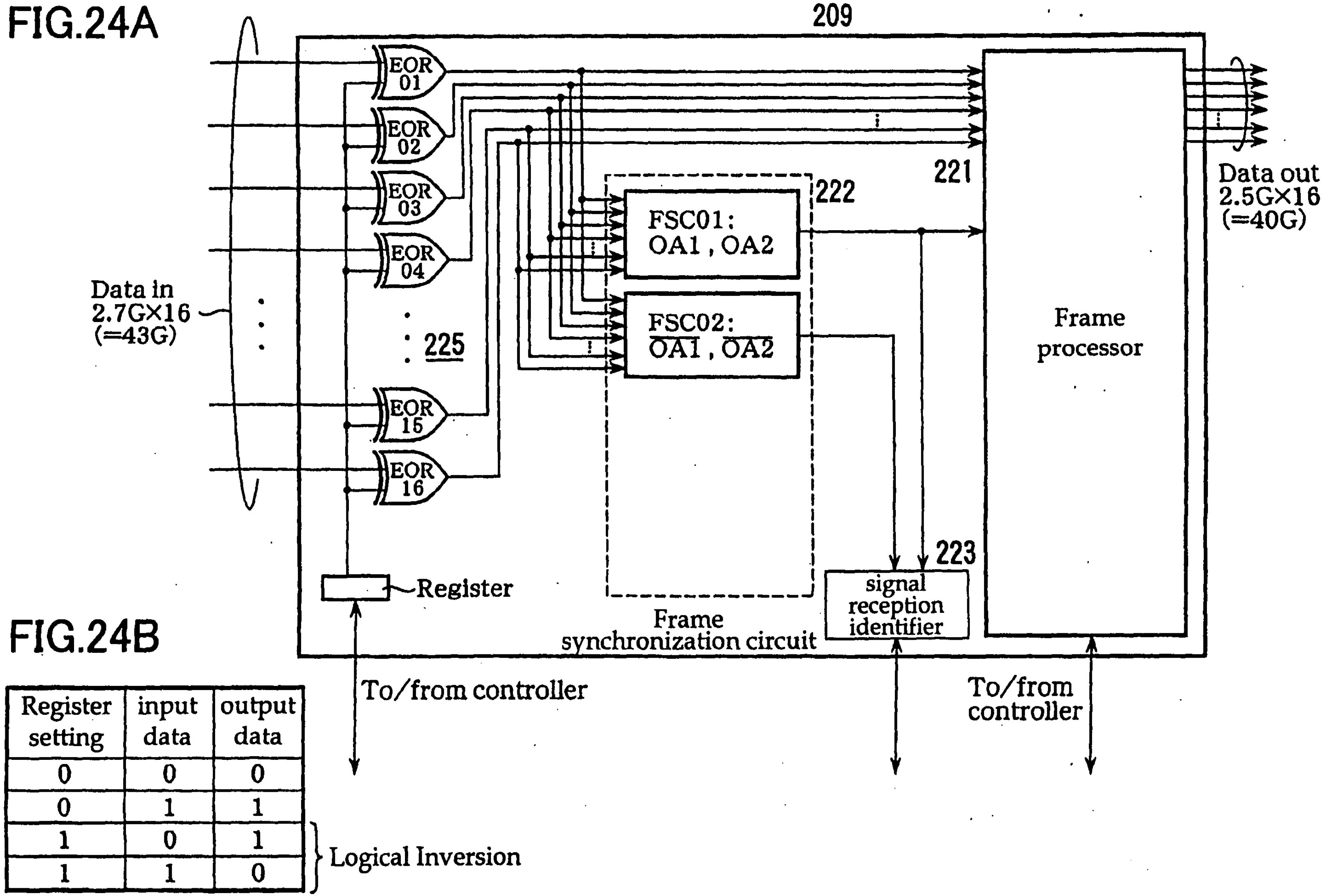


FIG.24B

| Register setting | input data | output data |
|---|---|---|
| 0 | 0 | 0 |
| 0 | 1 | 1 |
| 1 | 0 | 1 |
| 1 | 1 | 0 |

} Logical Inversion (rows 3–4)

FIG.25

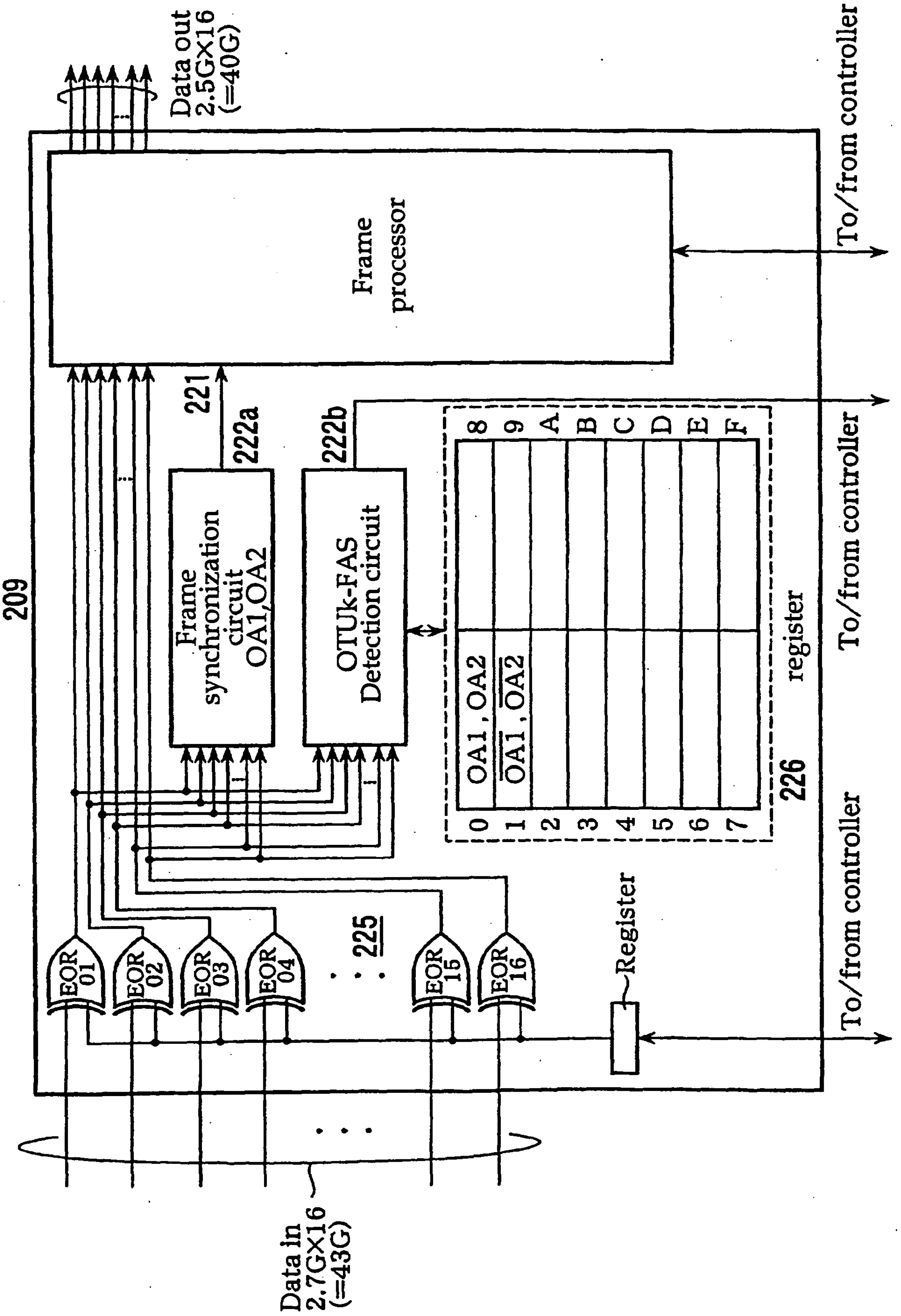
209
Data out
2.5G×16
(=40G)
Frame
processor
221
222a
222b
Frame
synchronization
circuit
OA1,OA2
OTUk-FAS
Detection circuit
OA1, OA2
$\overline{OA1}$, $\overline{OA2}$
0
1
2
3
4
5
6
7
8
9
A
B
C
D
E
F
226
register
EOR 01
EOR 02
EOR 03
EOR 04
225
EOR 15
EOR 16
Register
To/from controller
To/from controller
To/from controller
To/from controller
Data In
2.7G×16
(=43G)

FIG.26

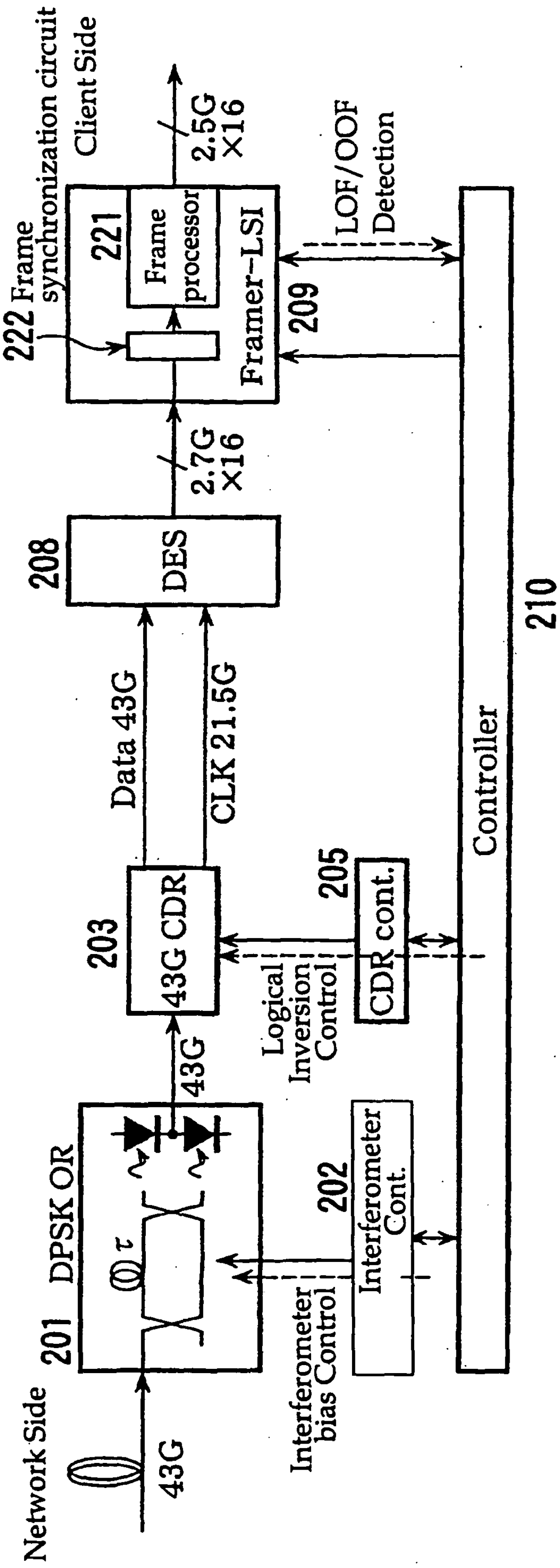

Network Side
43G
201
DPSK OR
τ
Interferometer bias Control
202
Interferometer Cont.
43G
203
43G CDR
Logical Inversion Control
205
CDR cont.
Data 43G
CLK 21.5G
208
DES
2.7G ×16
222 Frame synchronization circuit
221
Frame processor
Framer-LSI
209
2.5G ×16
Client Side
LOF/OOF Detection
Controller
210

FIG.27

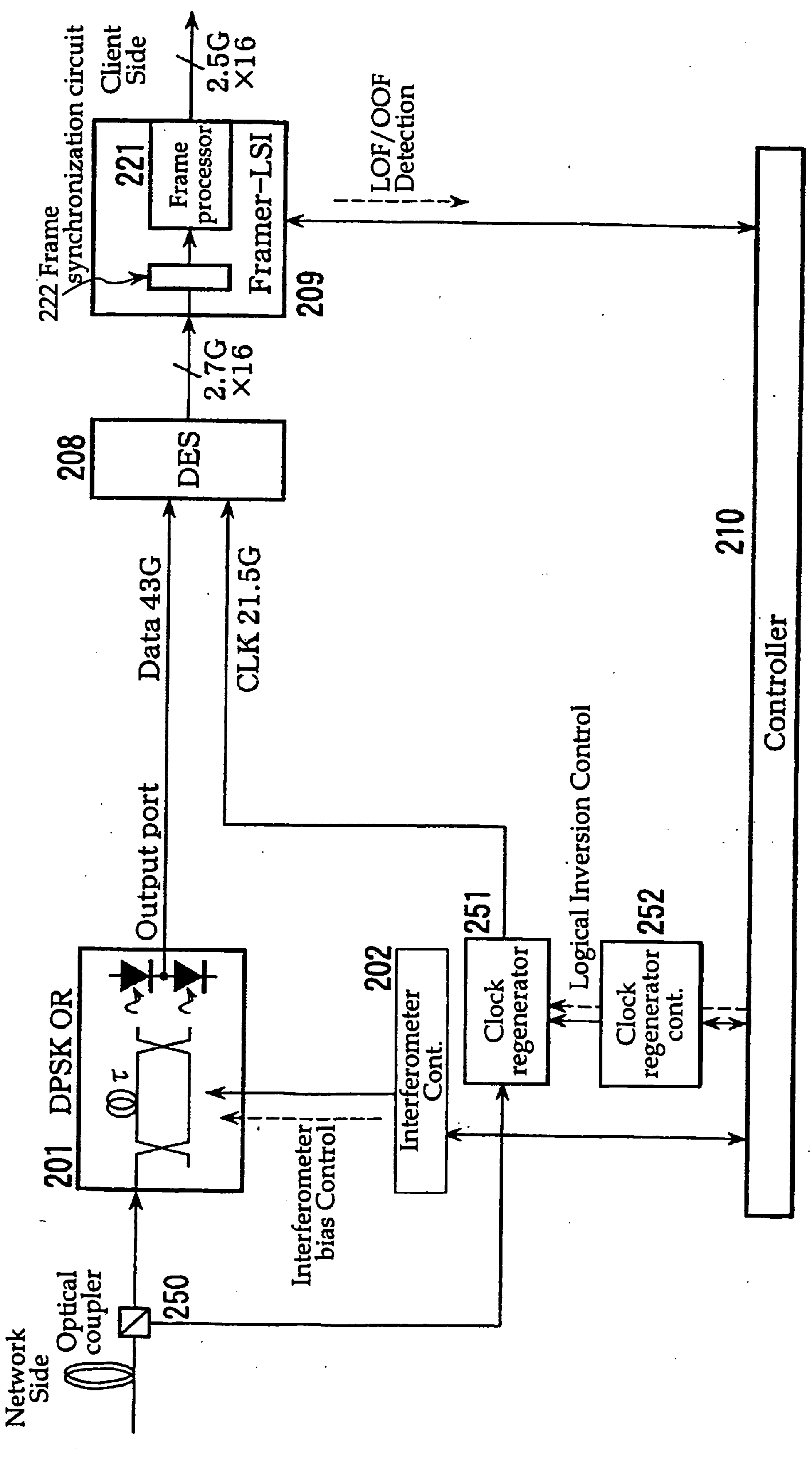
Network Side
Optical coupler
250
201
DPSK OR
τ
Output port
Interferometer bias Control
202
Interferometer Cont.
251
Clock regenerator
Logical Inversion Control
252
Clock regenerator cont.
Data 43G
CLK 21.5G
208
DES
2.7G ×16
209
Framer-LSI
222 Frame synchronization circuit
221
Frame processor
2.5G ×16
Client Side
LOF/OOF Detection
210
Controller

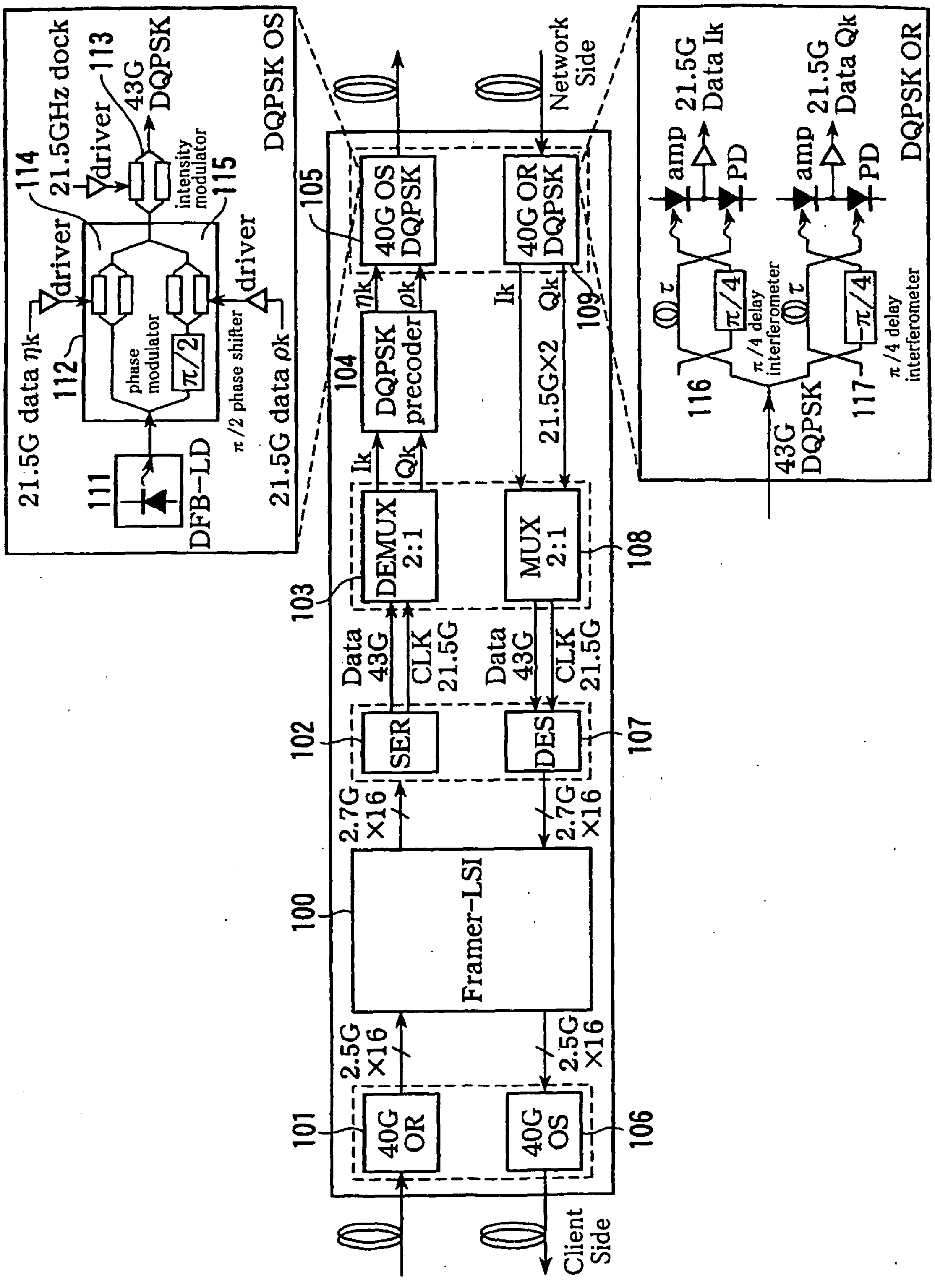

DQPSK OS
111
DFB−LD
21.5G data ηk
21.5G data ρk
112
phase modulator
π/2
π/2 phase shifter
driver
driver
114
115
21.5GHz dock
driver
intensity modulator
113
43G DQPSK
105
40G OS DQPSK
104
DQPSK precoder
ηk
ρk
Ik
Qk
103
DEMUX 2:1
Data 43G
CLK 21.5G
102
SER
2.7G ×16
100
Framer−LSI
2.5G ×16
101
40G OR
Network Side
40G OR DQPSK
109
Ik
Qk
21.5G×2
MUX 2:1
108
Data 43G
CLK 21.5G
DES
107
2.7G ×16
2.5G ×16
40G OS
106
Client Side
DQPSK OR
43G DQPSK
116
117
τ
π/4
π/4 delay interferometer
τ
π/4
π/4 delay interferometer
amp
PD
21.5G Data Ik
amp
PD
21.5G Data Qk


FIG.28

FIG.29

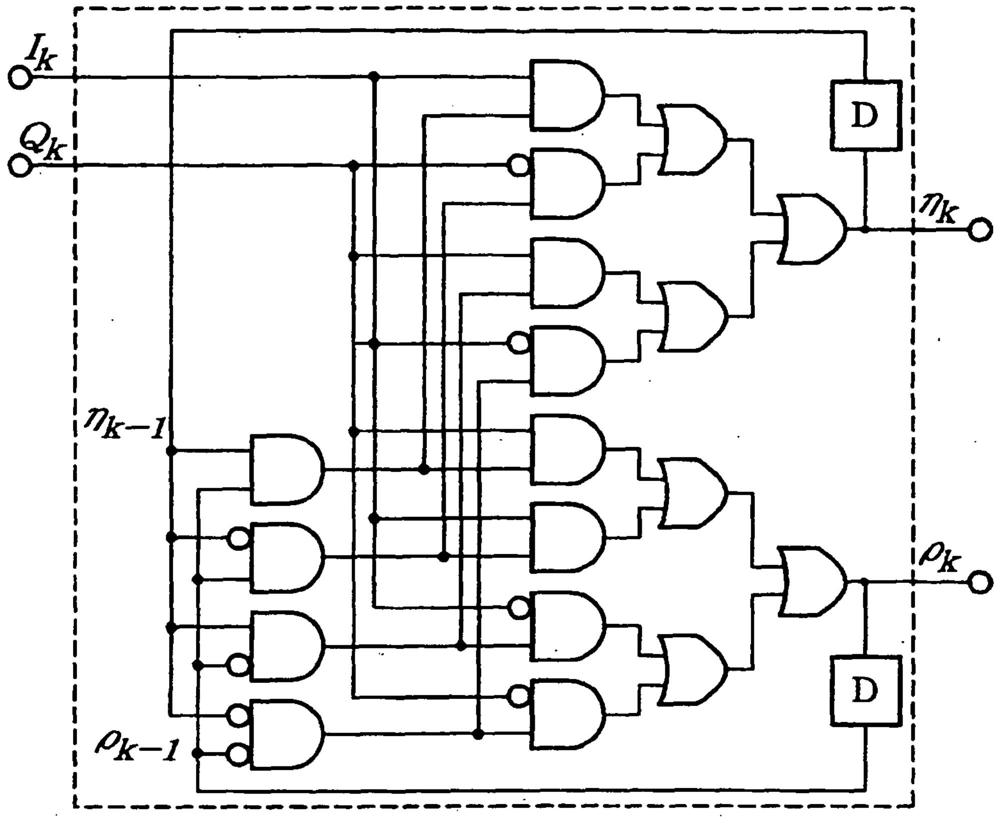

FIG.30

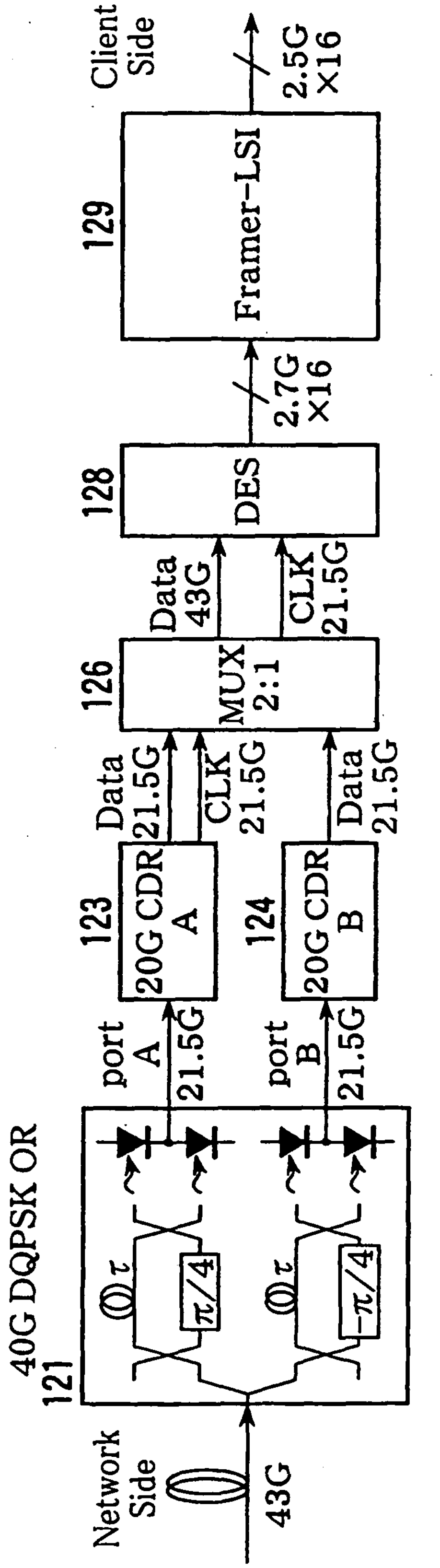
Network Side
43G
121
40G DQPSK OR
τ
π/4
τ
-π/4
port A
21.5G
port B
21.5G
123
20G CDR A
124
20G CDR B
Data 21.5G
CLK 21.5G
Data 21.5G
126
MUX 2:1
Data 43G
CLK 21.5G
128
DES
2.7G ×16
129
Framer-LSI
2.5G ×16
Client Side

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004516743 A
- JP 2004533163 A
- JP 2005054371 A


### Non-patent literature cited in the description


- **P. S. Cho ; V. S. Grigoryan ; Y. A. Godin ; A. Salamon ; Y. Achiam.** Transmission of 25 Gbps RZ-DQPSK signals with 25-GHz channel spacing over 1000 km of SMF-28 fiber. *IEEE Photonic Technical Letter,* March 2003, vol. 15, 473-475
- **H. Kim ; R-J. Essiambre.** Transmission of 8 x 20 Gbps DQPSK signals with 25-GHz channel spacing over a 310-km SMF with 0.8-b/s/Hz spectral efficiency. *IEEE Photonic Technical Letter,* May 2003, vol. 15, 769-771